# EUROPÄISCHE PATENTSCHRIFT

(11) **EP 1 971 667 B1**
(45) Veröffentlichungstag und Bekanntmachung des Hinweises auf die Patenterteilung: **20.04.2011**
(21) Anmeldenummer: 06829815.7
(22) Anmeldetag: 21.12.2006
(51) Int. Cl.: C09K 19/42

(54) **FLÜSSIGKRISTALLINES MEDIUM**
LIQUID CRYSTAL MEDIUM
MILIEU A CRISTAUX LIQUIDES

(30) Priorität: 10.01.2006 DE 102006001448
(43) Veröffentlichungstag der Anmeldung: 24.09.2008
(73) Patentinhaber: Merck Patent GmbH, 64293 Darmstadt (DE)
(72) Erfinder: LUESSEM, Georg, 85238 Petershausen (DE); KIRSCH, Peer, Kanagawa 224-0033 (JP)
(86) Internationale Anmeldenummer: PCT/EP2006/012382
(87) Internationale Veröffentlichungsnummer: WO 2007/079949

(56) Entgegenhaltungen:
- EP-B1- 0 418 362
- WO-A-02/48081
- WO-A-03/033619
- WO-A-2004/048501
- DE-A1- 4 006 921
- DE-A1- 10 243 776
- DE-A1-102005 027 762
- US-A1- 2004 108 490
- US-A1- 2004 135 120

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relative niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)

Mit den aus dem Stand der Technik zur Verfügung stehenden Medien, wie z.B. beschrieben in WO 2004/048501 A1, WO 03/033619 A1, DE 10 2005 027 762 A1, WO 2005/123879 A1, DE 102 43 776 A1, US 2004/0108490 A1 und US 2004/0135120 A1, ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde Medien, insbesondere für derartige MFK-, TN- oder STN-Anzeigen, bereitzustellen, die die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, dass diese Aufgabe gelöst werden kann, wenn man in Anzeigen erfindungsgemäße Medien verwendet,

Gegenstand der Erfindung ist somit ein flüssigkristallines Medium auf der Basis eines Gemisches von polaren Verbindungen, dadurch gekennzeichnet, dass es mindestens eine Verbindung der Formel I, 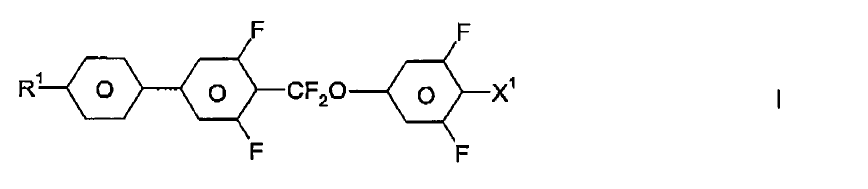 und mindestens eine Verbindung der Formel IA und/oder IB 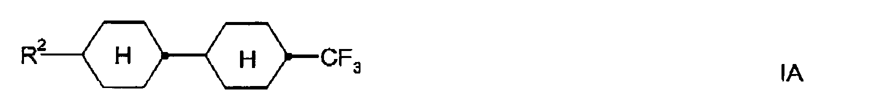 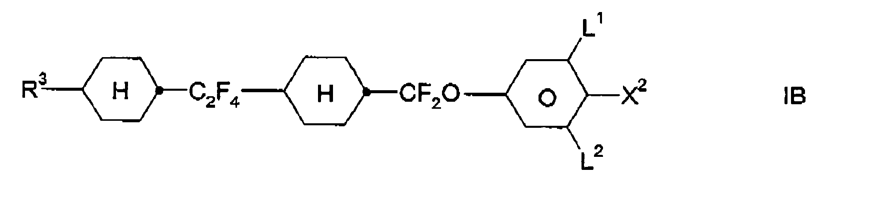 enthält,
worin
- R¹, R² und R³: jeweils unabhängig voneinander einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CH=CH-, -O-, -CO-O- oder -O-CO- so ersetzt sein können, dass O-Atome nicht direkt miteinander verknüpft sind,
- X¹ und X²: jeweils unabhängig voneinander F, Cl, CN, SF₅, halogenierter Alkylrest, halogenierter Alkenylrest, halogenierter Alkoxyrest oder halogenierter Alkenyloxyrest mit bis zu 6 C-Atomen, und
- L¹ und L²: jeweils unabhängig voneinander H oder F
bedeuten.

Die erfindungsgemäßen Mischungen auf der Basis eines Gemisches von polaren Verbindungen mit positiver dielektrischer Anisotropie sind vorzugsweise für Monitor- und TV-Anwendungen geeignet, da sie sich durch niedrige Rotationsviskositäten (γ₁) und hohe Δn-Werte auszeichnen. Insbesondere geeignet sind die erfindungsgemäßen Mischungen für TN-TFT-Monitoranwendungen und in Anwendungen mit 5V-Treibern oder mit Treibern mit höheren Spannungen. Durch die breite nematische Phase der Verbindungen der Formel I und das sehr gute γ_{1/}T_{NI}-Verhältnis sind die erfindungsgemäßen Mischungen insbesondere für TN-TFT- und IPS-Anwendungen geeignet.

Die Verbindungen der Formeln I, IA und IB besitzen einen breiten Anwendungsbereich und sind zum Teil bekannt aus den Offenlegungsschriften DE 40 06 921, EP 0 418 362 und WO 02/48081. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formeln I, IA und IB flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formeln I, IA und IB sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

X¹ und X² bedeuten in den Verbindungen der Formeln I und IB vorzugsweise F, CI, CN, NCS, CF₃, SF₅, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCFHCFHCF₃, OCH₂CF₂CF₃, OCF₂CF₂CF₃, OCF₂CFHCFH₂, OCF₂CH₂CF₂H, OCFHCF₂CFH₂, OCFHCFHCF₂H, OCFHCH₂CF₃, OCH₂CFHCF₃, OCH₂CF₂CF₂H, OCF₂CFHCH₃, OCF₂CH₂CFH₂, OCFHCF₂CH₃, OCFHCFHCFH₂, OCFHCN₂CF₃, OCH₂CF₂CFH₂, OCH₂CFHCF₂H, OCF₂CH₂CH₃, OCFHCFHCH₃, OCFHCH₂CFH₂, OCH₂CF₂CH₃, OCH₂CFHCFH₂, OCH₂CH₂CF₂H, OCHCH₂CH₃, OCH₂CFHCH₃, OCH₂CH₂CF₂H, OCClFCF₃, OCClFCClF₂, OCClFCFH₂, OCFHCCl₂F, OCClFCF₂H, OCClFCClF₂, OCF₂CClH₂, OCF₂CCl₂H, OCF₂CCl₂F, OCF₂CClFH, OCF₂CClF₂, OCF₂CF₂CCClF₂, OCF₂CF₂CCl₂F, OCClFCF₂CF₃, OCClFCF₂CF₂H, OCClFCF₂CClF₂, OCClFCFHCF₃, OCClFCClFCF₃, OCCl₂CF₂CF₃, OCClHCF₂CF₃, OCClFCF₂CF₃, OCClFCClFCF₃, OCF₂CClFCFH₂, OCF₂CF₂CCl₂F, OCF₂CCl₂CF₂H, OCF₂CH₂CClF₂, OCClFCF₂CFH₂, OCFHCF₂CCl₂F, OCClFCFHCF₂H, OCClFCClFCF₂H, OCFHCFHCClF₂, OCClFCH₂CF₃, OCFHCCl₂CF₃, OCCl₂CFHCF₃, OCH₂CClFCF₃, OCCl₂CF₂CF₂H, OCH₂CF₂CClF₂, OCF₂CClFCH₃, OCF₂CFHCCl₂H, OCF₂CCl₂CFH₂, OCF₂CH₂CCl₂F, OCClFCF₂CH₃, OCFHCF₂CCl₂H, OCClFCClFCF₂, OCFHCFHCCl₂F, OCClFCH₂CF₃, OCFHCCl₂CF₃, OCCl₂CF₂CFH₂, OCH₂CF₂CCl₂F, OCCl₂CFHCF₂H, OCClHCClFCF₂H, OCF₂CClHCClH₂, OCF₂CH₂CCl₂H, OCClFCFHCH₃, OCF₂CClFCCl₂H, OCClFCH₂CFH₂, OCFHCCl₂CFH₂, OCCl₂CF₂CH₃, OCH₂CF₂CClH₂, OCCl₂CFHCFH₂, OCH₂CClFCFCl₂, OCH₂CH₂CF₂H, OCClHCClHCF₂H, OCH₂CCl₂CF₂H, OCClFCH₂CH₃, OCFHCH₂CCl₂H, OCClHCFHCClH₂, OCH₂CFHCCl₂H, OCCl₂CH₂CF₂H, OCH₂CCl₂CF₂H, CH=CF₂, CF=CF₂, OCH=CF₂, OCF=CF₂, CH=CHF, OCH=CHF, CF=CHF, OCF=CHF, insbesondere F, Cl, CN, NCS, CF₃, SF₅. CF₂H, OCF₃, OCF₂H, OCFHCF₃, C₂F₅, C₃F₇, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCF₂CF₂CF₃ oder OCF₂CHFCF₃.

In den Verbindungen der Formeln I und IB bedeuten X¹ und X² unabhängig voneinander vorzugsweise F oder OCF₃. L¹ und L² bedeuten vorzugsweise F. R¹, R² und R³ bedeuten jeweils unabhängig voneinander vorzugsweise Alkyl, insbesondere geradkettiges Alkyl mit 1-6 C-Atomen.

Falls R¹, R² und/oder R³ in Formeln IA und IB und I einen Alkylrest und/oder einen Alkoxyrest bedeuten, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R¹, R² und/oder R³ einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl. Vorzugsweise bedeutet R¹ CH₂=CH, CH₃CH=CH, CH₂=CHCH₂CH₂ oder CH₃CH=CHCH₂CH₂.

Falls R¹, R² und/oder R³ einen Alkylrest bedeuten, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxy-butyl, Methoxycarbonyl, Ethoxycarbonyl, Propoxycarbonyl, Butoxycarbonyl, Pentoxycarbonyl, Methoxycarbonylmethyl, Ethoxycarbonylmethly, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxycarbonyl)-propyl oder 4-(Methoxycarbonyl)-butyl.

Falls R¹, R² und/oder R³ einen Alkylrest bedeuten, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R¹, R² und/oder R³ einen einfach durch CN oder CF₃ substituerten Alkyl- oder Alkenylrest bedeuten, so ist dieser Rest vorzugsweise geradkettig. Die Substitution durch CN oder CF₃ ist in beliebiger Position.

Falls R¹, R² und/oder R³ einen mindestens einfach durch Halogen substituierten Alkyl- oder Alkenylrest bedeuten, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R¹, R² und/oder R³ können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R¹, R² und/oder R³ sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propyl-pentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R¹, R² und/oder R³ einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy-carbonyl)-pentyl, 6,6-Bis-(methoxycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl,

Die Verbindungen der Formeln I, IA und IB werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen,

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Systeme wie z.B. ZLI-3119, weisen zwar einen vergleichbaren Klärpunkt und vergleichbar günstige Viskositäten auf, besitzen jedoch ein Δε von nur +3. Andere Mischungssysteme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20 °C und bevorzugt bis -30 °C, besonders bevorzugt bis -40 °C, Klärpunkte oberhalb 70 °C, vorzugsweise oberhalb 75 °C, besonders bevorzugt oberhalb 80 °C, gleichzeitig dielektrische Anisotropiewerte Δε ≥ 8, vorzugsweise ≥ 10 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen in der Regel unterhalb 2,0 V, vorzugsweise unterhalb 1,9 V, besonders bevorzugt ≤ 1,8 V.

Es versteht sich, dass durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität V₂₀ bei 20 °C ist vorzugsweise < 60 mm² · s⁻¹, besonders bevorzugt < 50 mm² · s⁻¹. Die Rotationsviskosität γ₁ der erfindungsgemäßen Mischungen bei 20 °C ist vorzugsweise < 200 mPa·s, besonders bevorzugt < 180 mPa·s, ganz besonders bevorzugt≤175 mPa·s. Der nematische Phasenbereich ist vorzugsweise mindestens 90°, insbesondere mindestens 100°. Vorzugsweise erstreckt sich dieser Bereich mindestens von -20° bis +80°.

Bei Flüssigkristallanzeigen ist eine kleine Schaltzeit erwünscht. Dies gilt besonders für Anzeigen die Videowiedergabe-fähig sind. Für derartige Anzeigen werden Schaltzeiten (Summe: tₒₙ + t_{off}) von maximal 25 ms benötigt. Die Obergrenze der Schaltzeit wird durch die Bildwiederholfrequenz bestimmt.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel 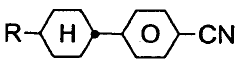 oder Ester der Formel

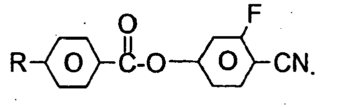

Auch die UV-Stabilität der erfindungsgemäßen Mischungen ist erheblich besser, d.h. sie zeigen eine deutlich kleinere Abnahme des HR unter UV-Belastung.

Die erfindungsgemäßen Mischungen enthalten vorzugsweise wenig (≤ 10 Gew.%) oder keine Nitrile. Die Werte für die Holding Ratio der erfindungsgemäßen Mischungen sind vorzugsweise > 98 %, insbesondere > 99 % bei 20 °C.

Besonders bevorzugte Verbindungen der Formel I sind Verbindungen der Formeln I-1 bis I-12: 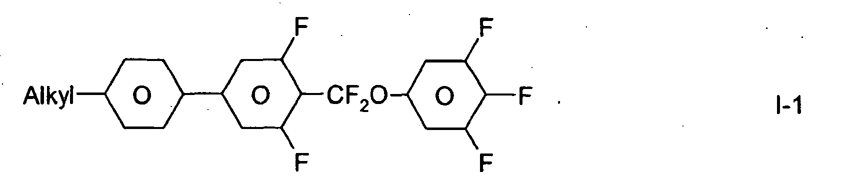 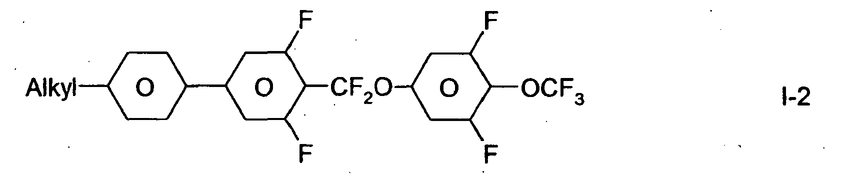 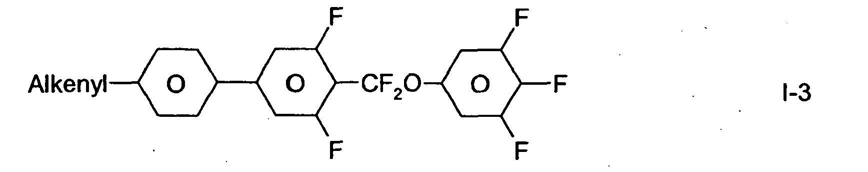 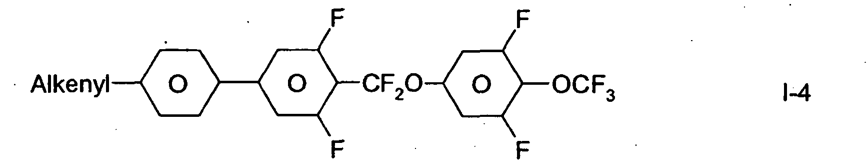 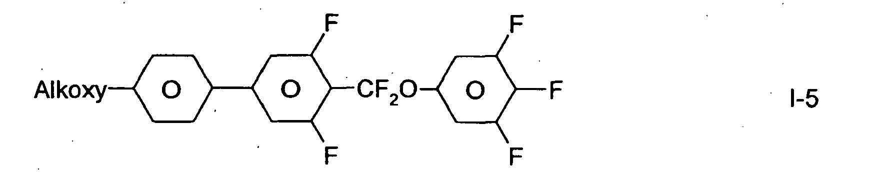 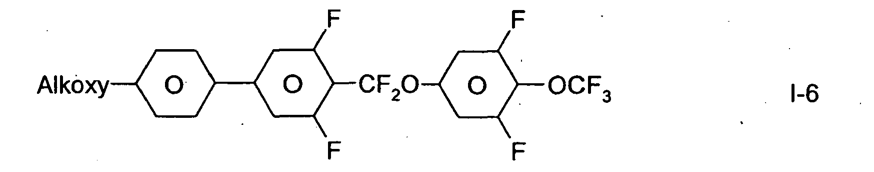 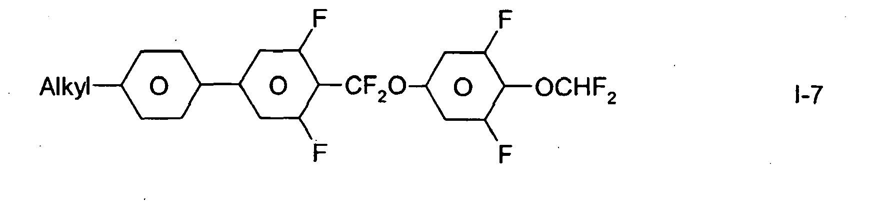 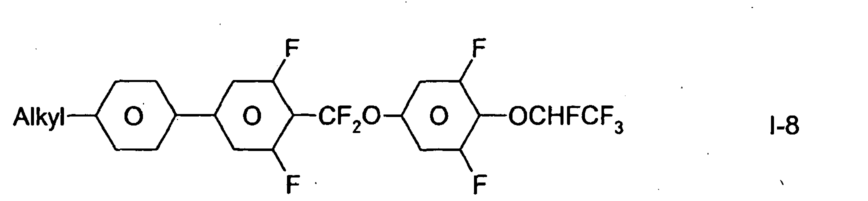 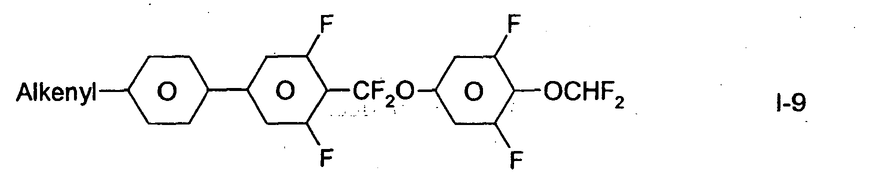 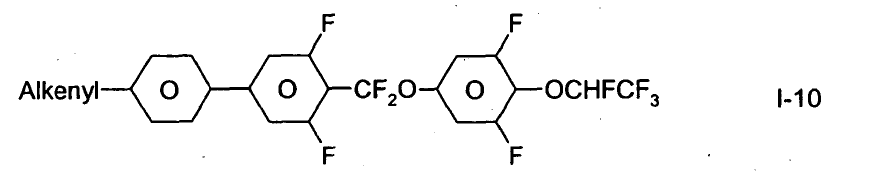 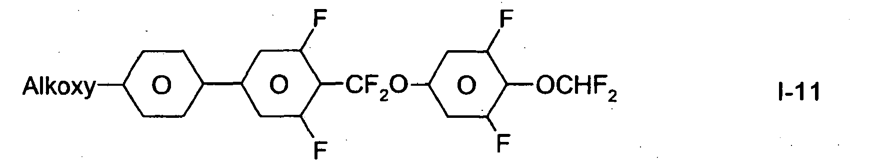 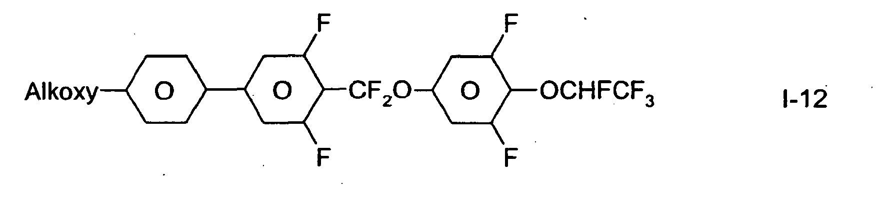 worin
- Alkyl: ein geradkettiger Alkylrest mit 1-7 C-Atomen,
- Alkoxy: ein geradkettiger Alkoxyrest mit 1-7 C-Atomen,
- Alkenyl: ein geradkettiger Alkenylrest mit 2-7 C-Atomen
ist.

Von diesen bevorzugten Verbindungen sind besonders bevorzugt solche der Formeln I-2 und insbesondere die der Formel I-1.

Bevorzugte Ausführungsformen sind im folgenden angegeben:
- Das Medium enthält ein, zwei oder mehr Verbindungen der Formeln I-1 bis 1-12;
- Das Medium enthält vorzugsweise die Verbindungen der Formeln 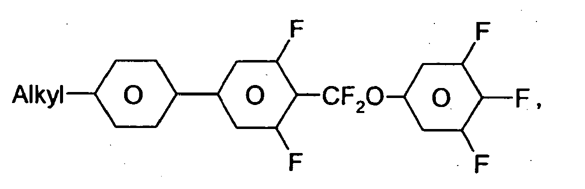 wobei Alkyl ein geradkettiger Alkylrest mit 1-6 C-Atomen ist.
- Das Medium enthält vorzugsweise eine oder mehrere Zweikern-Verbindungen der Formel K 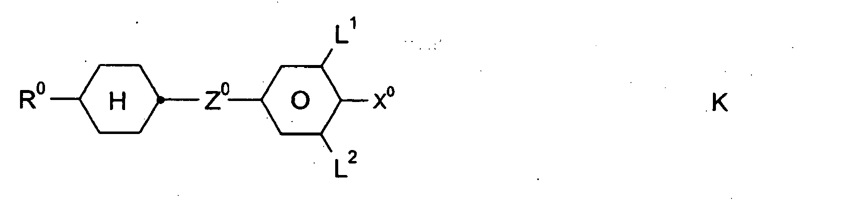
worin R⁰, X⁰, L¹, L² die oben angegebenen Bedeutungen haben und Z⁰ Einfachbindung, -COO-, -OOC-, -OCF₂-, C₂F₄-, -CF₂O-, -CF=CF-, -C₂H₄-, -(CH₂)₄-, -OCH₂- oder -CH₂- bedeutet.

Der Anteil an Verbindungen der Formel K in der Mischung beträgt 5-40 %, vorzugsweise 5-30 %, insbesondere 5-20 %.

Besonders bevorzugte Zweikern-Verbindungen sind die Verbindungen der Formeln K-1 bis K-27 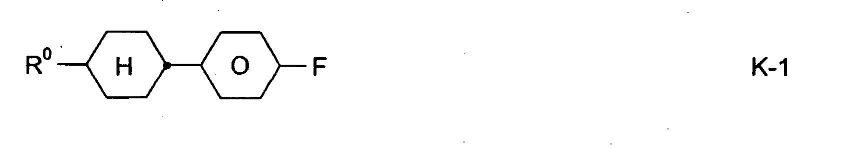 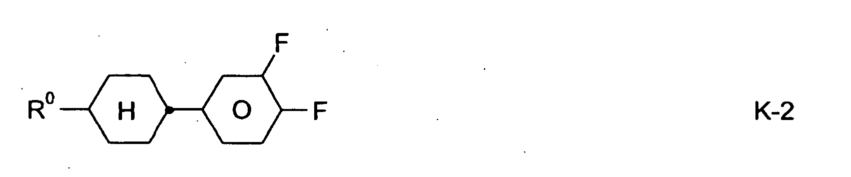 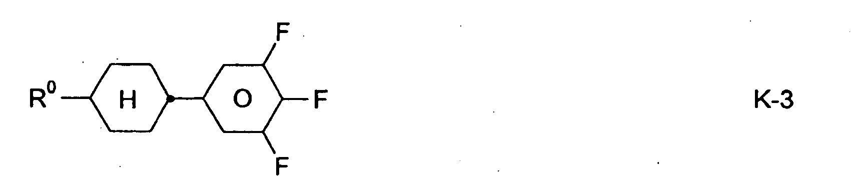 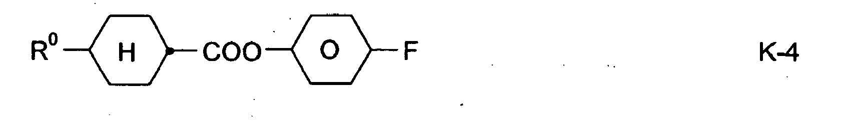 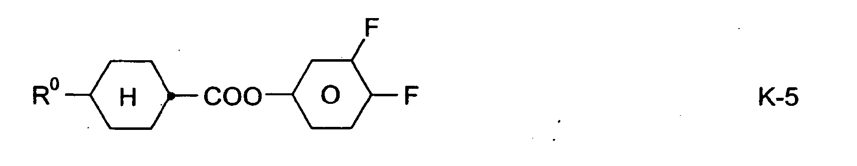 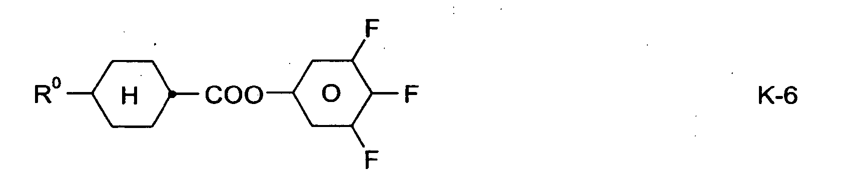 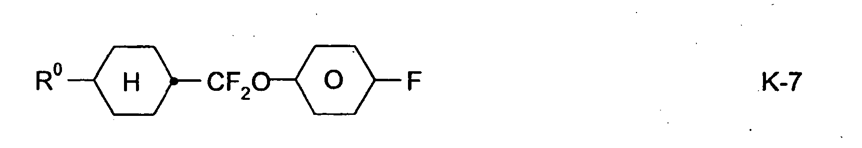 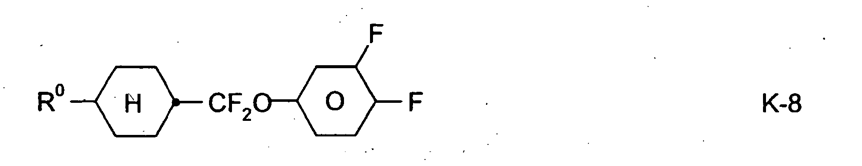 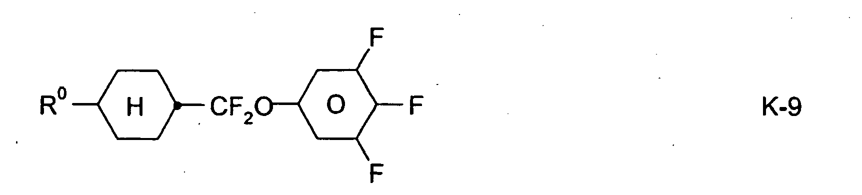 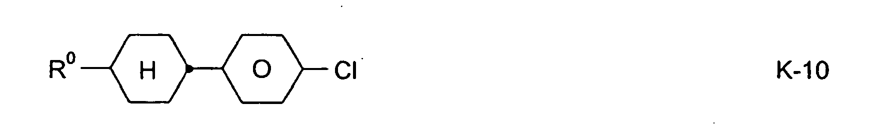 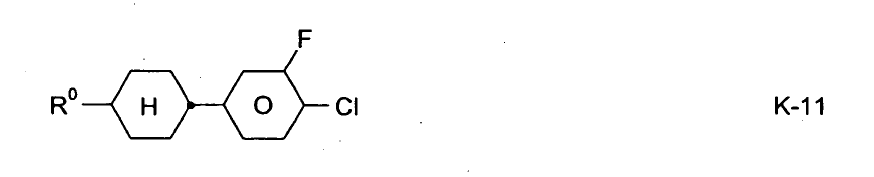 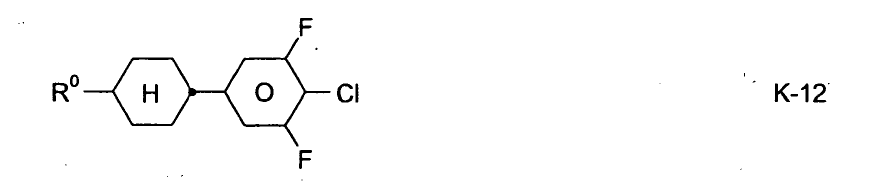 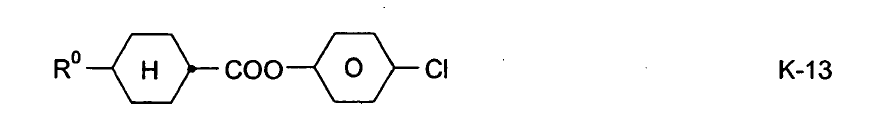 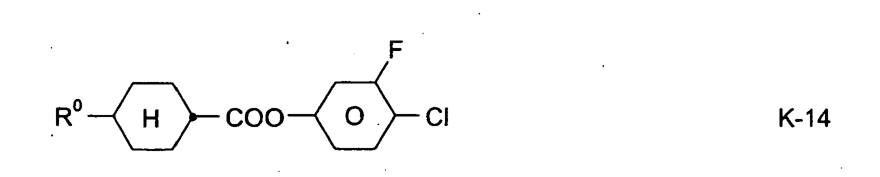 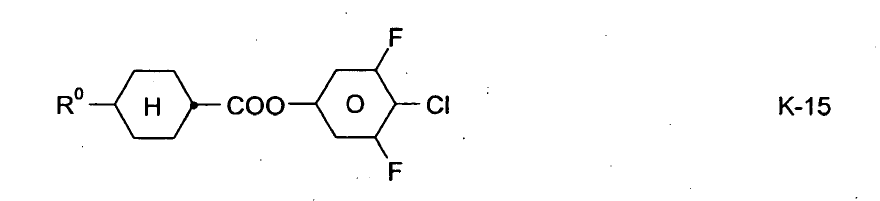 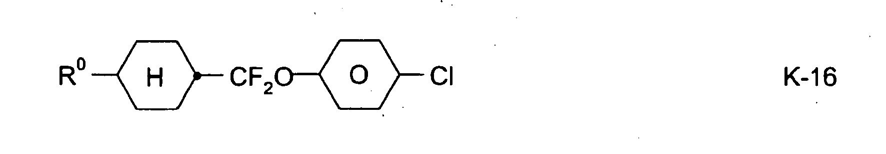 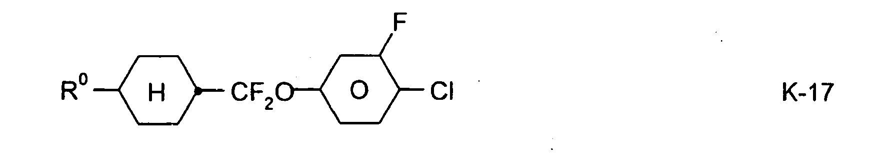 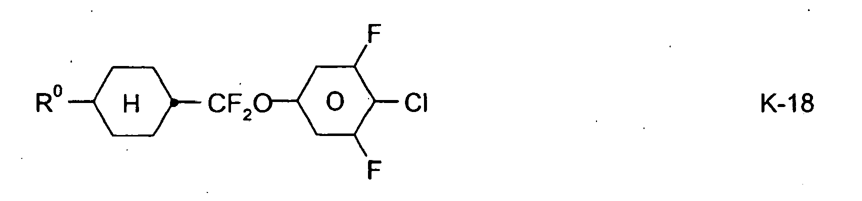 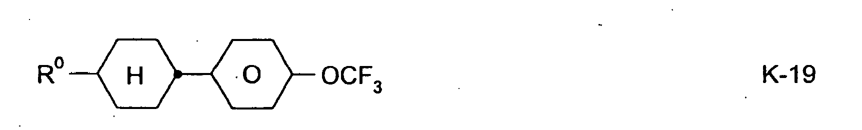 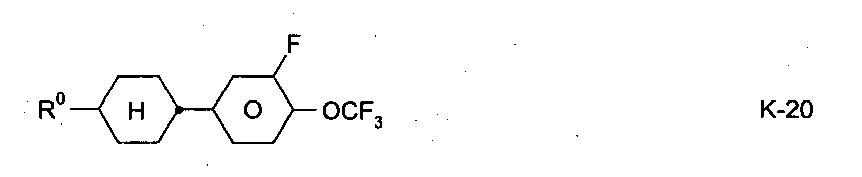 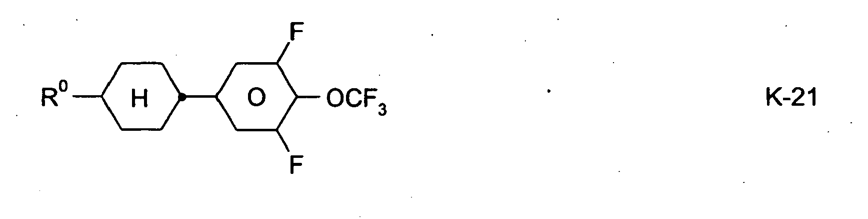 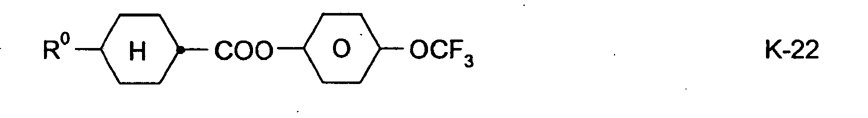 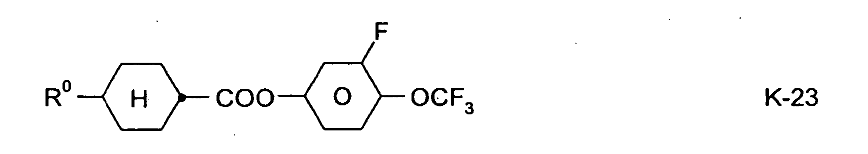 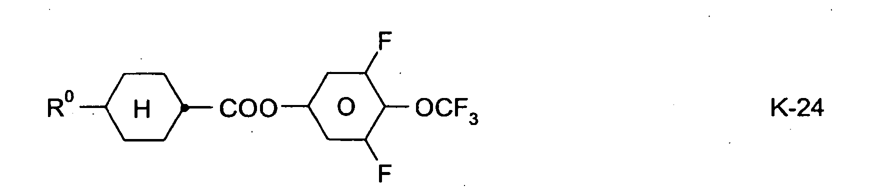 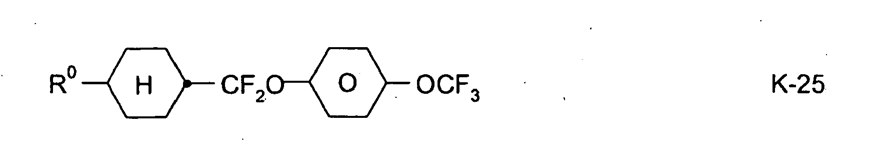 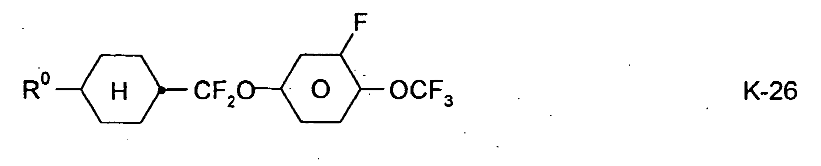 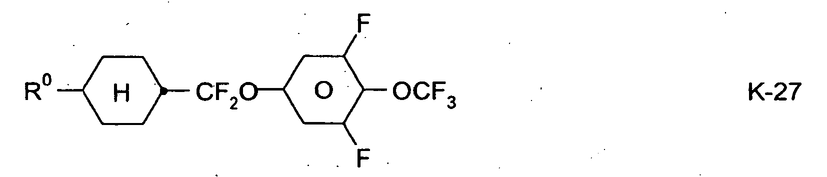 worin R⁰ die in Anspruch 6 angegebenen Bedeutungen hat, und vorzugsweise Alkyl ist.
- Das Medium enthält zusätzlich eine oder mehrere Verbindungen ausgewählt aus der Gruppe bestehend aus den allgemeinen Formeln II bis VI: 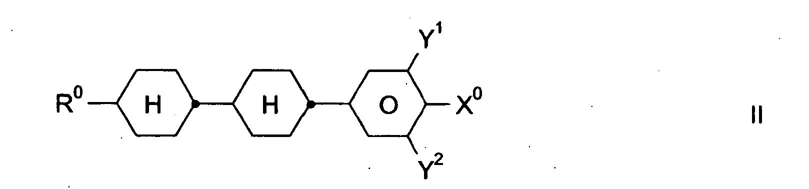 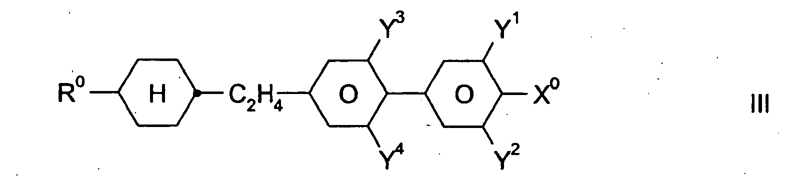 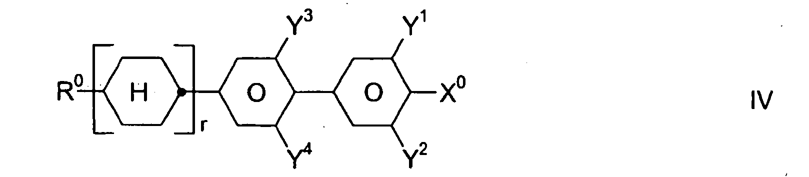 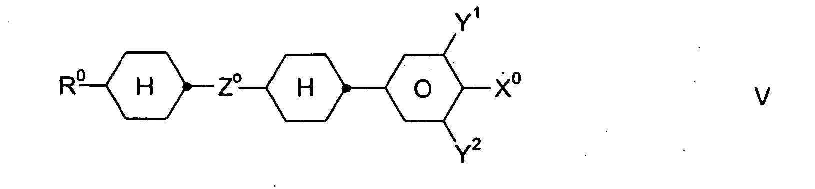 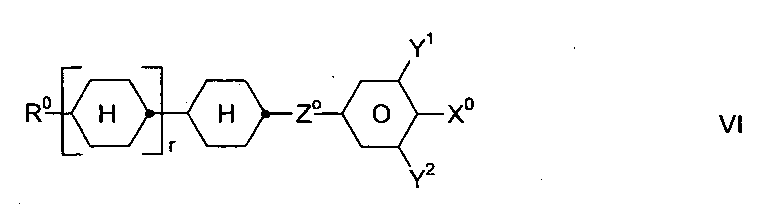
worin die einzelnen Reste die folgenden Bedeutungen haben:
- R⁰: n-Alkyl, Oxaalkyl, Alkoxy, Fluoralkyl, Alkenyloxy oder Alkenyl mit jeweils bis zu 9 C-Atomen,
- X⁰: F, Cl, halogeniertes Alkyl, halogeniertes Alkenyl, halo- geniertes Alkenyloxy oder halogeniertes Alkoxy mit bis zu 6 C-Atomen,
- Z⁰: -C₂F₄-, -CF=CF-, -C₂H₄-, -(CH₂)₄-, -OCH₂-, -CH₂O-, -CF₂O- oder -OCF₂-,
- Y¹ bis Y⁴: jeweils unabhängig voneinander H oder F,
- r: 0 oder 1.

Die Verbindung der Formel IV ist vorzugsweise 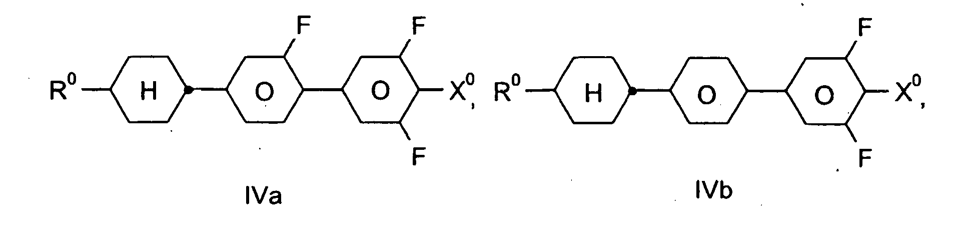 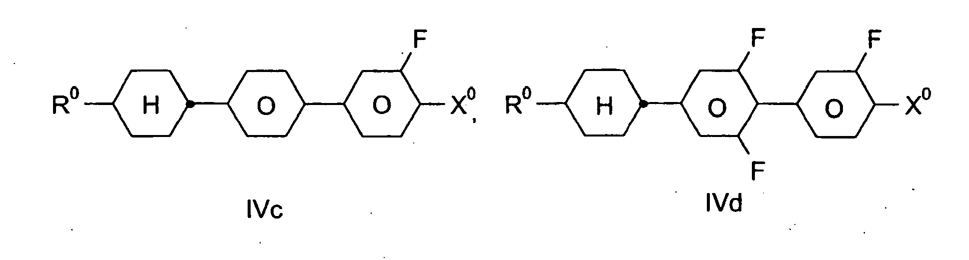 oder 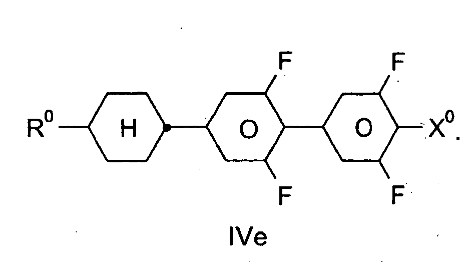
- Das Medium enthält zusätzlich eine oder mehrere Verbindungen ausgewählt aus der Gruppe bestehend aus den allgemeinen Formeln VII bis XIII: 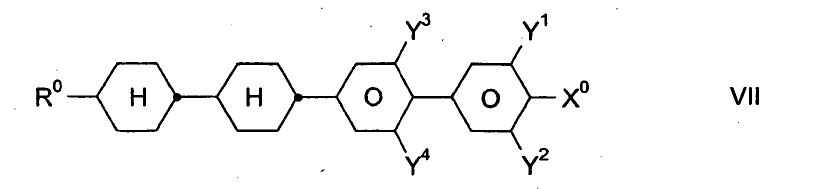 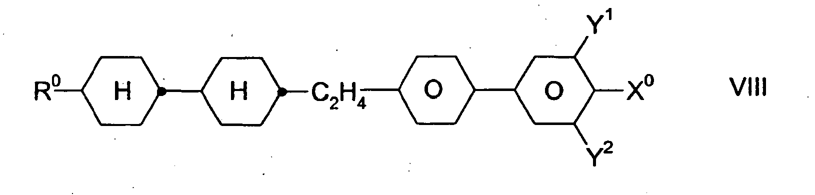 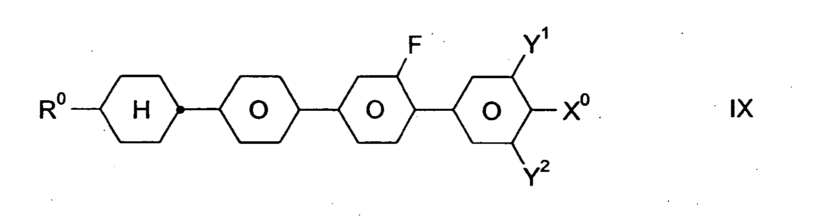 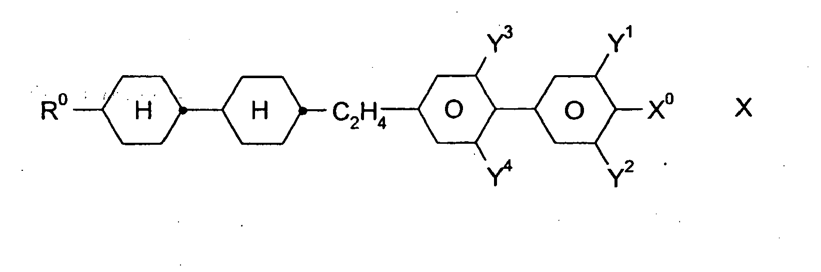 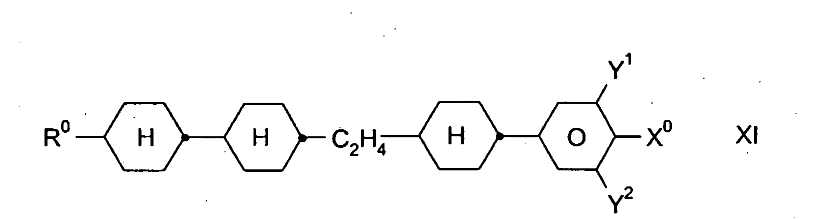 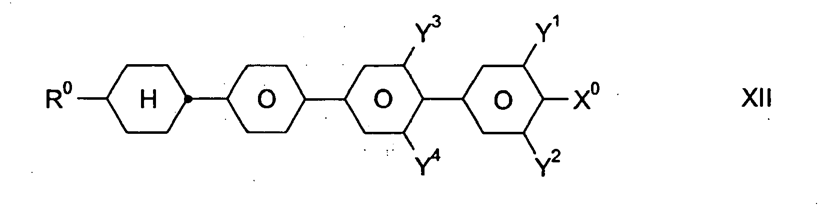 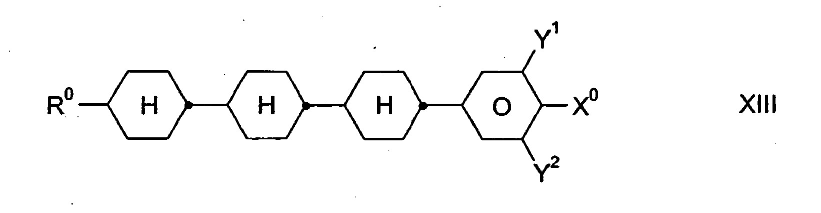 worin R⁰, X⁰ und Y¹⁻⁴ jeweils unabhängig voneinander eine der in Anspruch 6 angegebenen Bedeutungen haben. X⁰ ist vorzugsweise F, Cl, CF₃, OCF₃ oder OCHF₂. R⁰ bedeutet vorzugsweise Alkyl, Oxaalkyl, Fluoralkyl oder Alkenyl mit jeweils bis zu 6 C-Atomen.
- Das Medium enthält zusätzlich eine oder mehrere Verbindungen der Formeln E-a bis E-d, 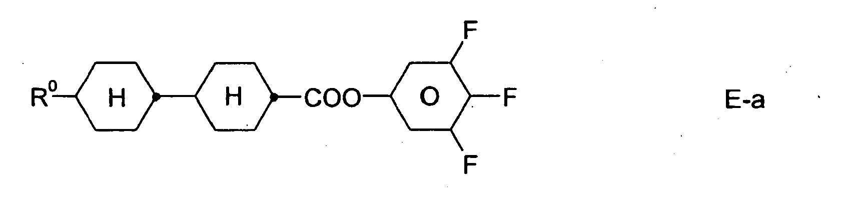 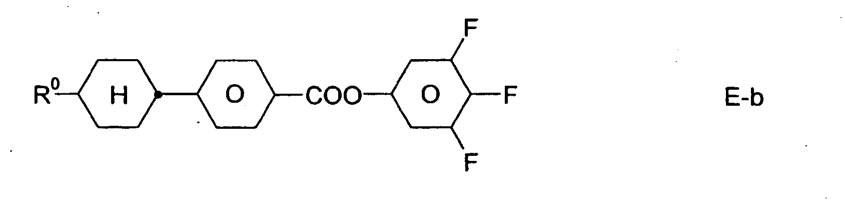 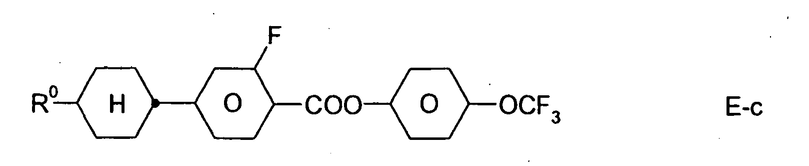 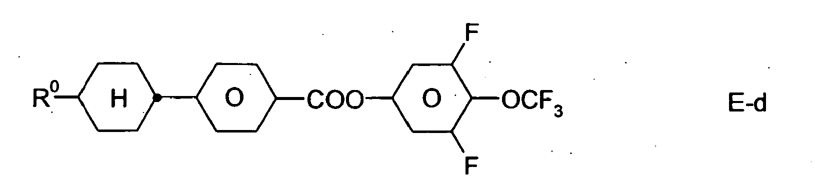 worin R⁰ die in Anspruch 6 angegebenen Bedeutungen hat;
- Der Anteil der Verbindungen der Formeln E-a bis E-d ist vorzugsweise 10-30 Gew.%, insbesondere 15-25 Gew.%;
- Der Anteil an Verbindungen der Formeln I bis VI zusammen beträgt im Gesamtgemisch mindestens 50 Gew.%;
- Der Anteil an Verbindungen der Formel I beträgt im Gesamtgemisch 0,5 bis 30, besonders bevorzugt 1 bis 20 Gew.%;
- Der Anteil an Verbindungen der Formeln I und (IA, IB und/oder IC) beträgt im Gesamtgemisch 2 bis 40 Gew.%;
- Der Anteil an Verbindungen der Formeln II bis VI im Gesamtgemisch beträgt 30 bis 80 Gew.%; 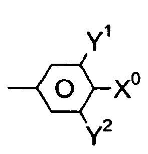 ist vorzugsweise 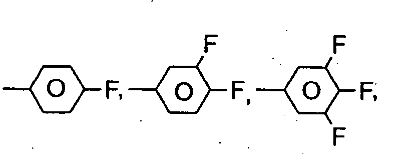 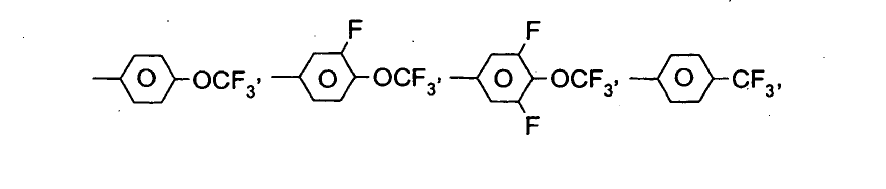 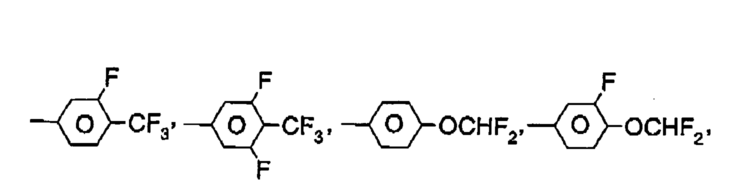 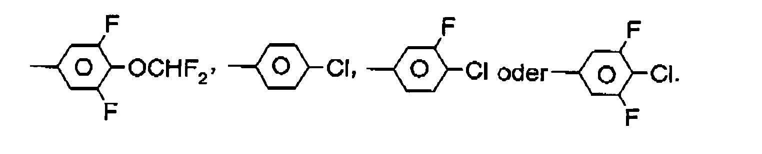
- Das Medium enthält Verbindungen der Formeln II, III, IV, V und/oder VI;
- R⁰ ist geradkettiges Alkyl oder Alkenyl mit 1 bzw. 2 bis 7 C-Atomen;
- Das Medium besteht im wesentlichen aus Verbindungen der Formeln I bis VI und XIII und (IA und/oder IB);
- Das Medium enthält weitere Verbindungen, vorzugsweise ausgewählt aus der folgenden Gruppe bestehend aus den allgemeinen Formeln XIV bis XXI: 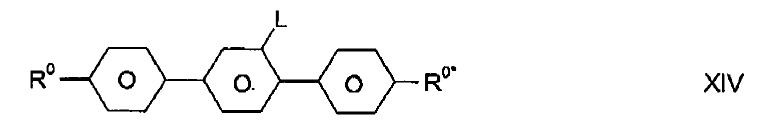 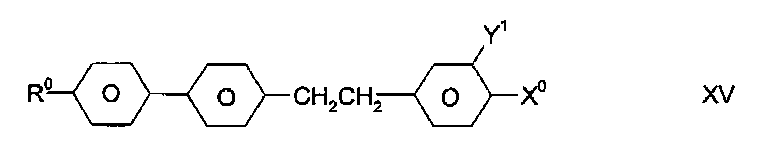 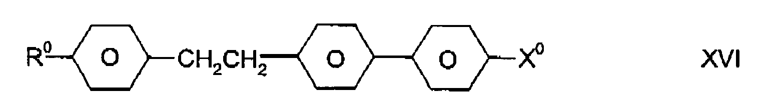 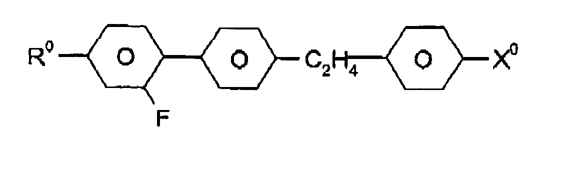 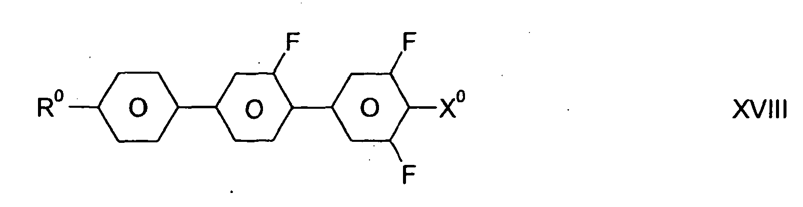 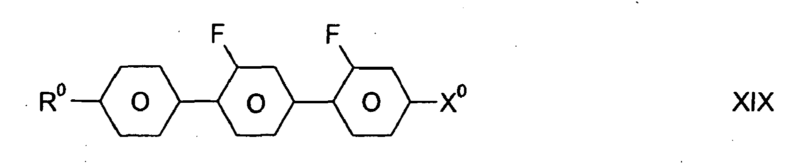 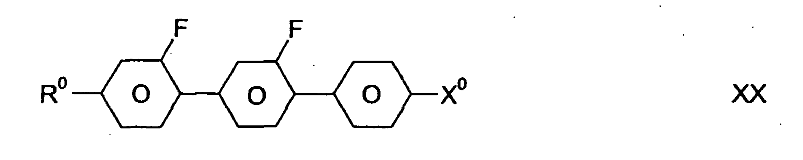 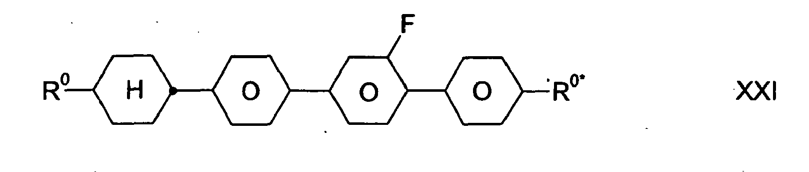 worin R⁰ und X⁰ die oben angegebenen Bedeutungen haben. Y¹ bedeutet H oder F. L bedeutet H oder F. X⁰ bedeutet in den Verbindungen der Formeln XV bis XX vorzugsweise F oder Cl. R^{0*} bedeutet Alkyl oder Alkenyl. R⁰ bedeutet vorzugsweise Alkyl, Alkenyl oder Alkoxy.
- Das Medium enthält zusätzlich ein, zwei, drei oder mehr, vorzugsweise zwei oder drei Verbindungen der Formeln 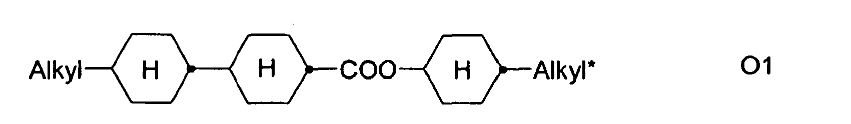 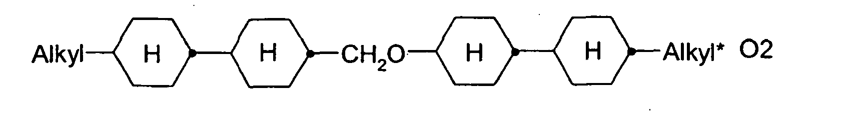 worin "Alkyl" und "Alkyl*" die die in Anspruch 3 für Alkyl angegebenen Bedeutungen haben. Der Anteil der Verbindungen der Formeln O1 und/oder 02 in den erfindungsgemäßen Mischungen beträgt vorzugsweise 5-10 Gew.%.
- Das Medium enthält vorzugsweise 5-35 Gew.% der Verbindung IVa.
- Das Medium enthält vorzugsweise ein, zwei oder drei Verbindungen der Formel IVa, worin X⁰ F oder OCF₃ bedeutet.
- Das Medium enthält vorzugsweise eine oder mehrere Verbindungen der Formeln IIa bis IIg, 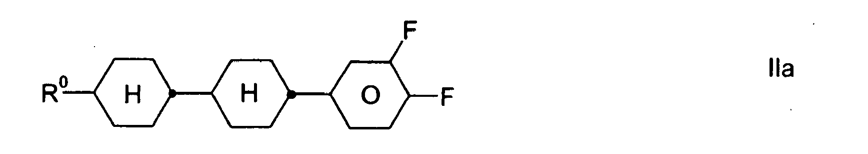 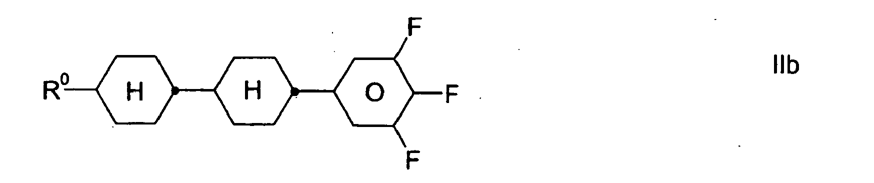 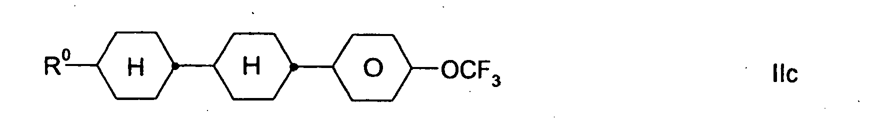 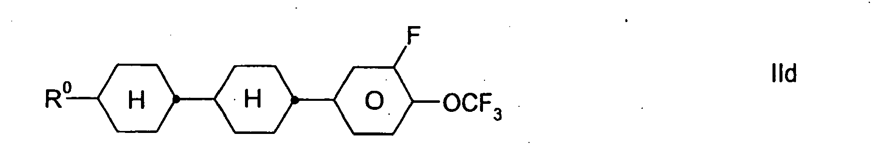 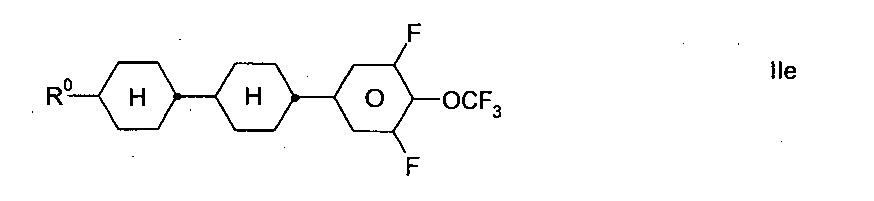 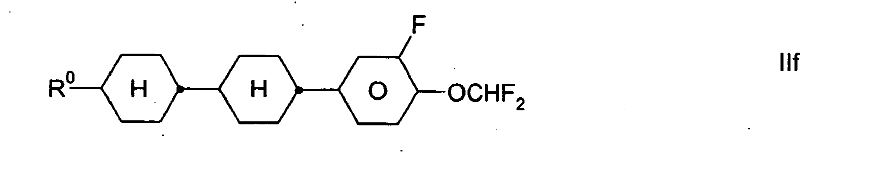 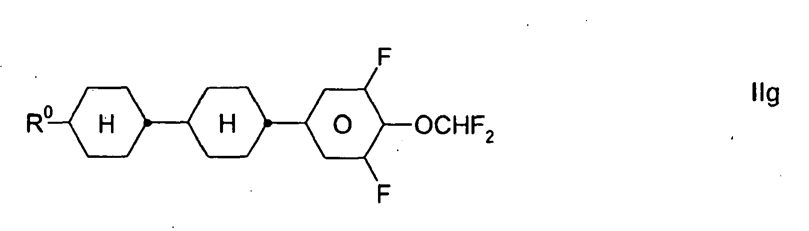 worin R⁰ die in Anspruch 6 angegebenen Bedeutungen hat. In den Verbindungen der Formeln Ila-IIg bedeutet R⁰ vorzugsweise Methyl, Ethyl, n-Propyl, n-Butyl und n-Pentyl.
- Das Medium enthält vorzugsweise eine oder mehrere Zwei- und/oder Dreikern-Verbindungen mit einer CF₂O-Brücke der Formeln Q-1 bis Q-9: 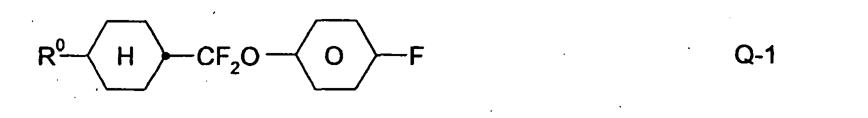 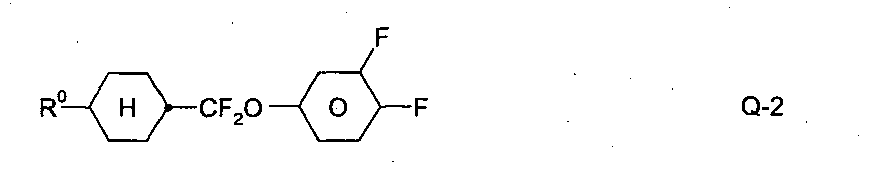 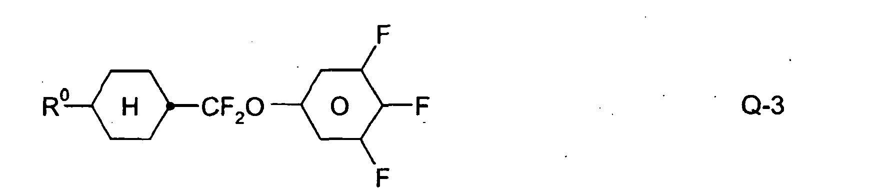 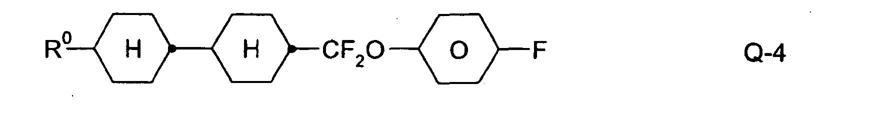 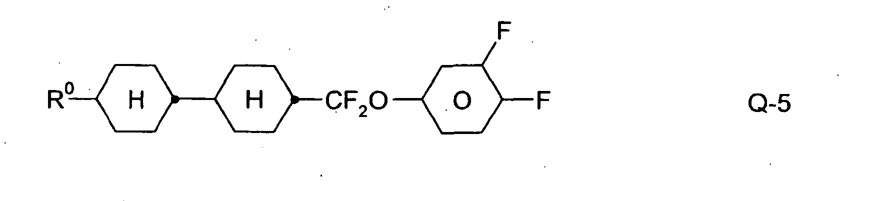 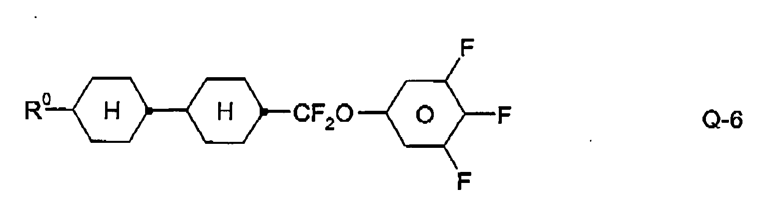 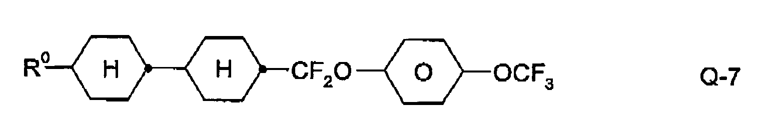 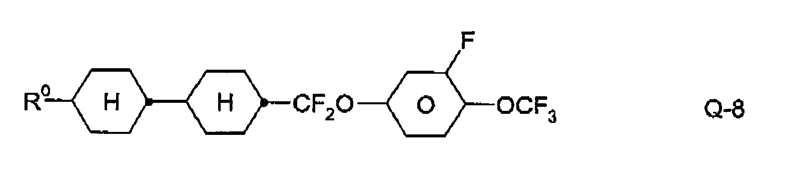 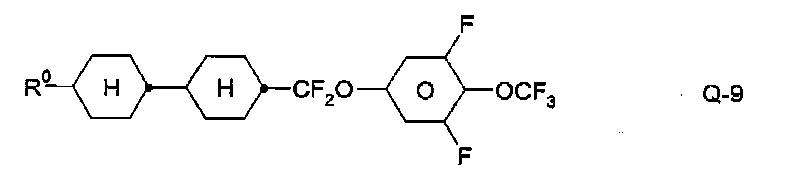
worin R⁰ die in Anspruch 6 angegebenen Bedeutungen hat, und vorzugsweise Alkyl bedeutet.

Insbesondere bevorzugt sind die Verbindungen der Formeln Q-6, Q-8, ferner Q-5.

Die erfindungsgemäße Mischung enthält vorzugsweise 3-20 %, insbesondere 3-15 %, der Verbindungen der Formeln Q-1 bis Q-9.
- Das Gewichtsverhältnis (I): (II + III + IV + V + VI) ist vorzugsweise 1:90 bits 10:1.
- Das Medium besteht im wesentlichen aus Verbindungen ausgewählt aus der Gruppe bestehend aus den allgemeinen Formeln I bis XIII und (IA und/oder IB).
- Der Anteil der Verbindungen der Formel IVb und/oder IVc, worin X⁰ Fluor und R⁰ CH₃, C₂H₅, n-C₃H₇, n-C₄H₉ oder n-C₅H₁₁ bedeutet, beträgt im Gesamtgemisch 2 bis 20 Gew.%, insbesondere 2 bis 15 Gew.%;
- Das Medium enthält vorzugsweise Verbindungen der Formeln II bis VI, worin R⁰ Methyl bedeutet.

Insbesondere bevorzugt enthält das Medium Verbindungen der Formeln 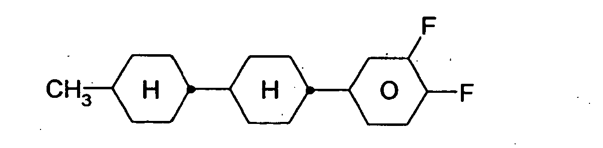 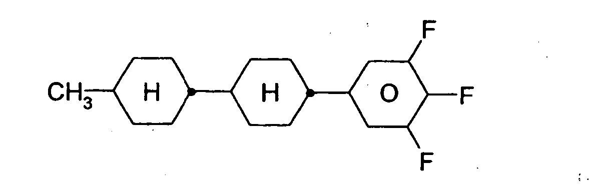 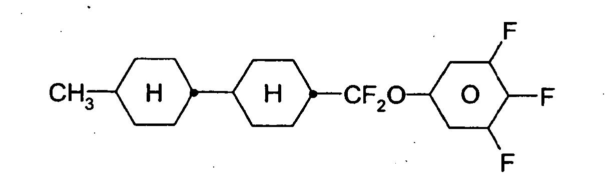 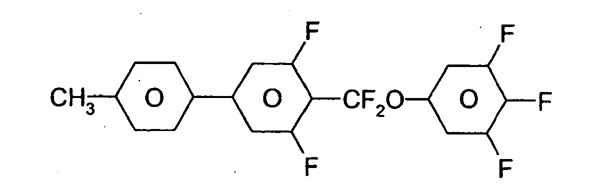
- Das Medium enthält vorzugsweise eine, zwei oder mehr, vorzugsweise eine oder zwei, Dioxan-Verbindungen der Formeln 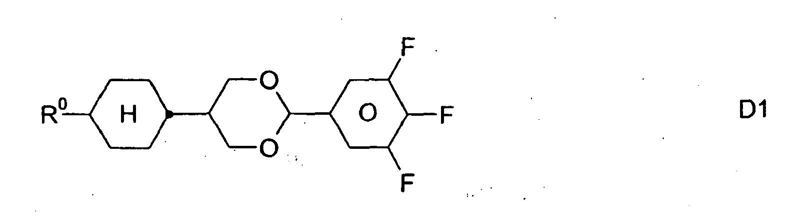 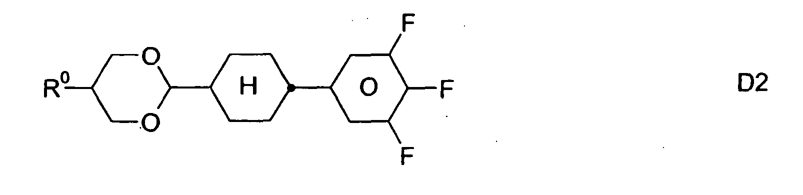 worin R⁰ die in Anspruch 6 angegebenen Bedeutungen hat.
- Das Medium enthält zusätzlich eine, zwei oder mehr Zweikern-Verbindungen der Formeln Z-1 bis Z-10 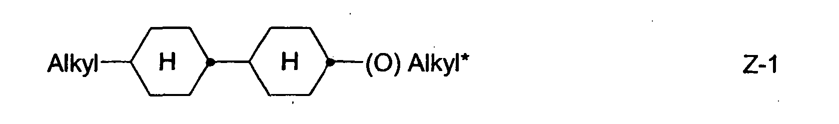 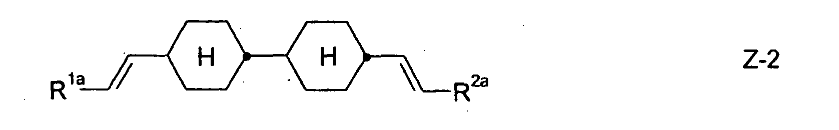 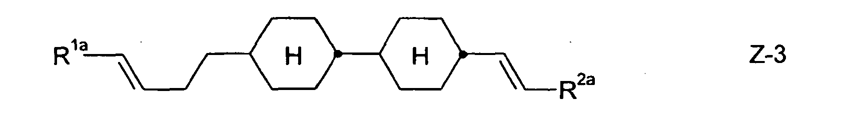 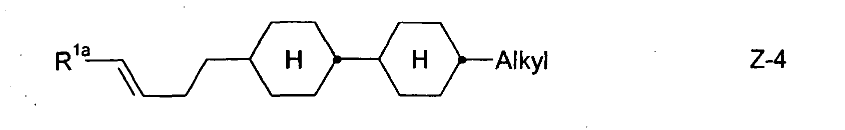 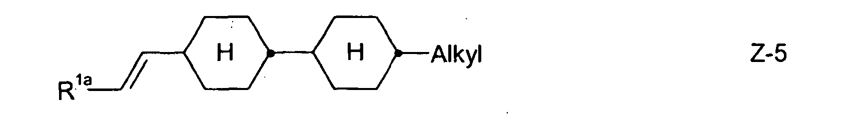 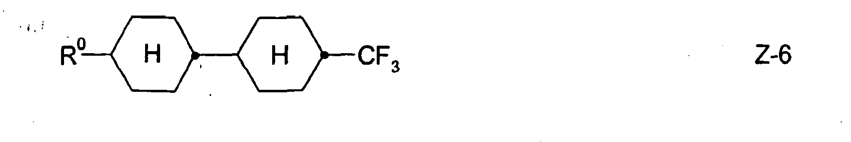 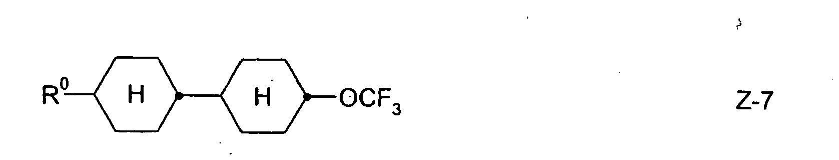 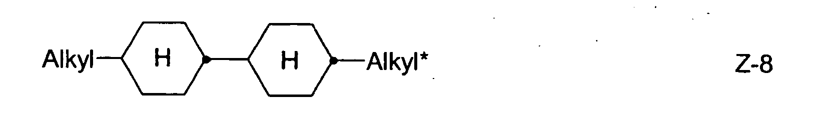 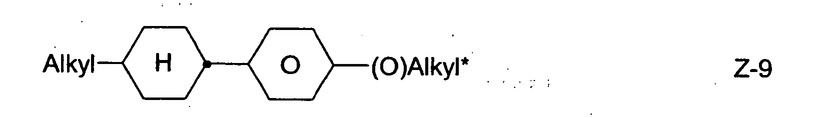 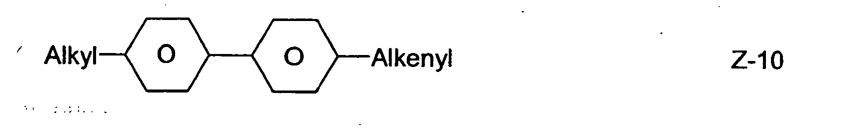
worin R^{1a} und R^{2a} jeweils unabhängig voneinander H, CH₃, C₂H₅ oder n-C₃H₇ bedeuten. R⁰, Alkyl und Alkyl*, Alkenyl besitzen die in Anspruch 3 bzw. 6 angegebenen Bedeutungen. Alkyl* besitzt unabhängig voneinander die Bedeutung von Alkyl.

Besonders bevorzugte Verbindungen der Formel Z-5 sind

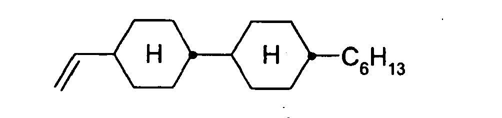

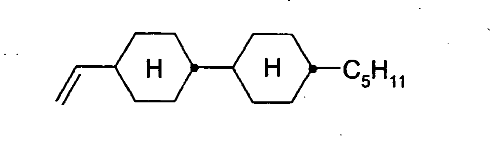

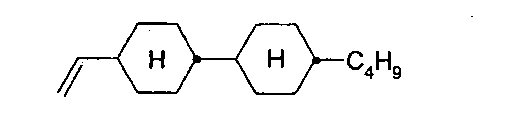

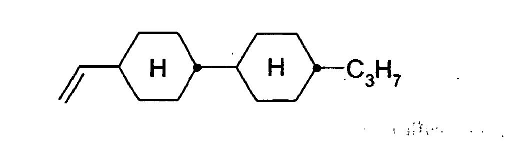

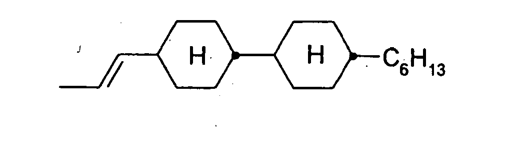

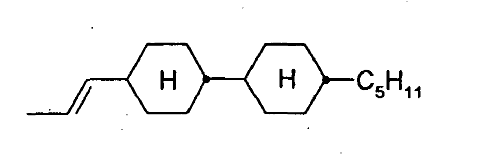

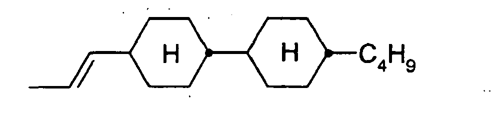

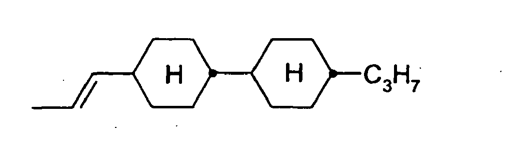

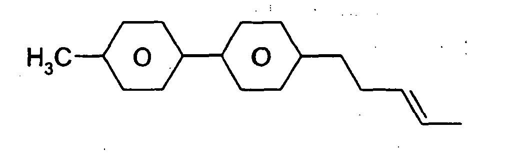

Von den genannten Zweikern-Verbindungen sind besonders bevorzugt die Verbindungen Z-1, Z-2, Z-5, Z-6, Z-8, Z-9 und Z-10. Vorzugsweise enthalten die erfindungsgemäßen Mischungen 5-40 %, insbesondere 5-30 %, an Verbindungen der Formeln Z-1 bis Z-10.
- Das Medium enthält zusätzlich noch eine oder mehrere Verbindungen der Formeln P-1 bis P-8 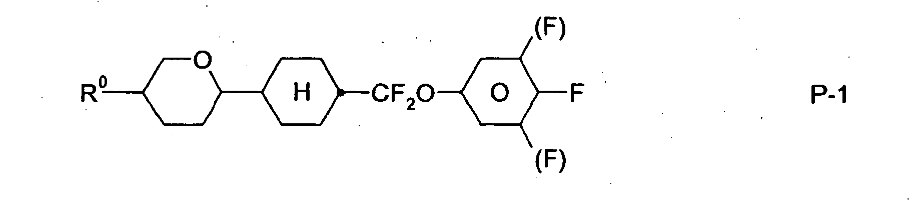 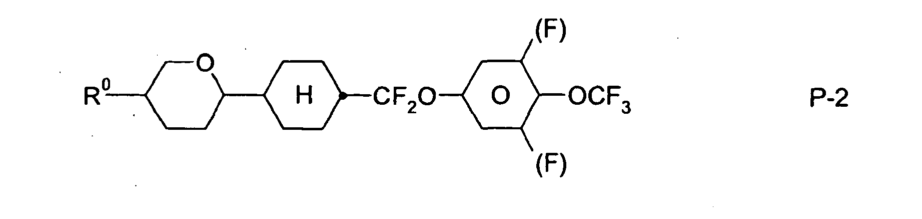 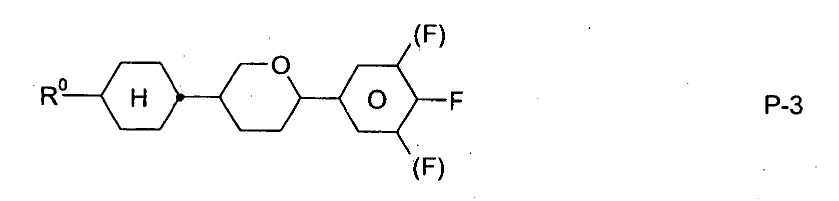 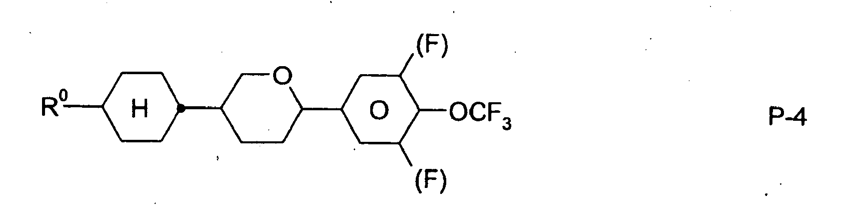 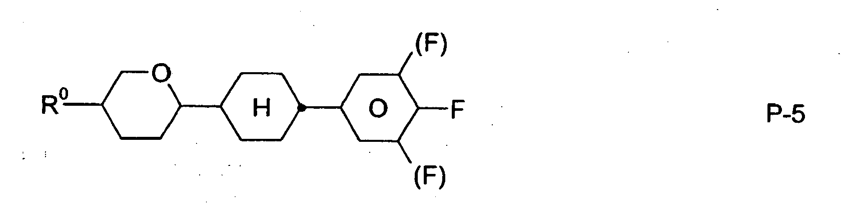 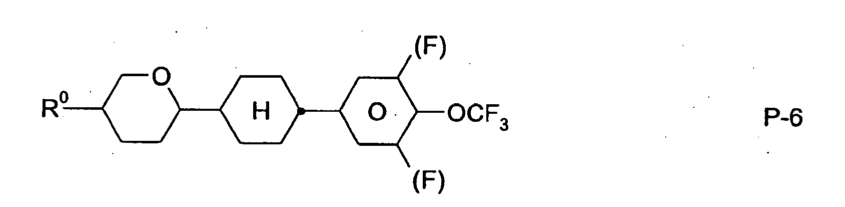 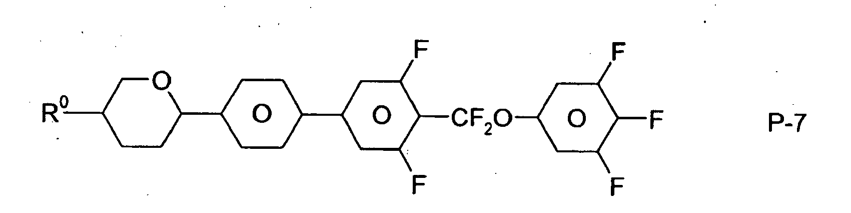 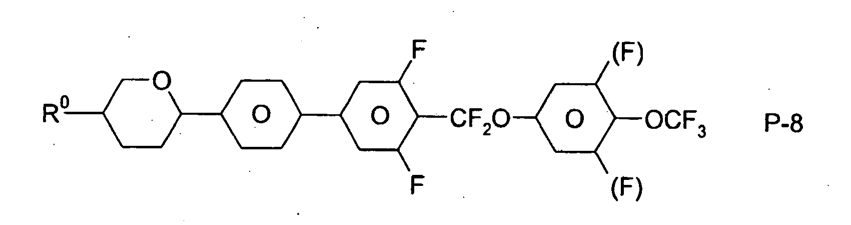 worin R⁰ die oben angegebenen Bedeutungen hat.
- Das Medium enthält zusätzlich ein, zwei oder mehr Verbindungen mit annellierten Ringen der Formeln AN1 bis AN11: 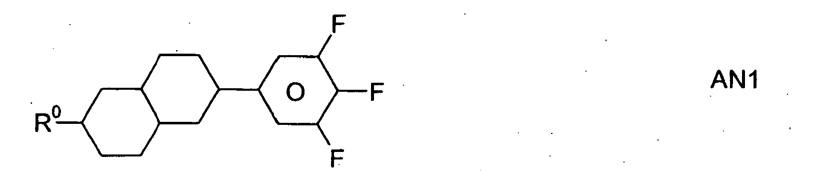 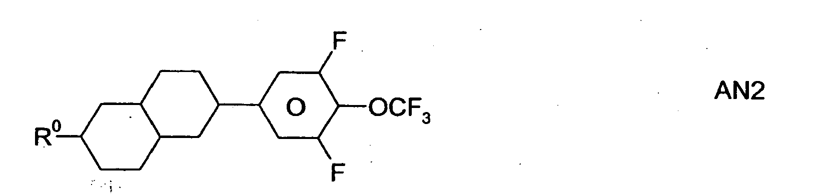 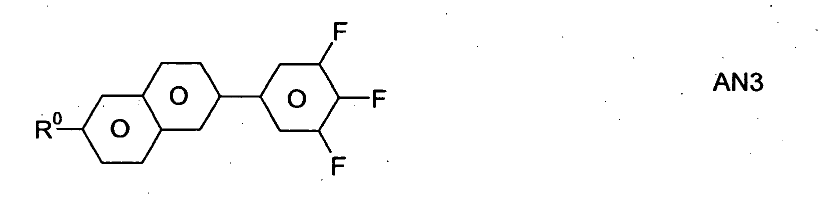 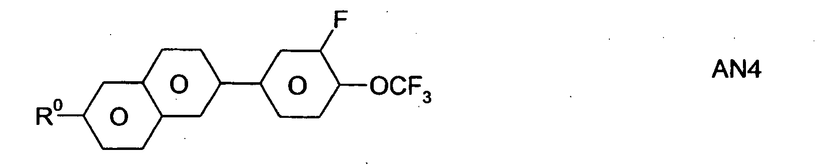 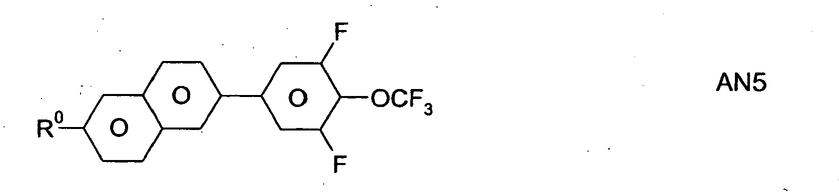 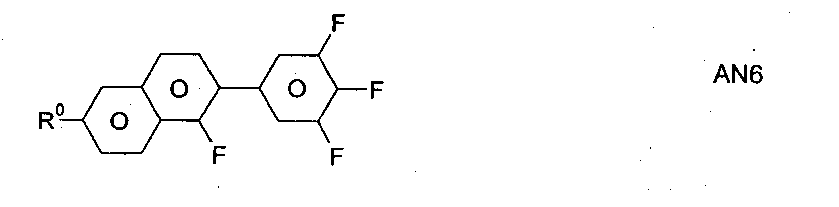 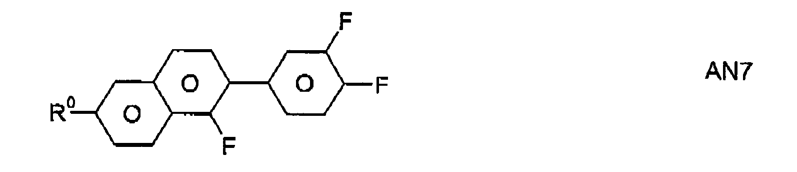 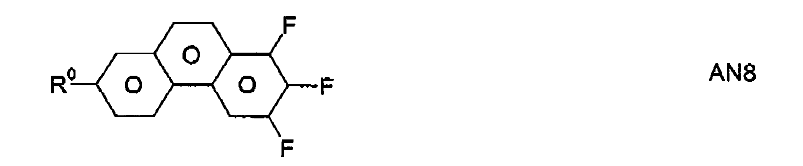 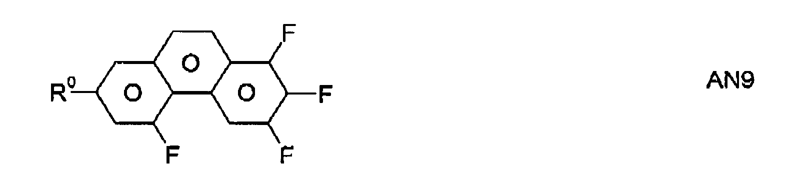 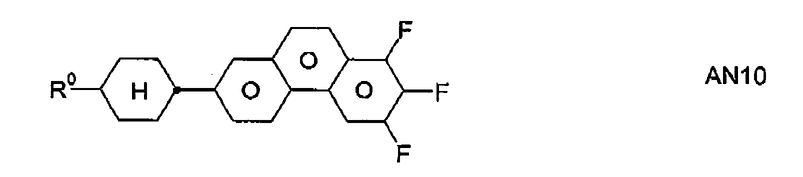 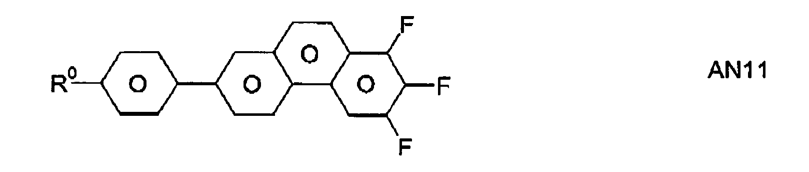 worin R⁰ die in Anspruch 6 angegebenen Bedeutungen hat.

Es wurde gefunden, dass bereits ein relativ geringer Anteil an Verbindungen der Formeln I im Gemisch mit Verbindungen der Formeln IA und/oder IB und weiteren üblichen Flüssigkristallmaterialien, insbesondere jedoch mit einer oder mehreren Verbindungen der Formeln II, III, IV, V und/oder VI zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben einer oder mehreren Verbindungen der Formeln I und (IA und/oder IB) eine oder mehrere Verbindungen der Formel IV enthalten, insbesondere Verbindungen der Formel IVa, worin X⁰ F oder OCF₃ bedeutet. Die Verbindungen der Formeln IA, IB, I bis VI sind farblos, stabil und untereinander und mit anderen Flüssigkristallmaterialien gut mischbar.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-5 Kohlenstoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C6-C₇-5-Alkenyl und C₇-6-Alkenyl, insbesondere C₂-C₇-1 E-Alkenyl, C₄-C₇-3E-Alkenyl und C₅-C₇-4-Alkenyl. Beispiele besonders bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen, Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CnH₂ₙ₊ᵢ-O-(CH2)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I + (IA und/oder IB) und (II + III + IV + V + VI) hängt weitgehend von den gewünschten Eigenschaften, von der Wahl der Komponenten der Formeln IA und/oder IB, I, II, III, IV, V und/oder VI und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln IA, IB, I bis XIII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XIII sind.

In einer besonders bevorzugten Ausführungsform enthalten die erfindungsgemäßen Medien Verbindungen der Formel II bis VI (vorzugsweise II, III und/oder IV, insbesondere IVa), worin X⁰ F, OCF₃, OCHF₂, OCH=CF₂, OCF=CF₂ oder OCF₂-CF₂H bedeutet. Eine günstige synergistische Wirkung mit den Verbindungen der Formeln I führt zu besonders vorteilhaften Eigenschaften. Insbesondere Mischungen enthaltend Verbindungen der Formel I und (IA und/oder IB) und der Formel II zeichnen sich durch ihre niedrige Schwellenspannung aus.

Die einzelnen Verbindungen der Formeln I bis XXI und deren Unterformeln in Kombination mit Verbindungen der Formeln IA und/oder IB, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM,

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe, UV-Stabilisatoren, Antioxidantien, Nanopartikel oder chirale Dotierstoffe zugesetzt werden. Geeignete Dotierstoffe und Stabilisatoren sind in den Tabellen C und D aufgelistet.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,Ofachen Wert von V₁₀. Δn bezeichnet die optische Anisotropie. Δε bezeichnet die dielektrische Anisotropie (Δε = ε_{∥}- ε_{⊥}, wobei ε_{∥} die Dielektrizitätskonstante parallel zu den Moleküllängsachsen und ε_{⊥} die Dielektrizitätskonstante senkrecht dazu bedeutet). Die elektro-optischen Daten werden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten werden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | OCₙH₂ₙ₊₁ | CₘH₂ₘ₊₁ | H | H |
| nO.m | CₙH₂ₙ₊₁ | OCₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nmF | CₙH₂ₙ₊₁ | CₘH₂ₘ₊₁ | F | H |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

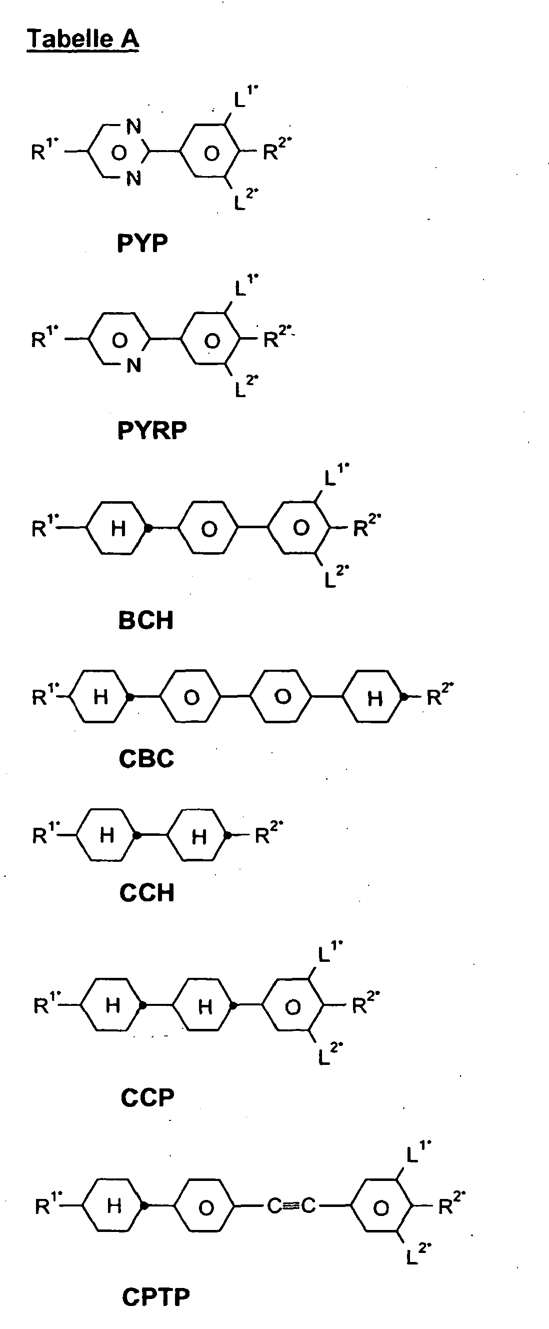

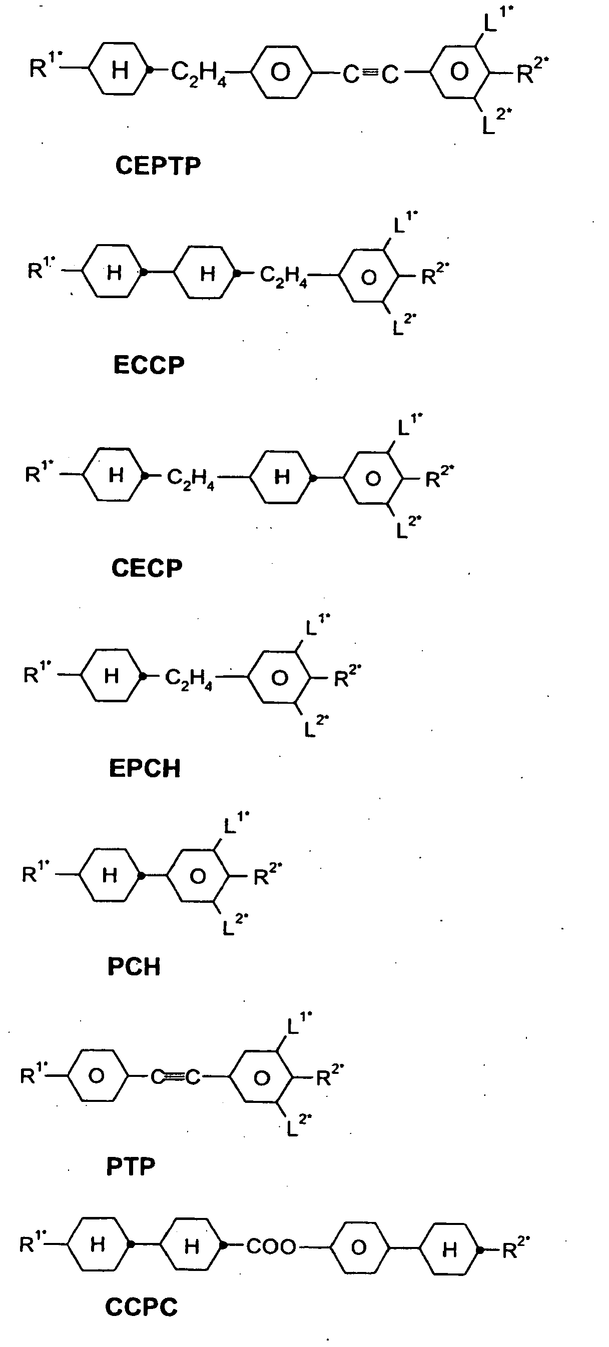

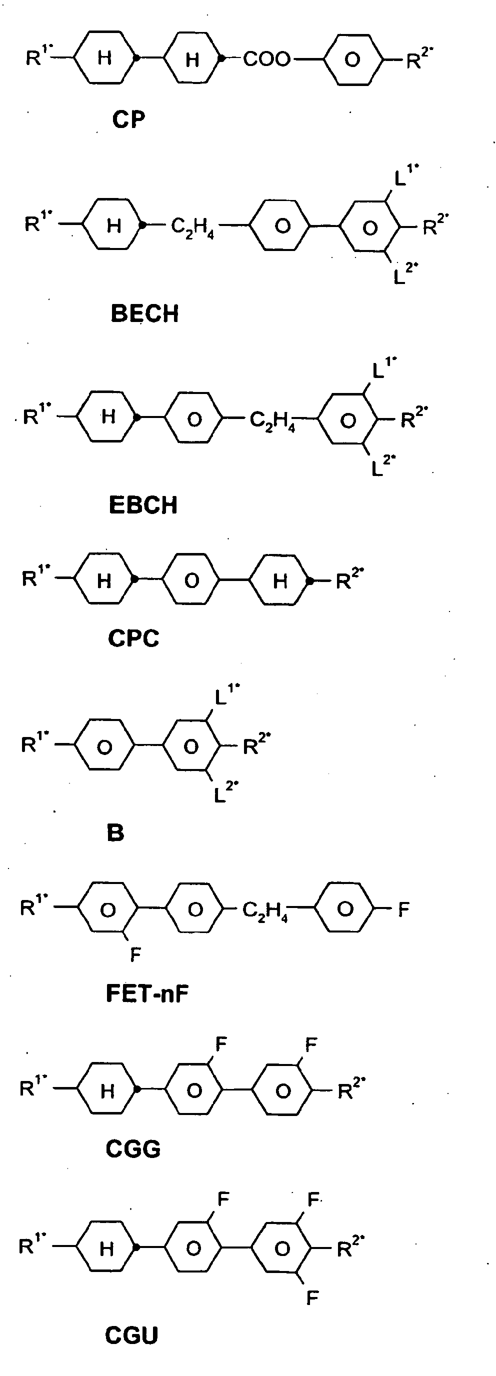

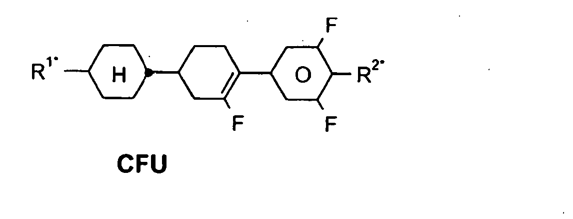

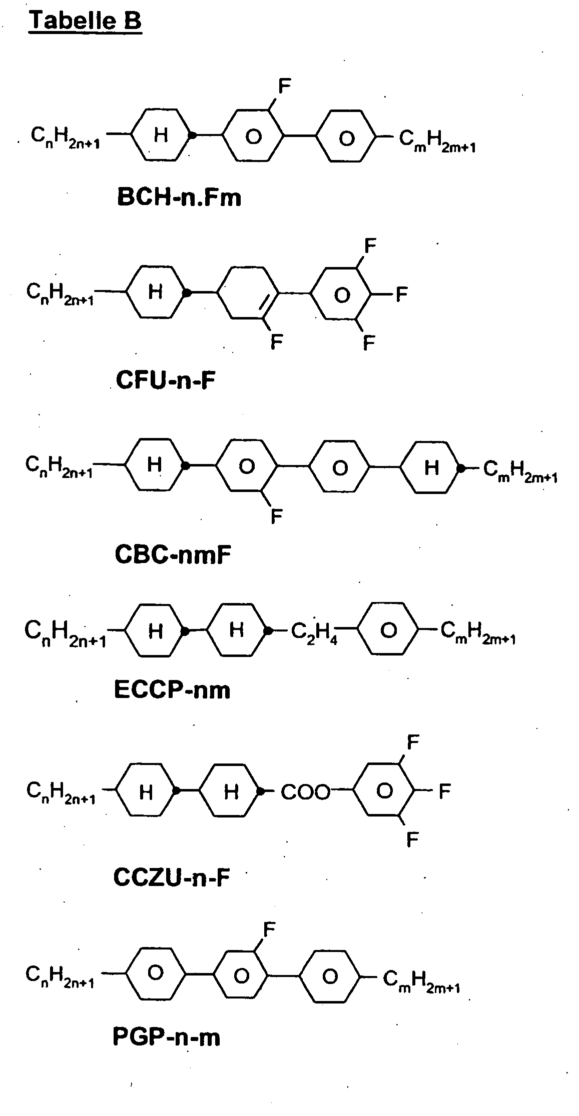

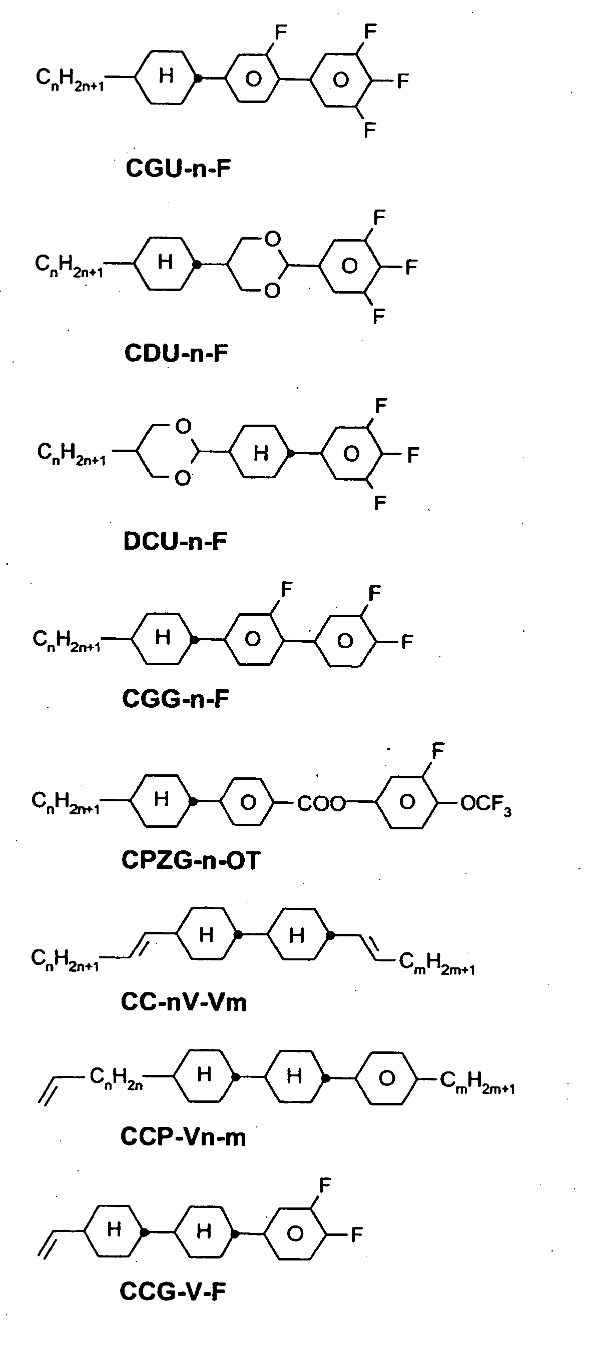

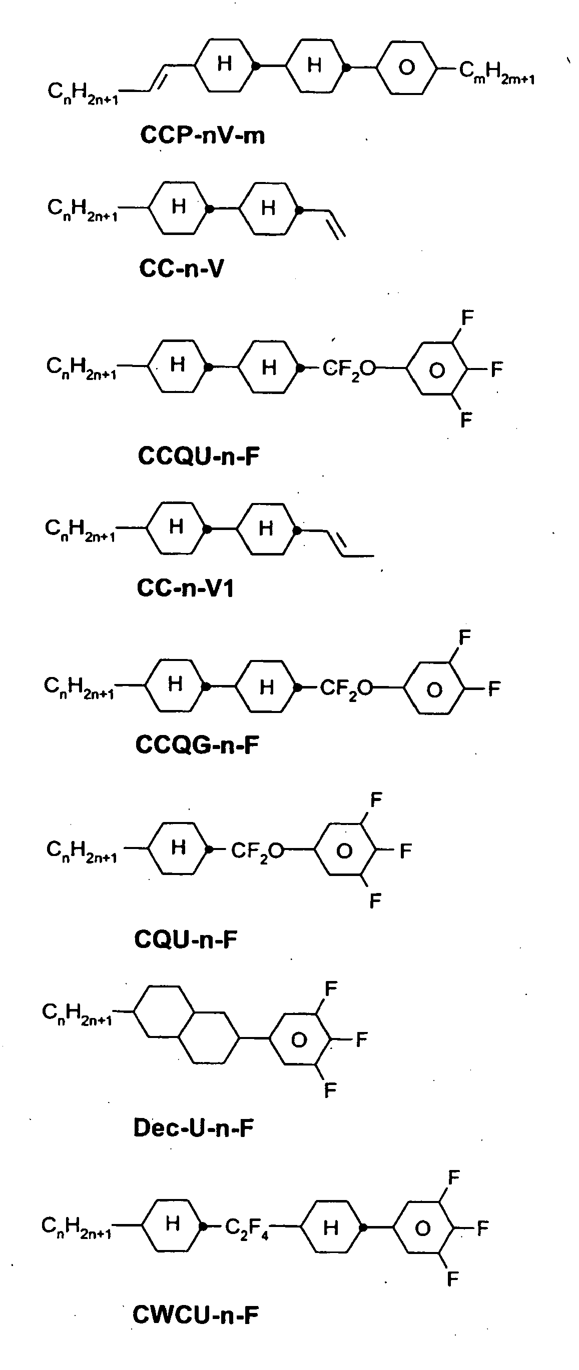

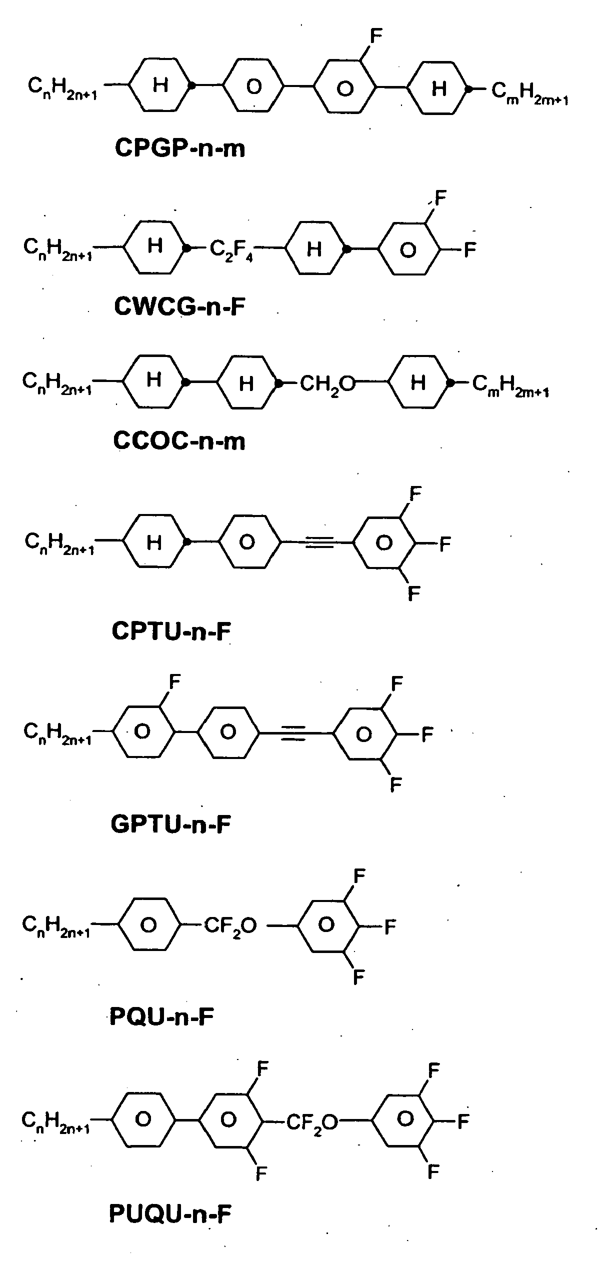

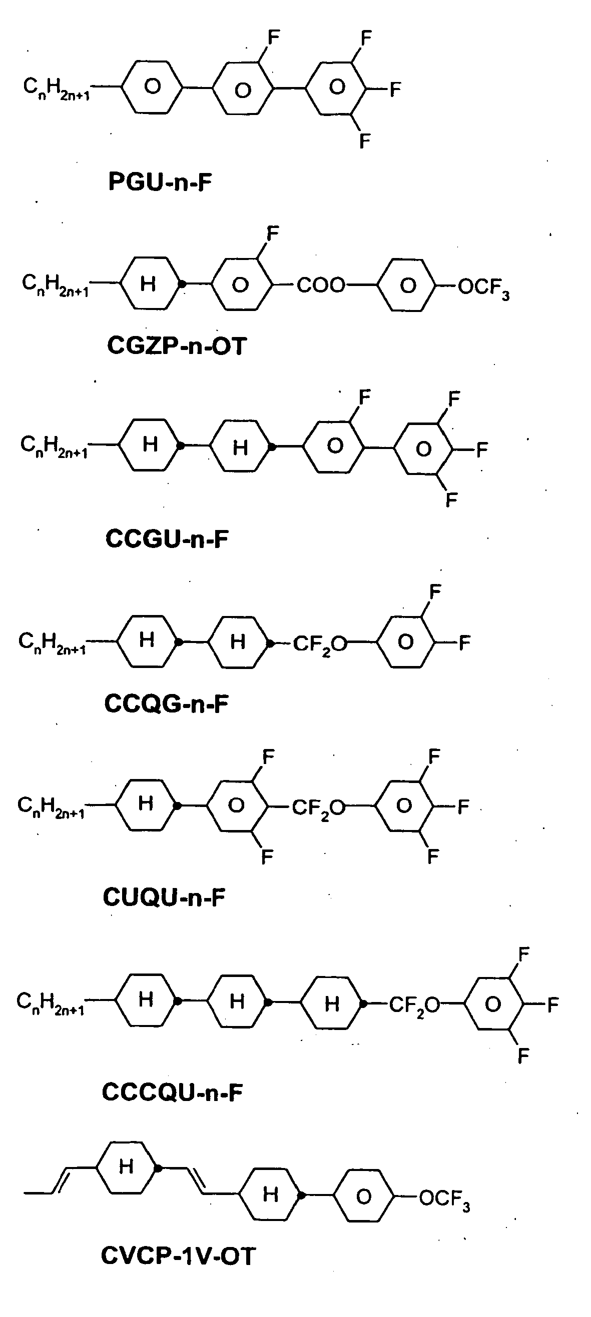

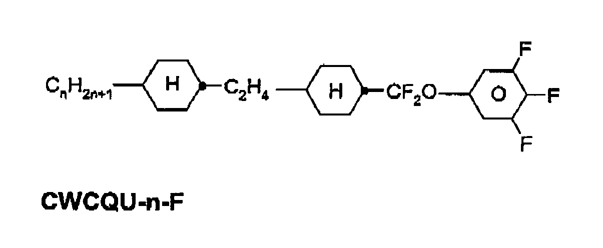

Besonders bevorzugt sind flüsigkristalline Mischungen, die neben den Verbindungen der Formeln I und (IA und/oder IB) mindestens eine, zwei, drei oder vier Verbindungen aus der Tabelle B enthalten.

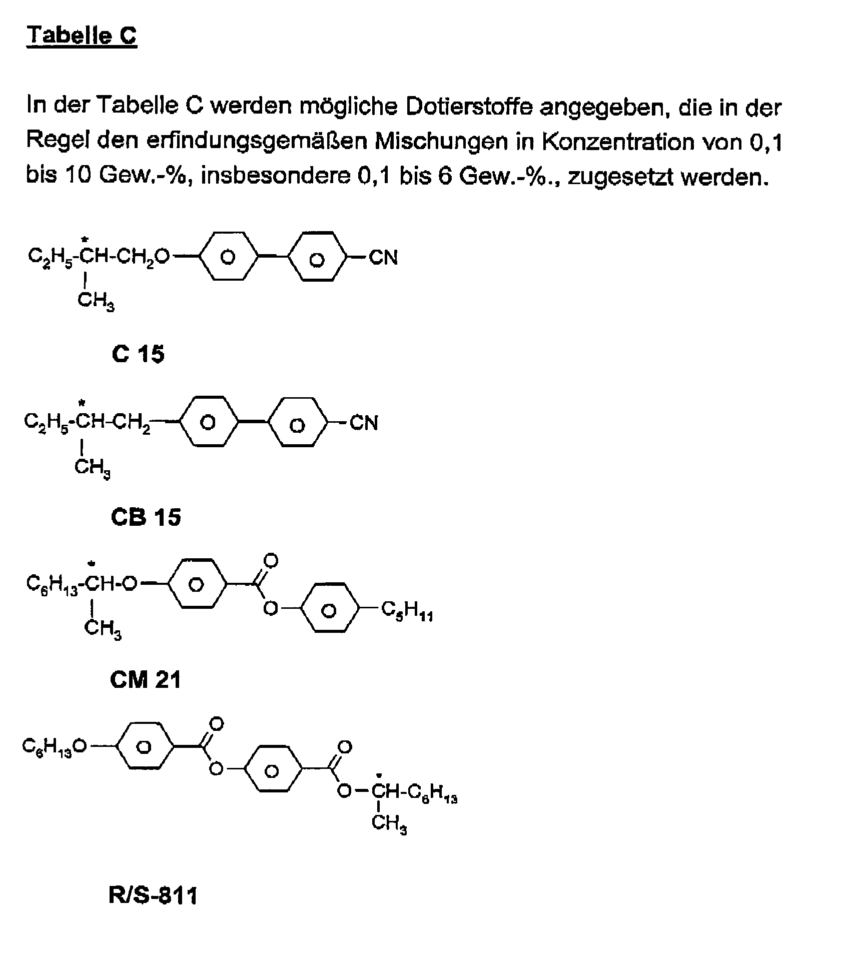

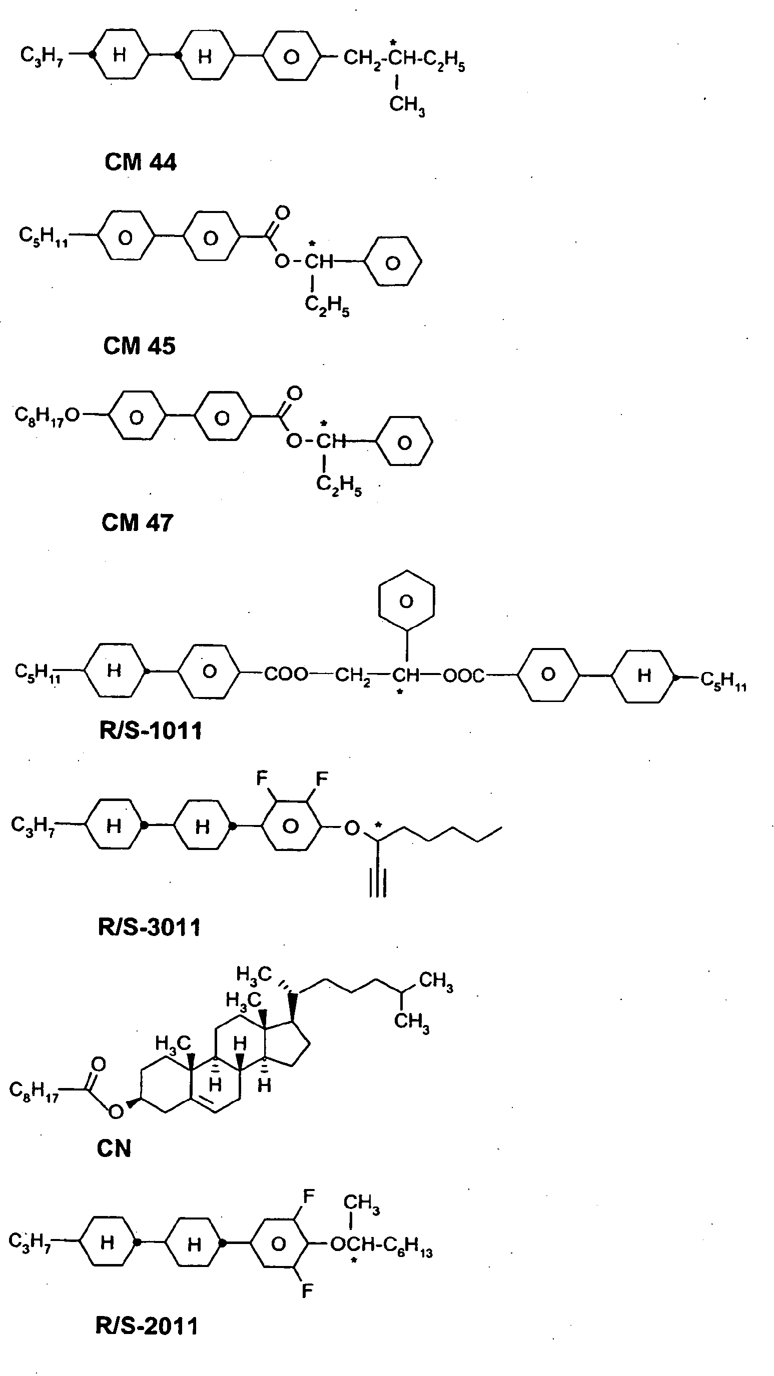

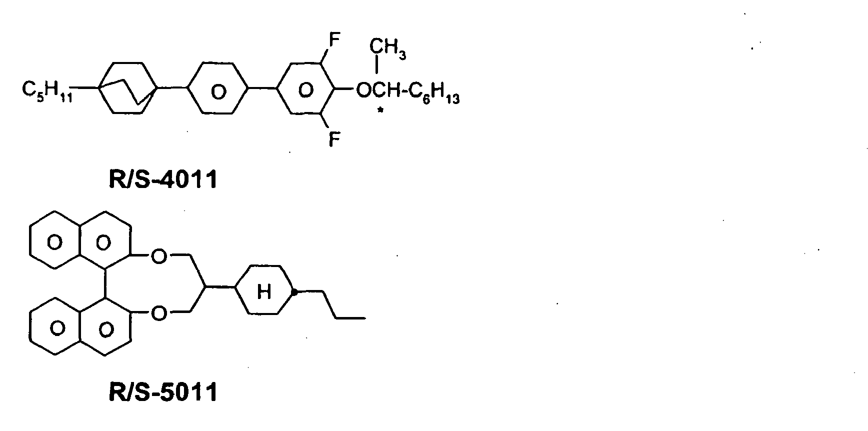

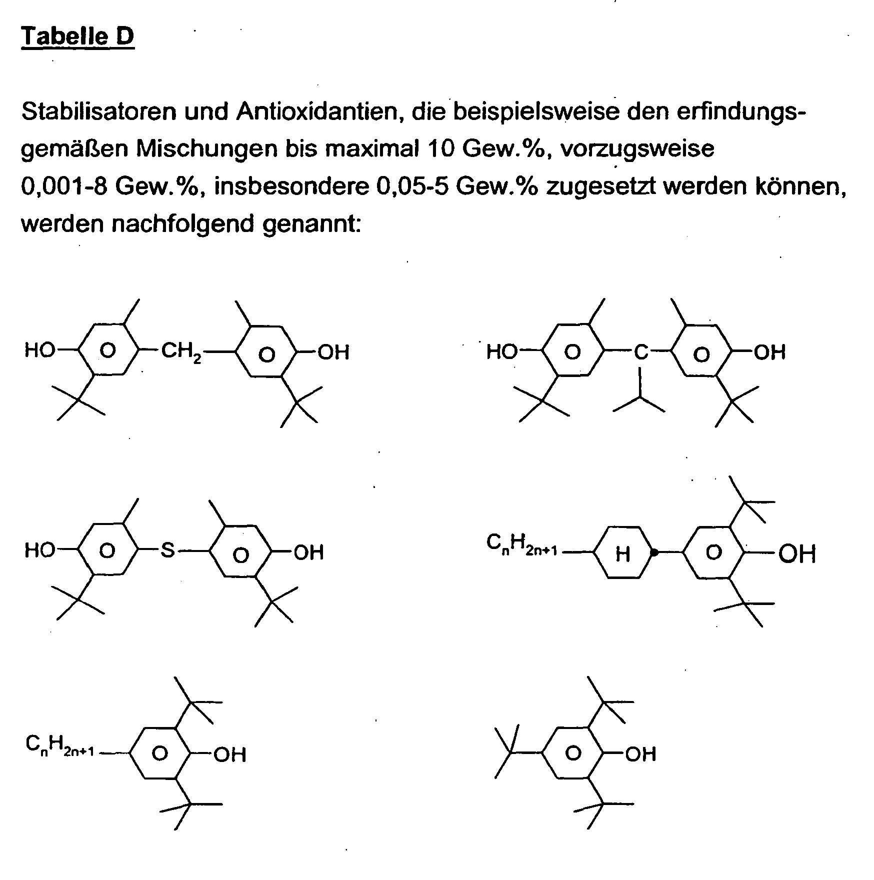

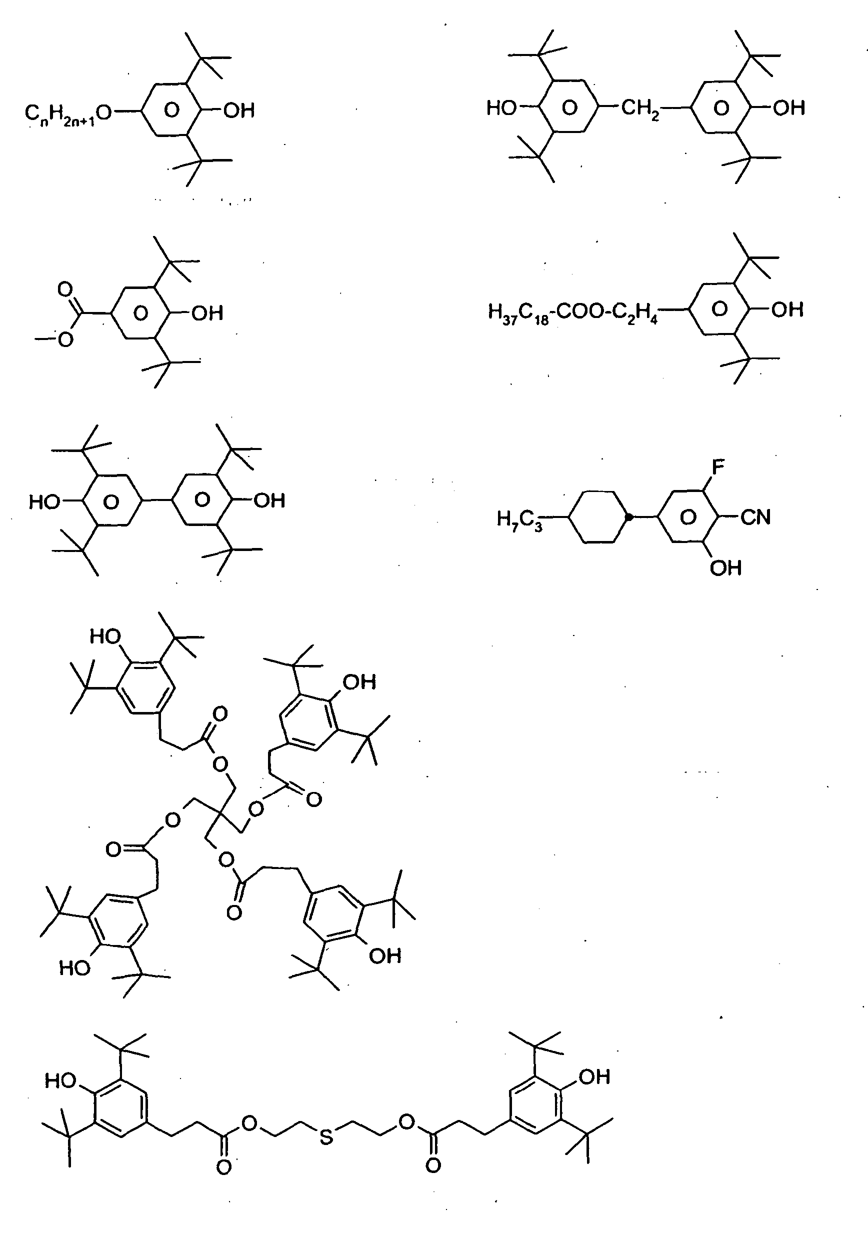

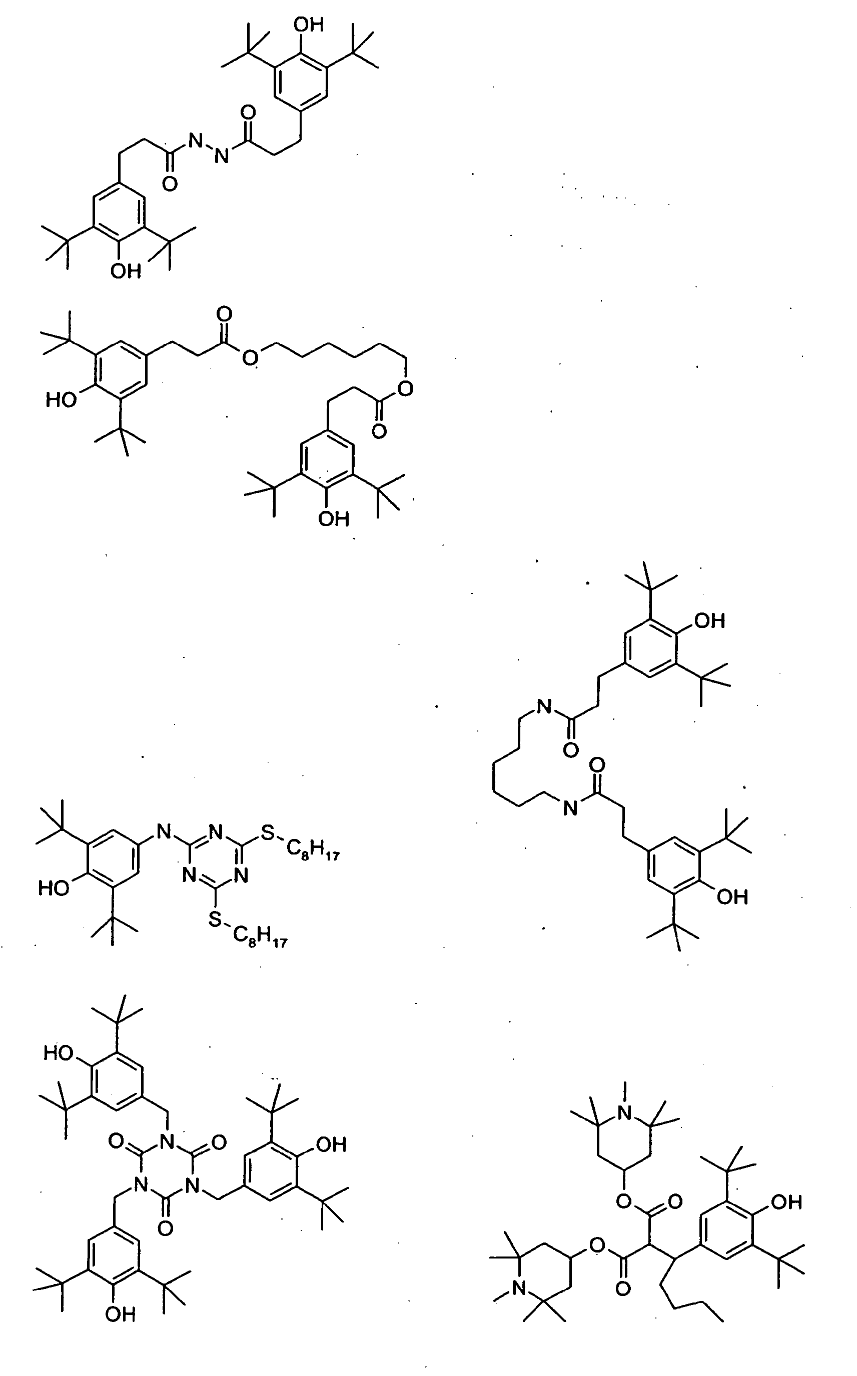

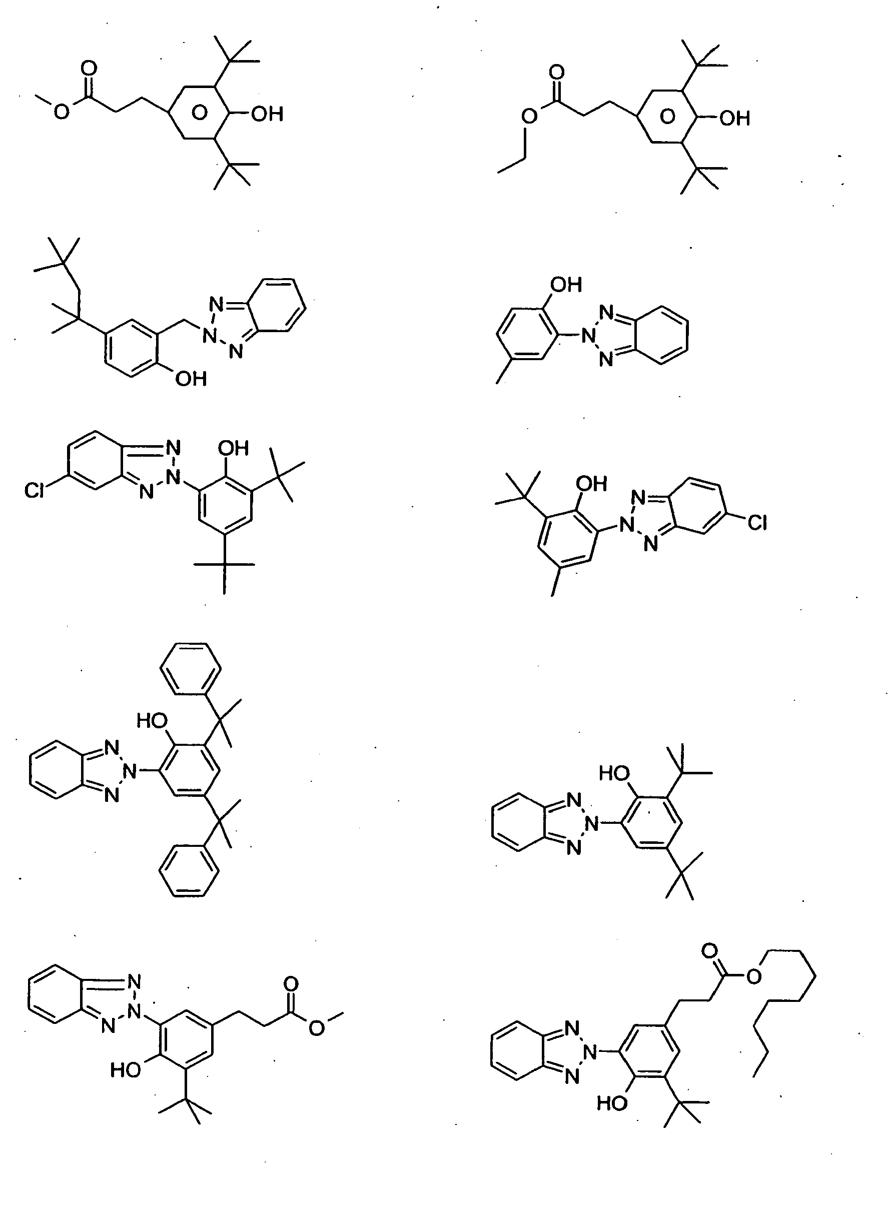

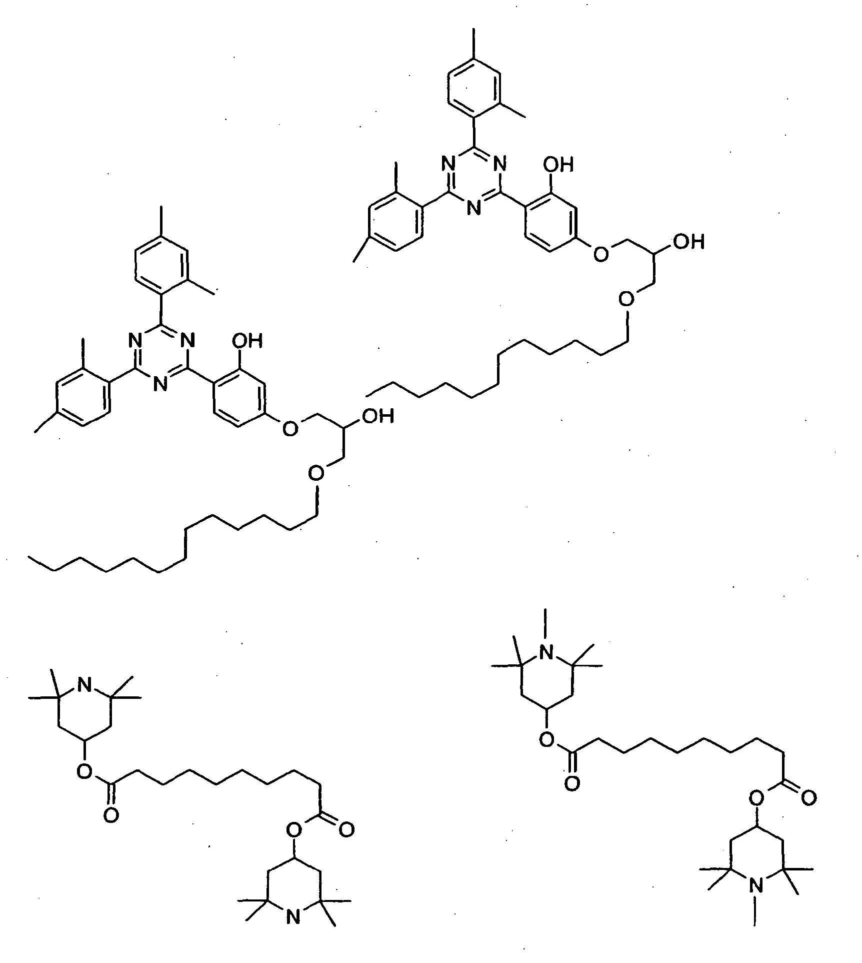

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), die Fließviskosität v₂₀ (mm²/sec) und die Rotationsviskosität γ₁ (mPa·s) werden jeweils bei 20 °C bestimmt. Alle physikalischen Eigenschaften werden nach "Merck Liquid Crystals, Physical Properties of Liquid Crystals", Status Nov. 1997, Merck KGaA, Deutschland bestimmt und gelten für eine Temperatur von 20 °C, sofern nicht explizit anders angegeben.

### Beispiel M1

| | | | |
|---|---|---|---|
| CCP-1 F.F.F | 8,00 % | Klärpunkt [°C]: | 85,9 |
| CCP-2F.F.F | 10,00 % | Δn [589 nm, 20 °C]: | 0,0776 |
| CCP-3F.F.F | 10,00 % | Δε [1 kHz, 20 °C]: | 11,5 |
| CCP-5F.F.F | 5,00 % | γ₁ [mPa·s, 20 °C]: | 160 |
| CCP-30CF₃.F | 10,00% | | |
| CCP-50CF₃.F | 10,00 % | | |
| PUQU-2-F | 4,00 % | | |
| PUQU-3-F | 5,00 % | | |
| CCOC-3-3 | 3,00 % | | |
| CCOC-4-3 | 4,00 % | | |
| CCOC-3-5 | 2,00 % | | |
| CCZU-2-F | 5,00 % | | |
| CCZU-3-F | 16,00 % | | |
| CCZU-5-F | 4,00 % | | |
| CCH-5CF₃ | 4,00% | | |

### Beispiel M2

| | | | |
|---|---|---|---|
| CCP-1 F.F.F | 8,00 % | Klärpunkt [°C]: | 86,6 |
| CCP-2F.F.F | 10,00 % | Δn [589 nm, 20 °C]: | 0,0776 |
| CCP-3F.F.F | 10,00 % | Δε [1 kHz, 20 °C]: | 11,5 |
| CCP-5F.F.F | 5,00 % | VHR (100 °C/5 min) [%]: | 98,0 |
| CCP-20CF₃.F | 12,00 % | [mPa·s, 20 °C]: | 167 |
| CCP-50CF₃.F | 12,00 % | | |
| PUQU-2-F | 5,00 % | | |
| PUQU-3-F | 5,00 % | | |
| CCOC-3-3 | 2,00 % | | |
| CCOC-4-3 | 3,00 % | | |
| CCOC-3-5 | 2,00 % | | |
| CWCQU-1-F | 8,00 % | | |
| CWCQU-2-F | 8,00 % | | |
| CWCQU-3-F | 8,00 % | | |
| CCH-5CF₃ | 2,00 % | | |

### Beispiel M3

| | | | |
|---|---|---|---|
| CCP-1F.F.F | 8,00 % | Klärpunkt [°C]: | 86,6 |
| CCP-2F.F.F | 10,00% | Δn [589 nm, 20°C]: | 0,0782 |
| CCP-3F.F.F | 10,00 % | Δε [1 kHz, 20 °C]: | 9,9 |
| CCP-5F.F.F | 5,00% | [mPa·s, 20 °C]: | 175 |
| CCP-20CF₃.F | 12,00 % | | |
| CCP-30CF₃.F | 12,00 % | | |
| CCP-50CF₃.F | 12,00% | | |
| PUQU-2-F | 5,00 % | | |
| PUQU-3-F | 4,00 % | | |
| CCOC-3-3 | 3,00 % | | |
| CCOC-4-3 | 4,00 % | | |
| CCOC-3-5 | 2,00 % | | |
| CCH-3CF₃ | 3,00 % | | |
| CCH-5CF₃ | 6,00 % | | |
| CCPC-33 | 4,00 % | | |

## Patentansprüche

1. Flüssigkristallines Medium auf der Basis eines Gemisches von polaren Verbindungen, **dadurch gekennzeichnet, dass** es eine oder mehrere Verbindungen der Formel I 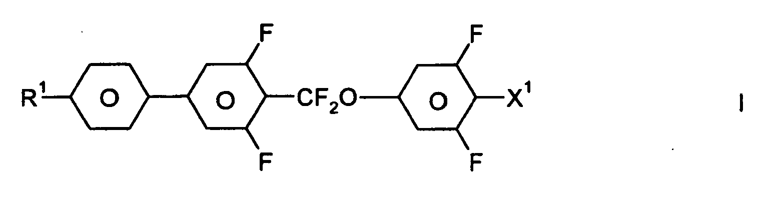 und mindestens eine Verbindung ausgewählt aus der Gruppe der Verbindungen der Formeln IA und IB 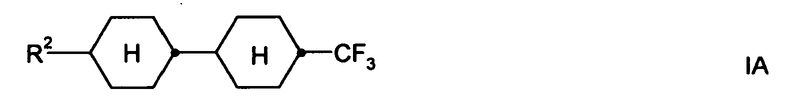 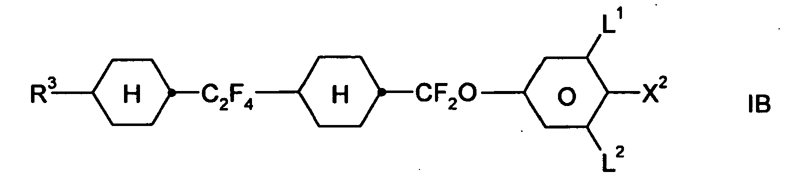 enthält,
worin
R¹, R² und R³ jeweils unabhängig voneinander einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CH=CH-, -O-, -CO-O- oder -O-CO- so ersetzt sein können, dass O-Atome nicht direkt miteinander verknüpft sind,
X¹ und X² jeweils unabhängig voneinander F, CI, CN, SF₅, halogenierter Alkylrest, halogenierter Alkenylrest, halogenierter Alkoxyrest oder halogenierter Alkenyloxyrest mit bis zu 6 C-Atomen,
L¹ und L² jeweils unabhängig voneinander H oder F
bedeuten.

2. Flüssigkristallines Medium nach Anspruch 1, **dadurch gekennzeichnet, dass** in der Verbindung der Formel I R¹ geradkettiges Alkyl bedeutet.

3. Flüssigkristallines Medium nach Anspruch 1 oder 2, **dadurch gekennzeichnet, dass** es eine, zwei oder mehr Verbindungen der Formeln 1-1 bis I-12 enthält, 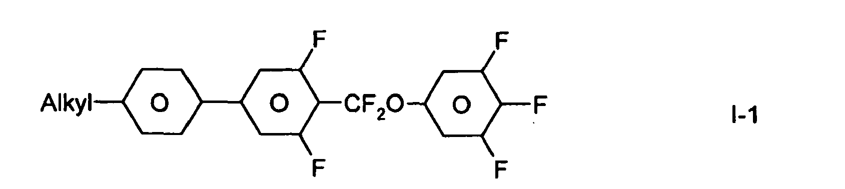 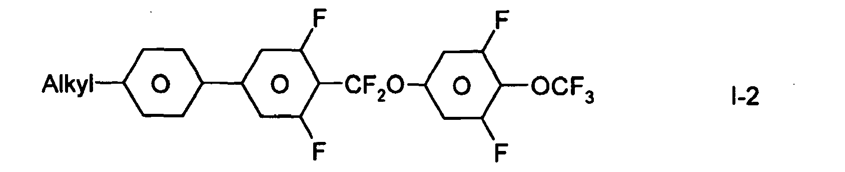 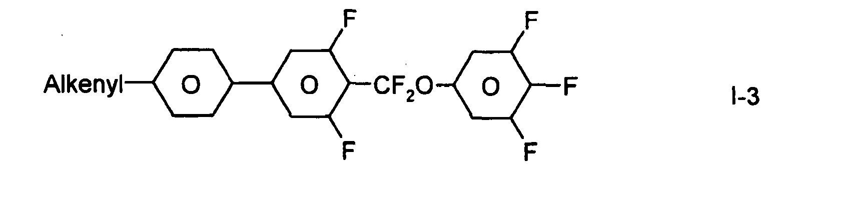 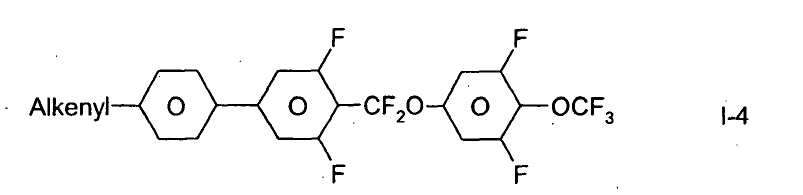 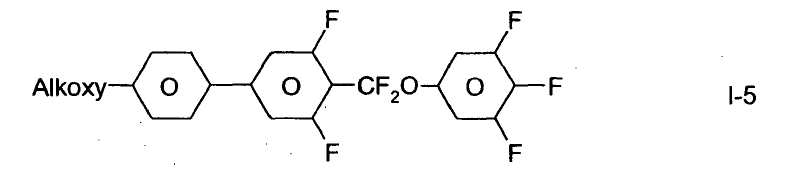 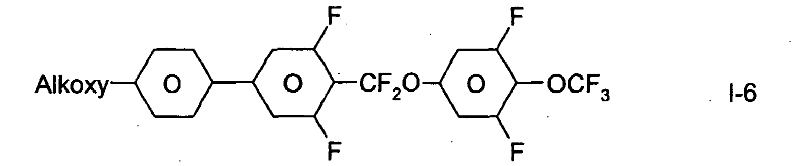 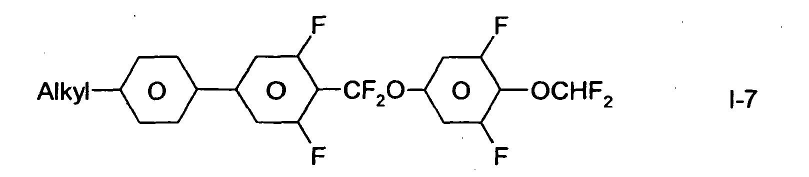 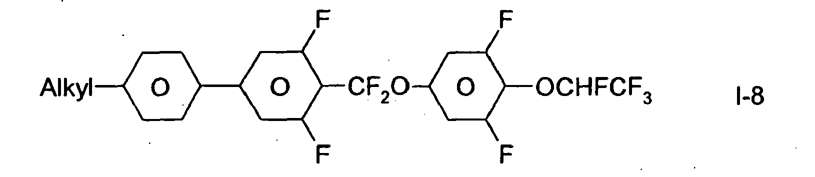 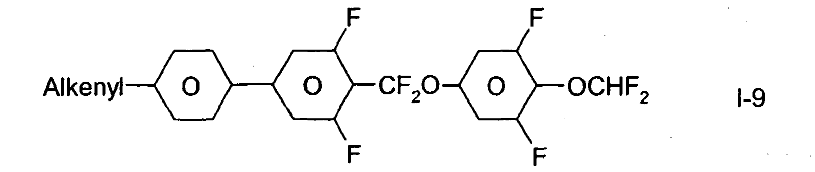 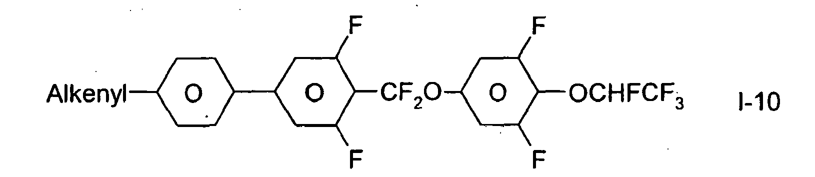 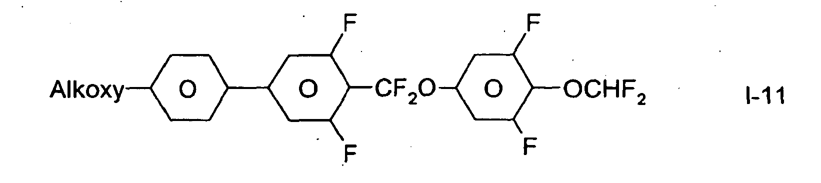 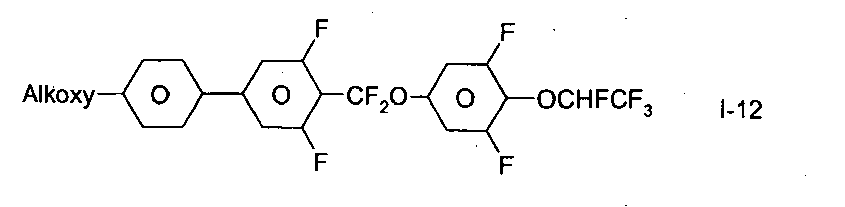 worin
Alkyl ein geradkettiger Alkylrest mit 1-7 C-Atomen,
Alkoxy ein geradkettiger Alkoxyrest mit 1-7 C-Atomen,
Alkenyl ein geradkettiger Alkenylrest mit 2-7 C-Atomen
ist.

4. Flüssigkristallines Medium nach einem oder mehreren der Ansprüche 1 bis 3, **dadurch gekennzeichnet, dass** es eine, zwei oder mehr Zweikern-Verbindungen der Formeln Z-1 bis Z-10, 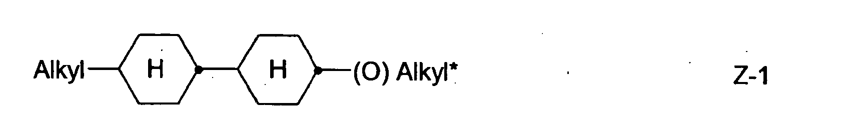 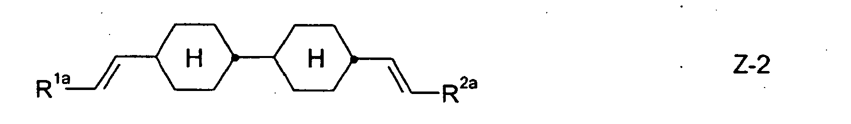 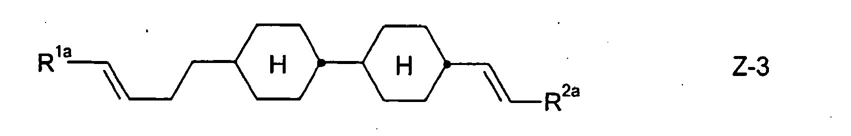 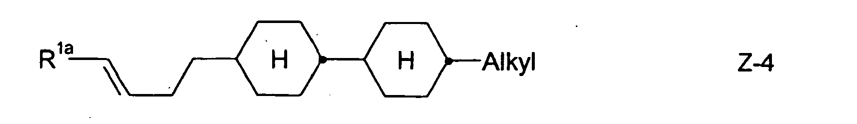 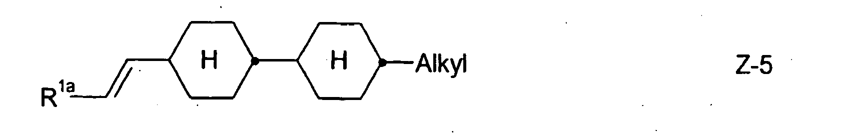 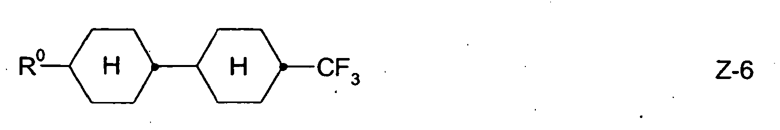 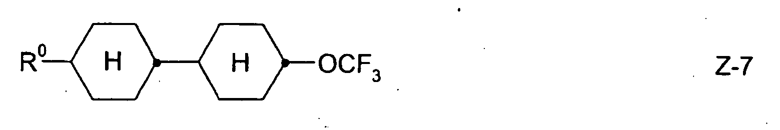 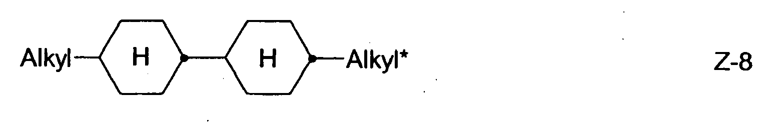 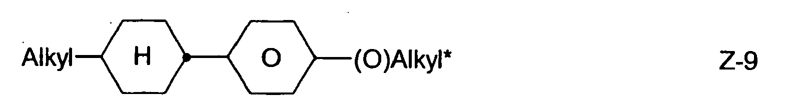 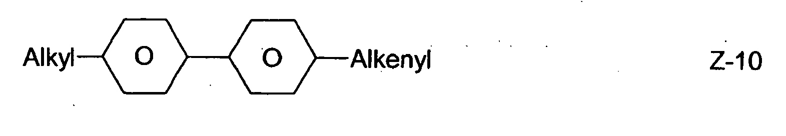 worin
R^{1a} und R^{2a} jeweils unabhängig voneinander H, CH₃, C₂H₅ oder n-C₃H₇,
Alkyl und Alkyl* jeweils unabhängig voneinander einen geradkettigen oder Alkylrest mit 1-7 C-Atomen, und
Alkenyl einen geradkettigen Alkenylrest mit 2-7 C-Atomen
bedeuten,
enthält.

5. Flüssigkristallines Medium nach einem oder mehreren der Ansprüche 1 bis 4, **dadurch gekennzeichnet, dass** es eine oder mehrere Verbindungen der Formeln Q-1 bis Q-9, 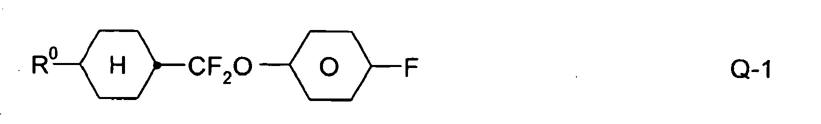 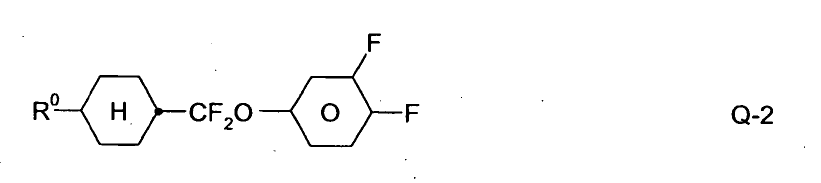 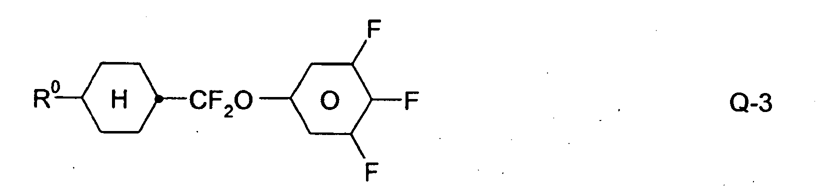 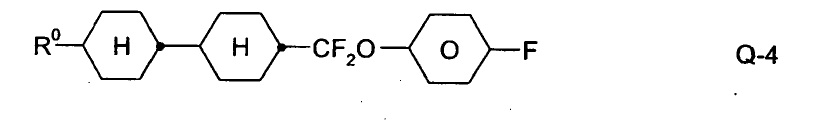 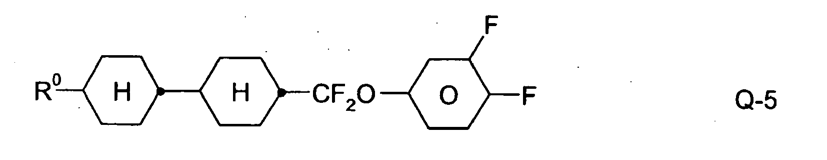 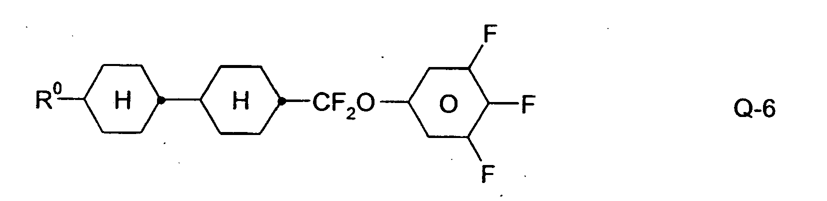 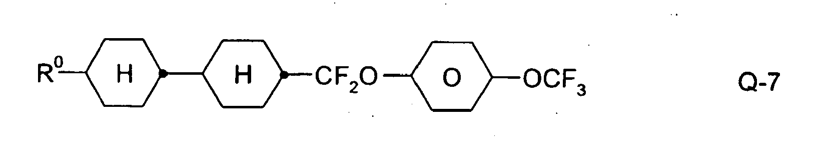 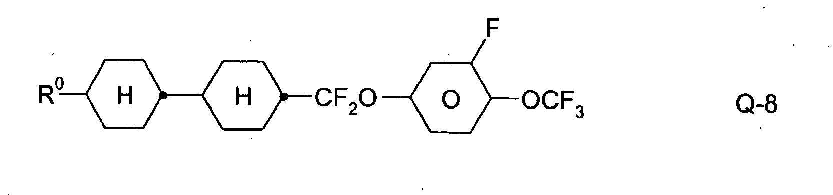 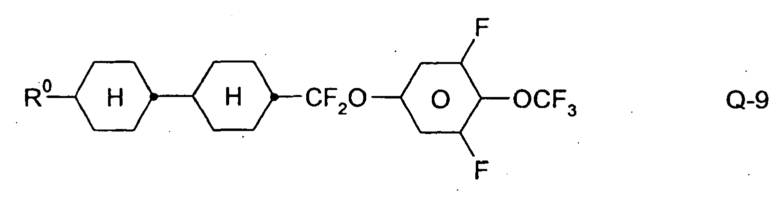 worin
R⁰ n-Alkyl, Oxaalkyl, Alkoxy, Alkenyloxy, Fluoralkyl oder Alkenyl mit jeweils bis zu 9 C-Atomen,
bedeutet,
enthält.

6. Flüssigkristallines Medium nach einem oder mehreren der Ansprüche 1 bis 5, **dadurch gekennzeichnet, dass** es zusätzlich eine oder mehrere Verbindungen ausgewählt aus der Gruppe bestehend aus den allgemeinen Formeln II, III, IV, V und VI enthält, 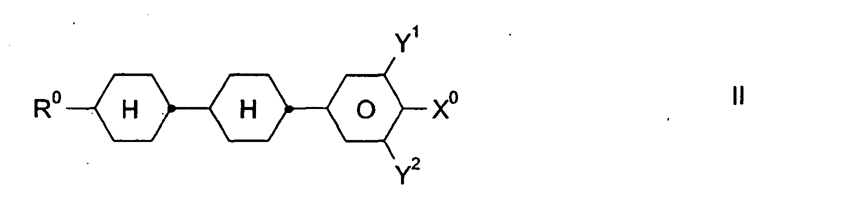 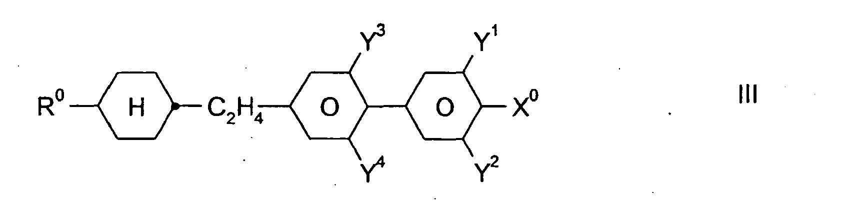 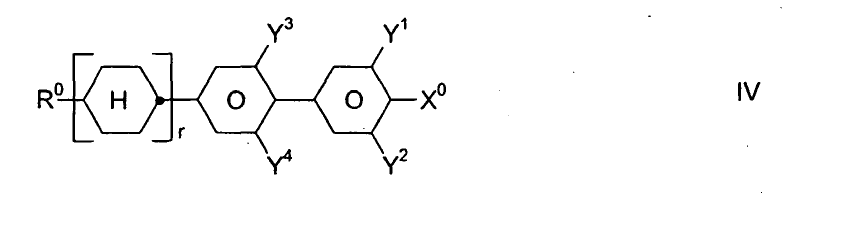 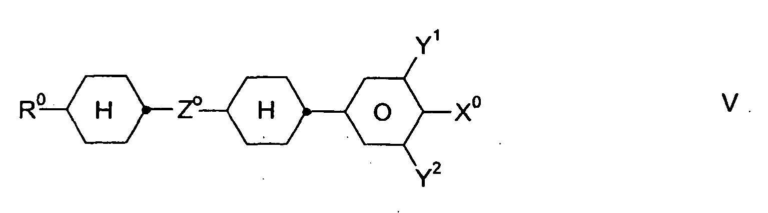 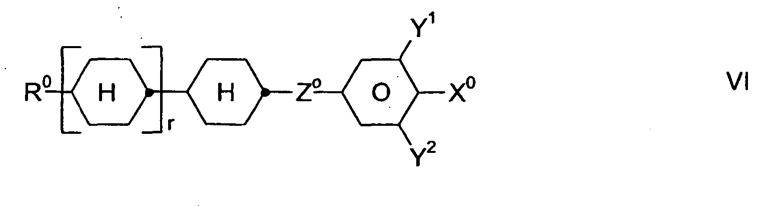 worin die einzelnen Reste die folgenden Bedeutungen haben:
R⁰ n-Alkyl, Oxaalkyl, Alkoxy, Alkenyloxy, Fluoralkyl oder Alkenyl mit jeweils bis zu 9 C-Atomen,
X⁰ F, Cl, halogeniertes Alkyl, halogeniertes Alkenyl, halogeniertes Alkenyloxy oder halogeniertes Alkoxy mit bis zu 6 C-Atomen,
Z⁰ -C₂F₄-, -CF=CF-, -C₂H₄-, -(CH₂)₄-, -OCH₂-, -CH₂O-, -CF₂O- oder -OCF₂-,
Y¹ bis Y⁴ jeweils unabhängig voneinander H oder F,
r 0 oder 1.

7. Flüssigkristallines Medium nach Anspruch 6, **dadurch gekennzeichnet, dass** der Anteil an Verbindungen der Formeln I bis VI zusammen im Gesamtgemisch mindestens 50 Gew.% beträgt.

8. Flüssigkristallines Medium nach einem oder mehreren der Ansprüche 1 bis 7, **dadurch gekennzeichnet, dass** es zusätzlich eine oder mehrere Verbindungen der Formeln K-1 bis K-27, 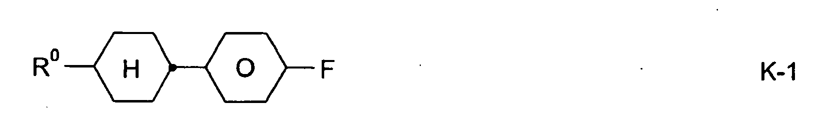 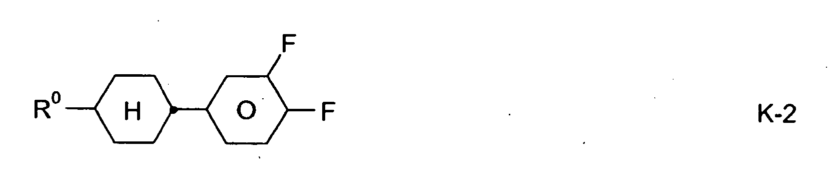 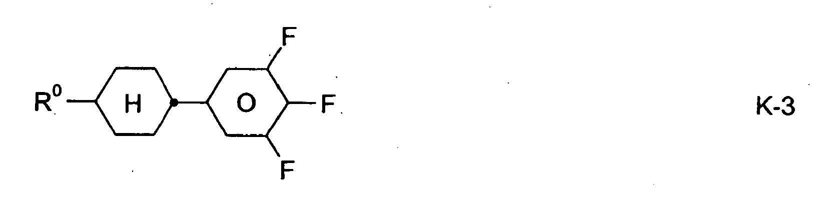 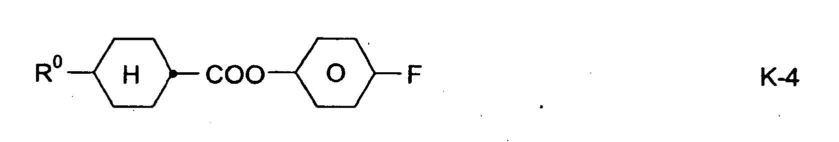 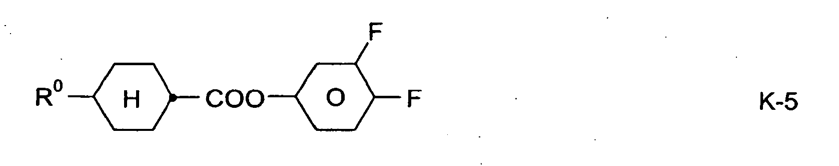 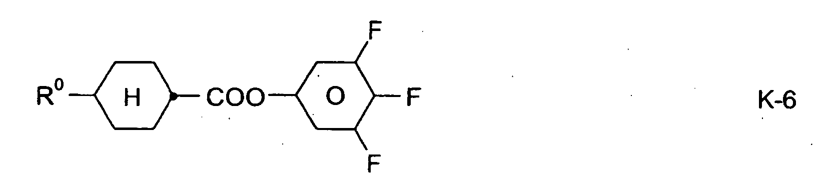 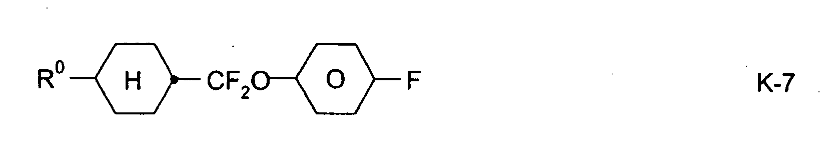 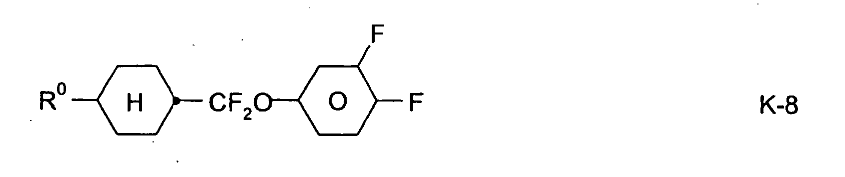 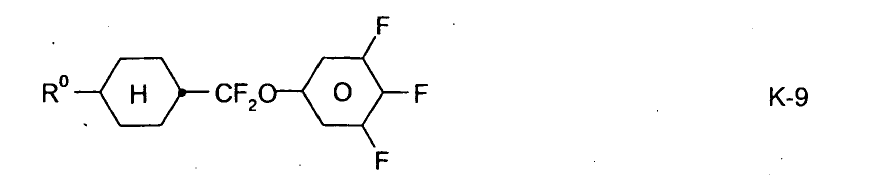 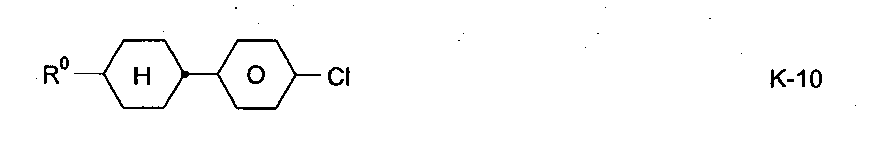 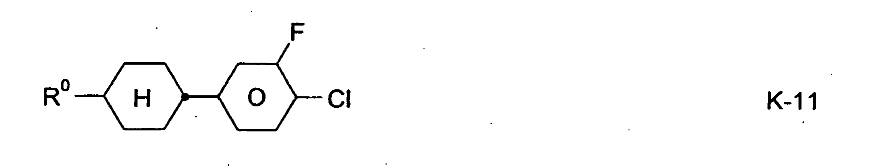 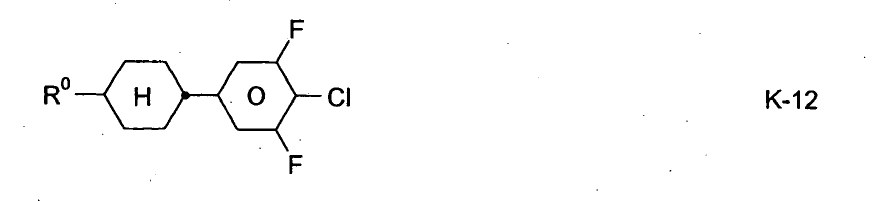 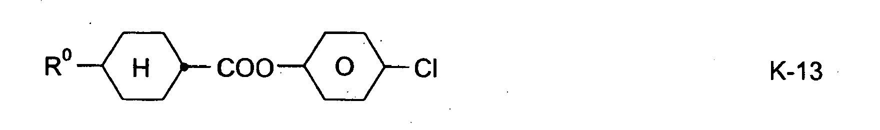 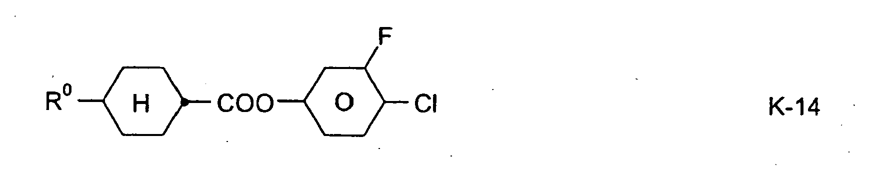 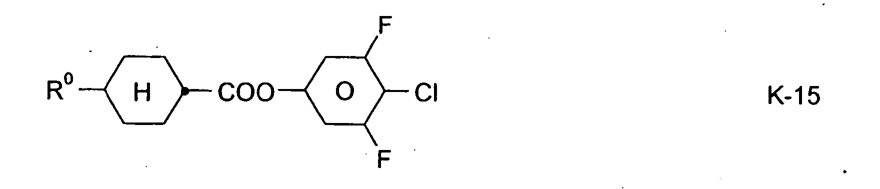 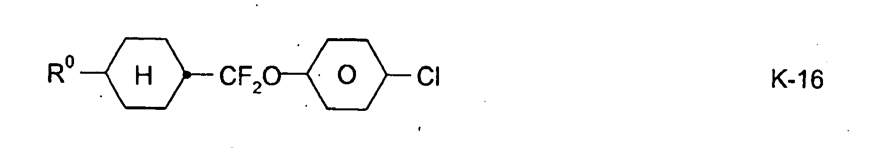 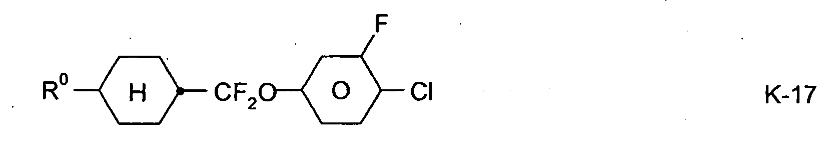 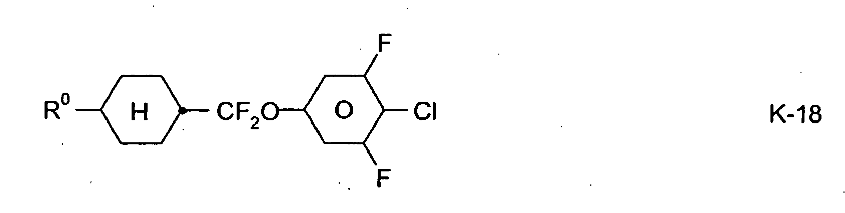 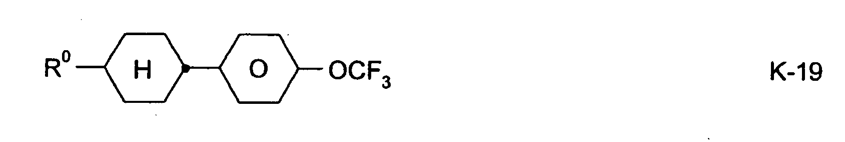 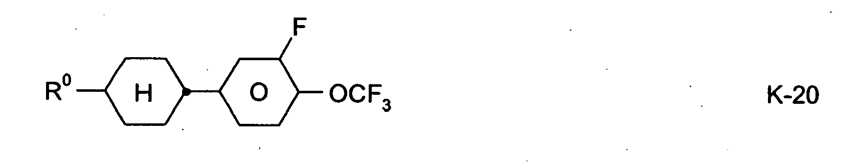 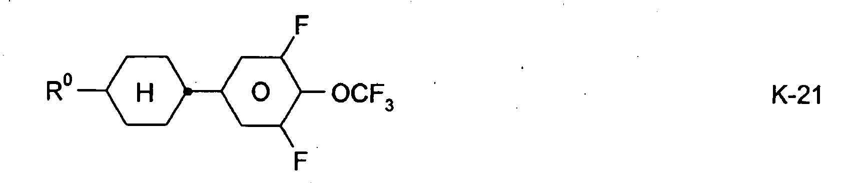 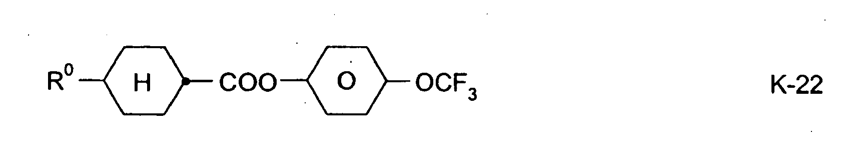 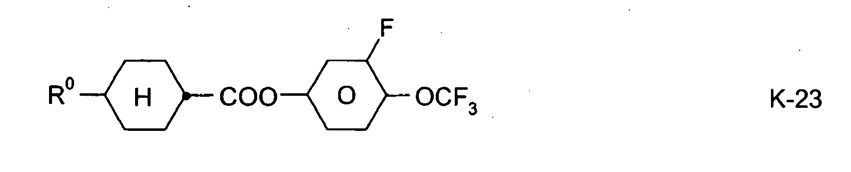 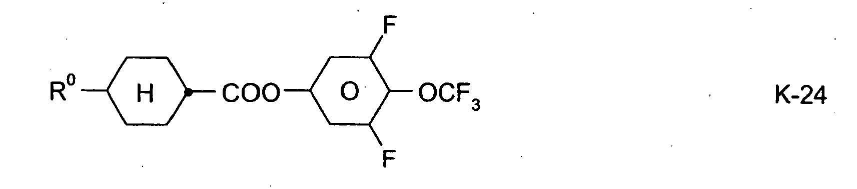 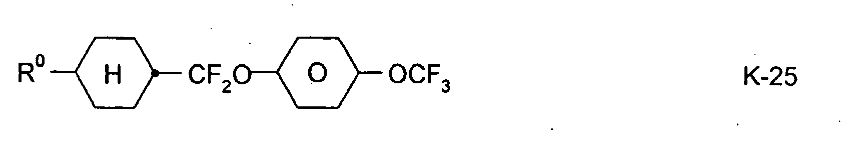 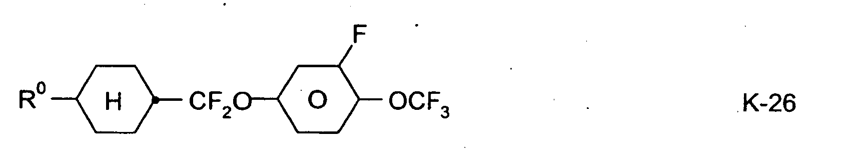 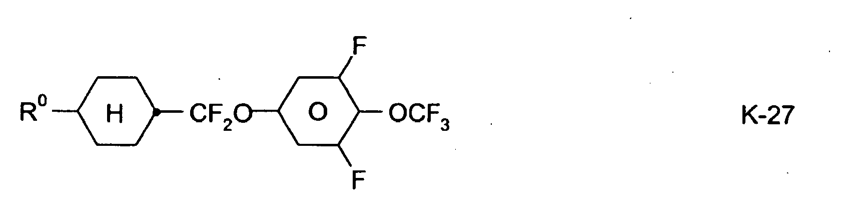 worin R⁰, die in Anspruch 6 angegebenen Bedeutungen hat,
enthält.

9. Flüssigkristallines Medium nach einem oder mehreren der Ansprüche 1 bis 8, **dadurch gekennzeichnet, dass** es eine oder mehrere Verbindungen der Formeln IIa bis IIg, 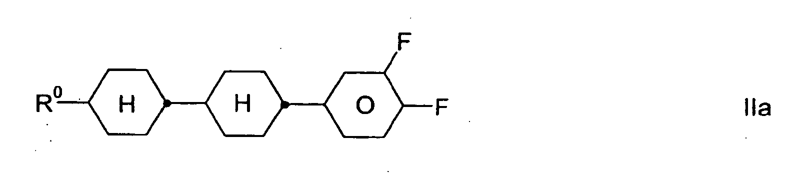 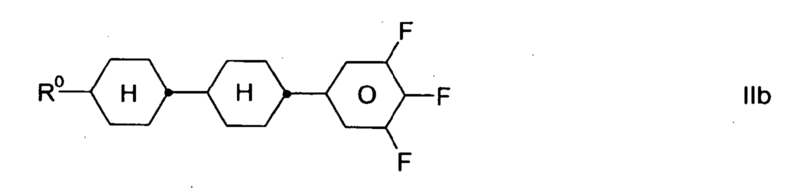 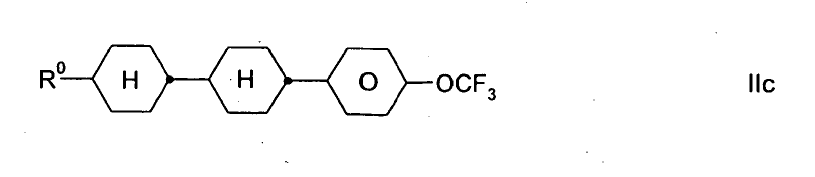 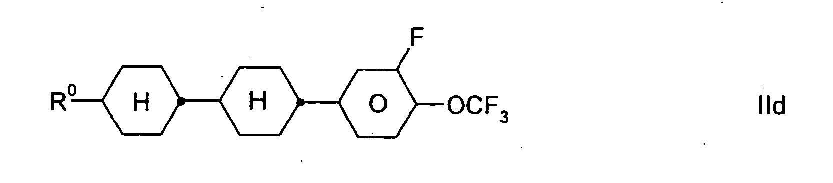 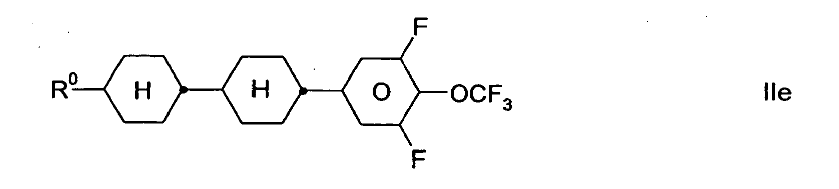 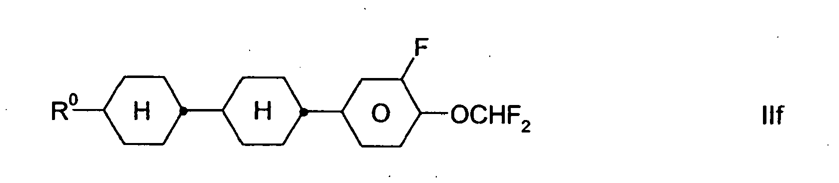 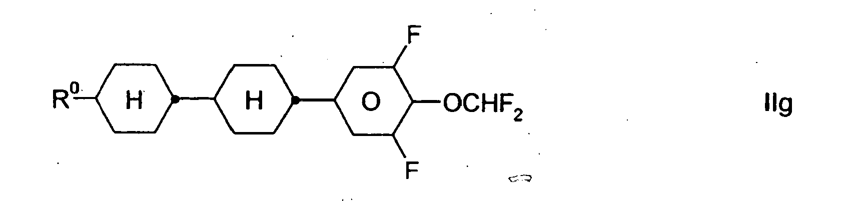 worin R⁰ die in Anspruch 6 angegebenen Bedeutungen hat,
enthält.

10. Flüssigkristallines Medium nach einem oder mehreren der Ansprüche 1 bis 9, **dadurch gekennzeichnet, dass** es eine oder mehrere Verbindungen der Formeln O1 und 02, 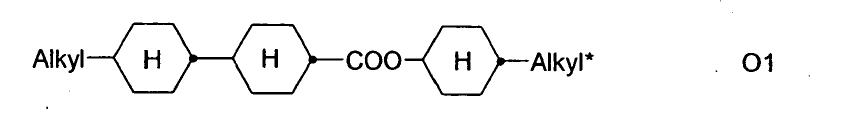 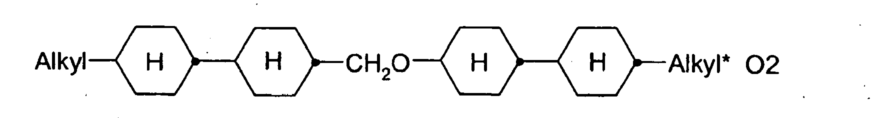 worin
Alkyl und Alkyl* jeweils unabhängig voneinander eine geradkettige Alkylgruppe mit 1-7 Kohlenstoffatomen bedeuten,
enthält.

11. Flüssigkristallines Medium nach einem oder mehreren der Ansprüche 1 bis 10, **dadurch gekennzeichnet, dass** der Anteil an Verbindungen der Formel I im Gesamtgemisch 0,5 bis 30 Gew.% beträgt.

12. Verfahren zur Herstellung eines flüssigkristallinen Mediums nach einem oder mehreren der Ansprüche 1 bis 11, **dadurch gekennzeichnet, dass** man eine oder mehrere Verbindungen der Formel I mit einer oder mehreren der Verbindungen der Formeln IA und/oder IB und optional mit weiteren mesogenen Verbindungen mischt.

13. Verwendung des flüssigkristallinen Mediums nach einem oder mehreren der Ansprüche 1 bis 11 für elektrooptische Zwecke.

14. Elektrooptische Flüssigkristallanzeige enthaltend ein flüssigkristallines Medium nach einem oder mehreren der Ansprüche 1 bis 11.

## Claims

1. Liquid-crystalline medium based on a mixture of polar compounds, **characterised in that** it comprises one or more compounds of the formula I 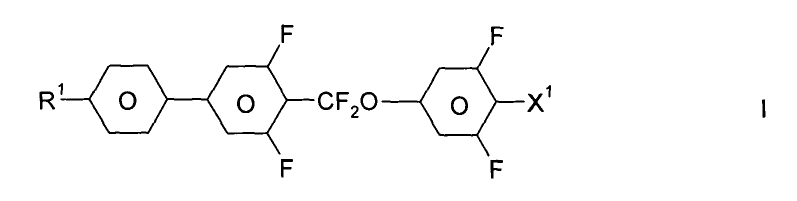 and at least one compound selected from the group of the compounds of the formulae IA and IB 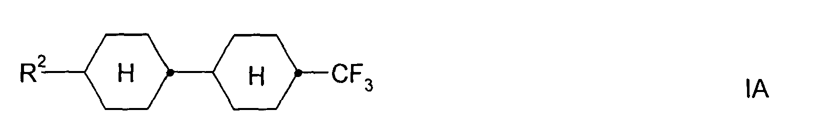 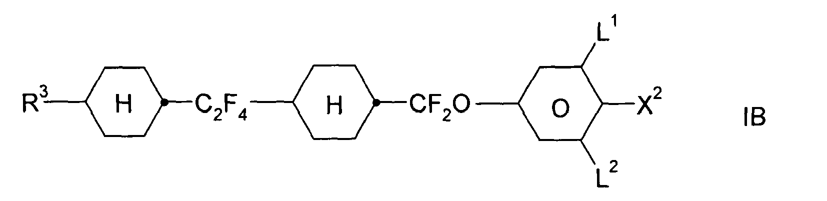 in which
R¹, R² and R³ each, independently of one another, denote a halo- genated or unsubstituted alkyl or alkoxy radical hav- ing 1 to 15 C atoms, where, in addition, one or more CH₂ groups in these radicals may each be replaced, independently of one another, by -C≡C-, -CH=CH-, -O-, -CO-O- or -O-CO- in such a way that O atoms are not linked directly to one another,
X¹ and X² each, independently of one another, denote F, Cl, CN, SF₅, a halogenated alkyl radical, a halogenated alkenyl radical, a halogenated alkoxy radical or a halogenated alkenyloxy radical having up to 6 C atoms,
L¹ and L² each, independently of one another, denote H or F.

2. Liquid-crystalline medium according to Claim 1, **characterised in that** R¹ in the compound of the formula I denotes straight-chain alkyl.

3. Liquid-crystalline medium according to Claim 1 or 2, **characterised in that** it comprises one, two or more compounds of the formulae I-1 to I-12, 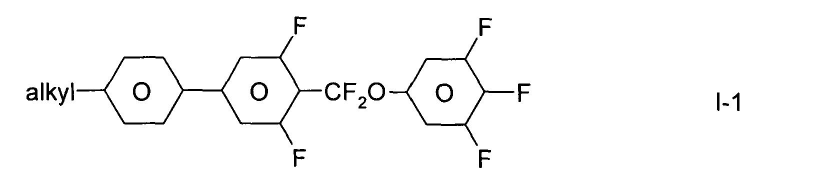 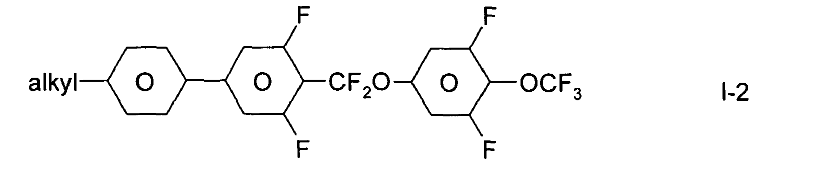 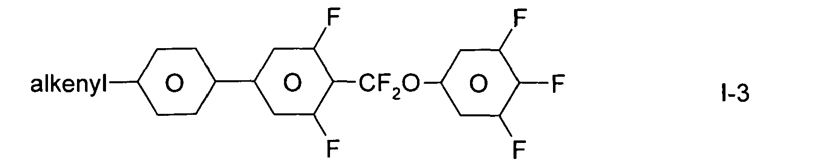 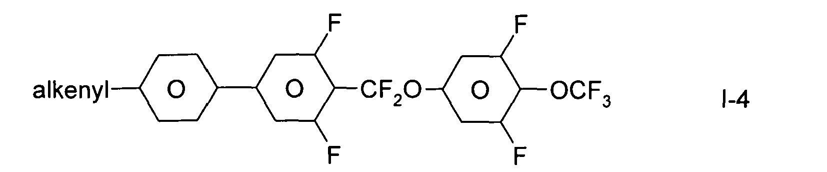 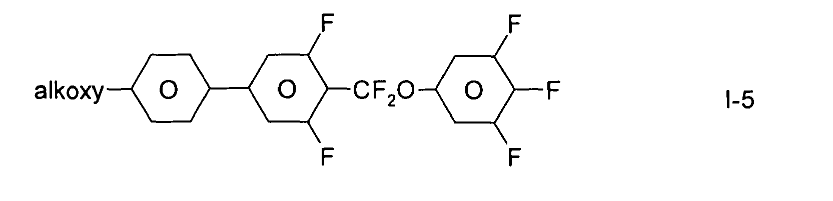 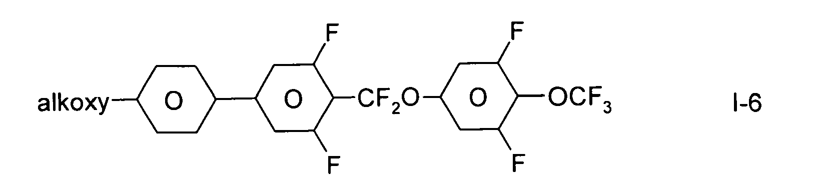 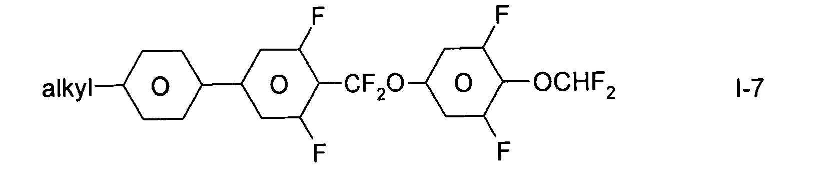 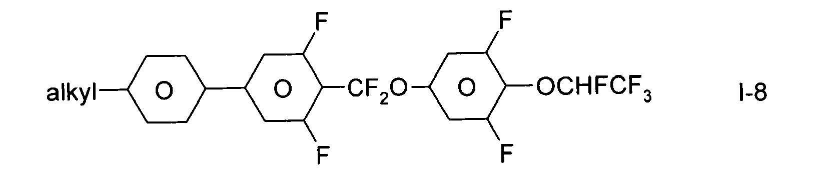 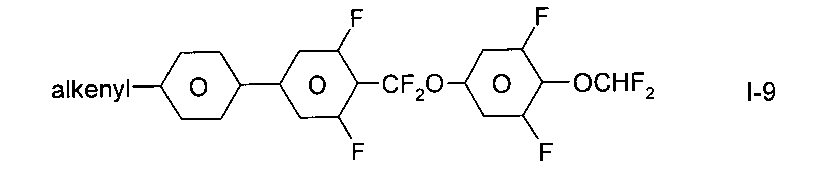 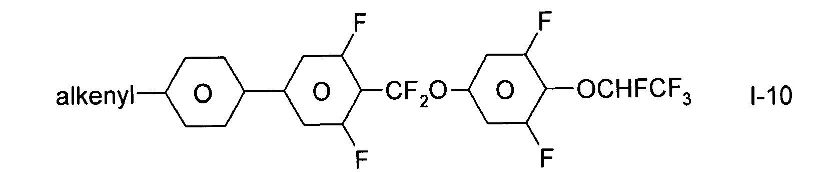 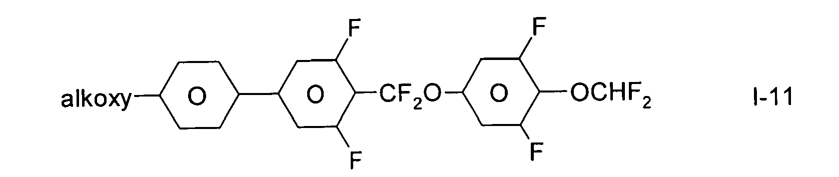 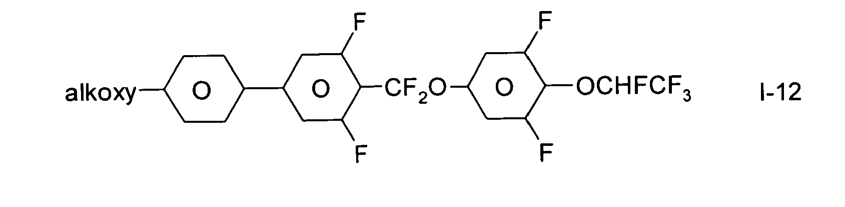 in which
alkyl is a straight-chain alkyl radical having 1-7 C atoms,
alkoxy is a straight-chain alkoxy radical having 1-7 C atoms,
alkenyl is a straight-chain alkenyl radical having 2-7 C atoms.

4. Liquid-crystalline medium according to one or more of Claims 1 to 3, **characterised in that** it comprises one, two or more bicyclic compounds of the formulae Z-1 to Z-1 0, 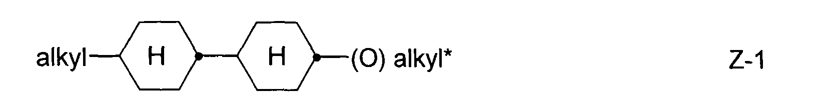 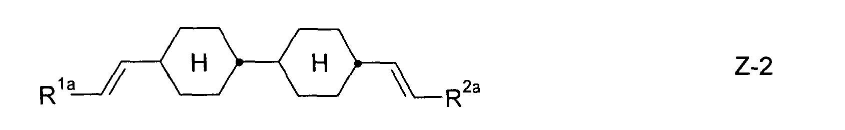 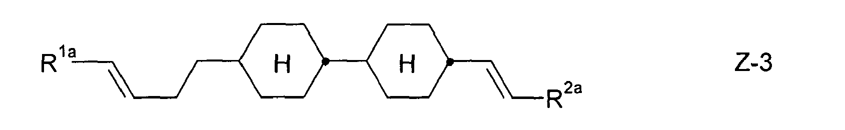 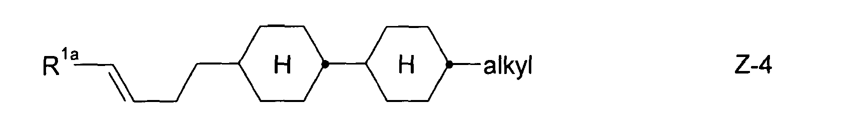 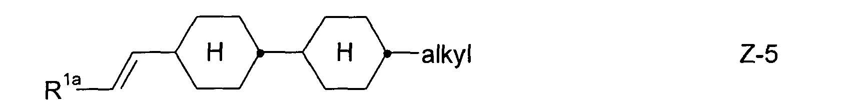 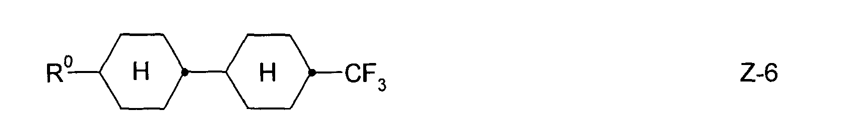 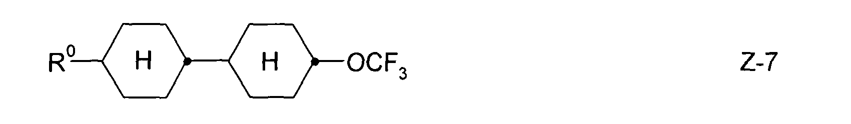 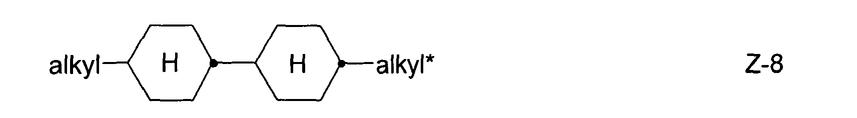 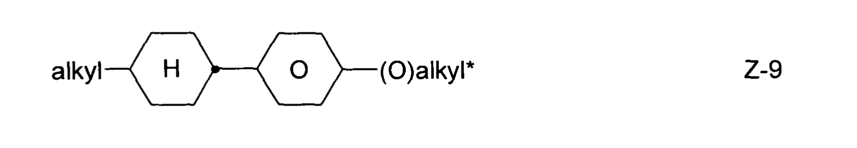 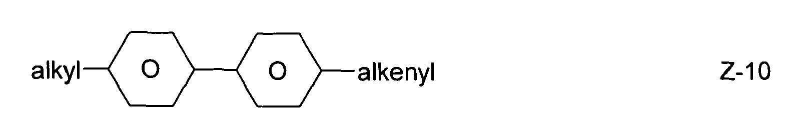 in which
R^{1a} and R^{2a} each, independently of one another, denote H, CH₃, C₂H₅ or n-C₃H₇,
alkyl and alkyl* each, independently of one another, denote a straight-chain alkyl radical having 1-7 C atoms, and
alkenyl denotes a straight-chain alkenyl radical having 2-7 C atoms.

5. Liquid-crystalline medium according to one or more of Claims 1 to 4, **characterised in that** it comprises one or more compounds of the formulae Q-1 to Q-9, 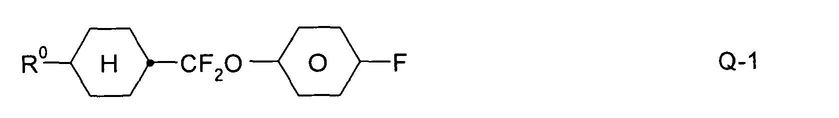 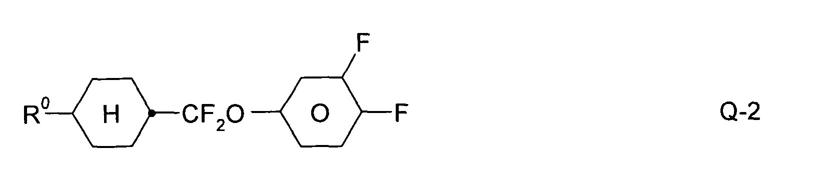 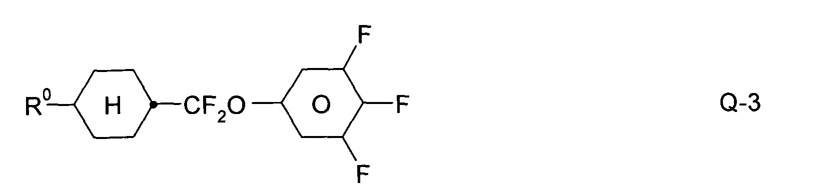 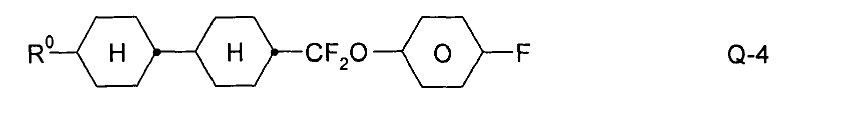 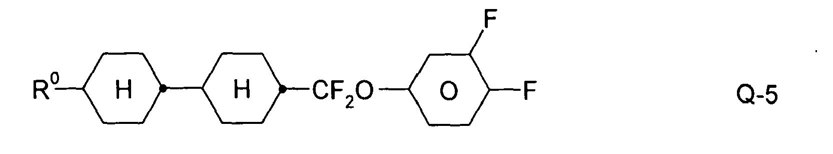 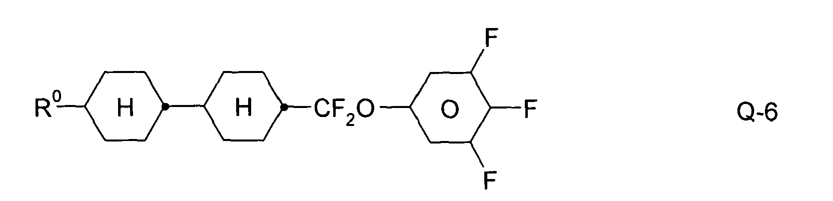 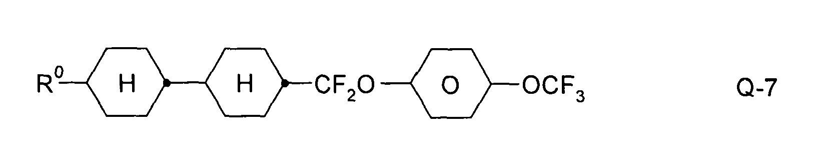 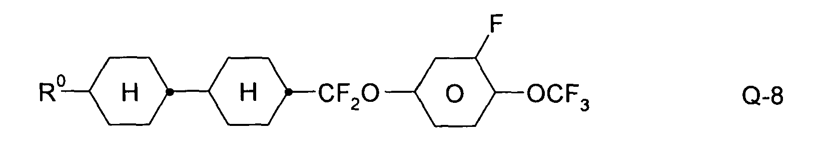 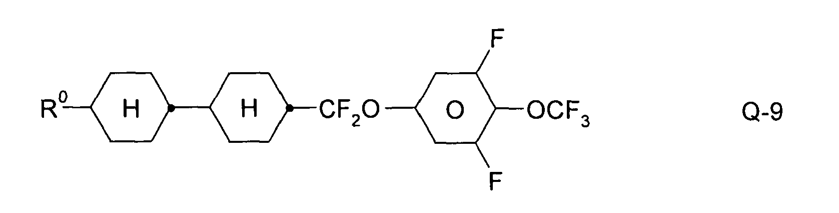 in which
R⁰ denotes n-alkyl, oxaalkyl, alkoxy, alkenyloxy, fluoroalkyl or alkenyl, each having up to 9 C atoms.

6. Liquid-crystalline medium according to one or more of Claims 1 to 5, **characterised in that** it additionally comprises one or more compounds selected from the group consisting of the general formulae II, III, IV, V and VI, 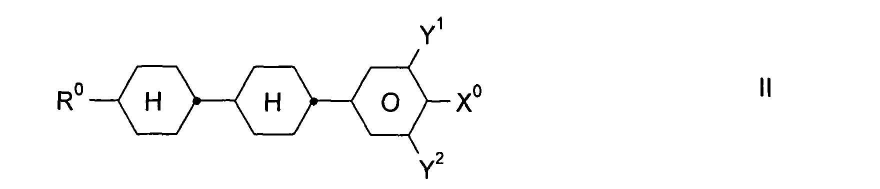 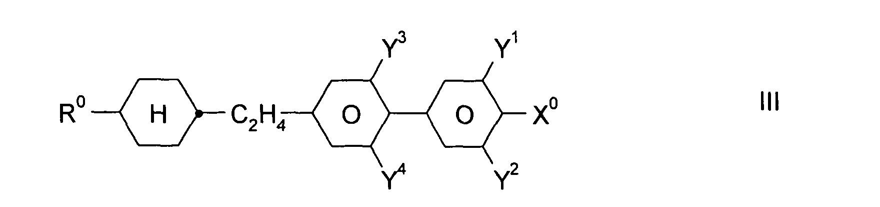 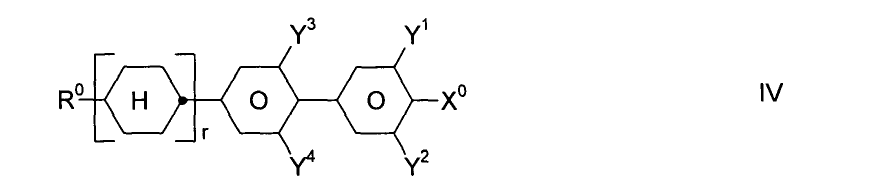 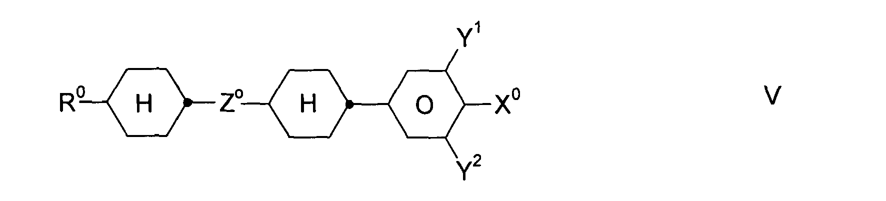 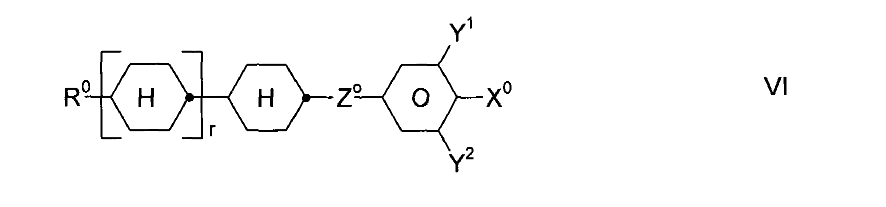 in which the individual radicals have the following meanings:
R⁰ denotes n-alkyl, oxaalkyl, alkoxy, alkenyloxy, fluoroalkyl or alkenyl, each having up to 9 C atoms,
X⁰ denotes F, Cl, halogenated alkyl, halogenated alkenyl, halogenated alkenyloxy or halogenated alkoxy having up to 6 C atoms,
Z⁰ denotes -C₂F₄-, -CF=CF-, -C₂H₄-, -(CH₂)₄-, -OCH₂-, -CH₂O-, -CF₂O- or -OCF₂-,
Y¹ to Y⁴ each, independently of one another, denote H or F,
r denotes 0 or 1.

7. Liquid-crystalline medium according to Claim 6, **characterised in that** the proportion of compounds of the formulae I to VI together in the mixture as a whole is at least 50% by weight.

8. Liquid-crystalline medium according to one or more of Claims 1 to 7, **characterised in that** it additionally comprises one or more compounds of the formulae K-1 to K-27, 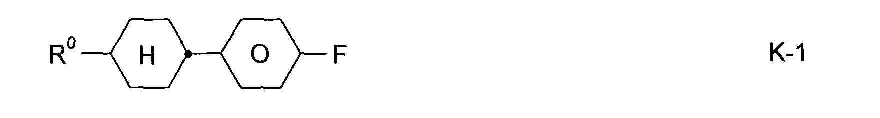 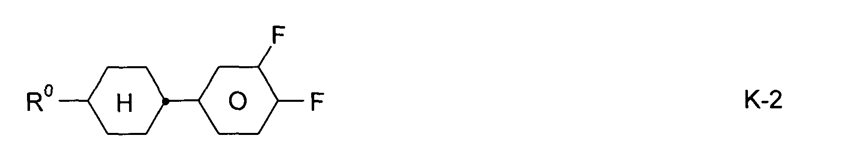 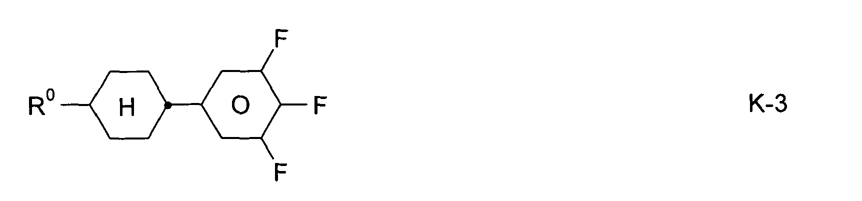 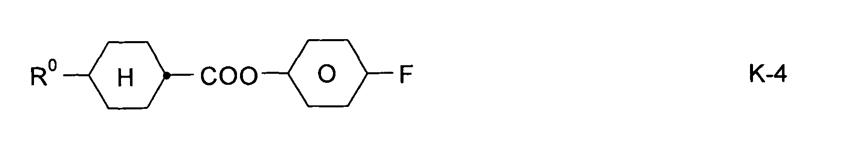 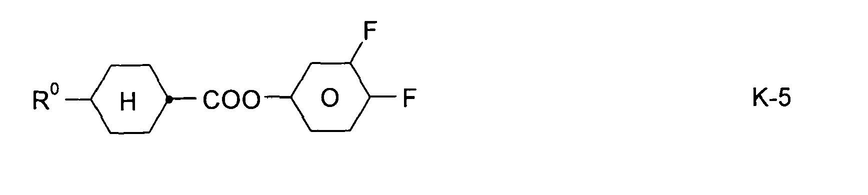 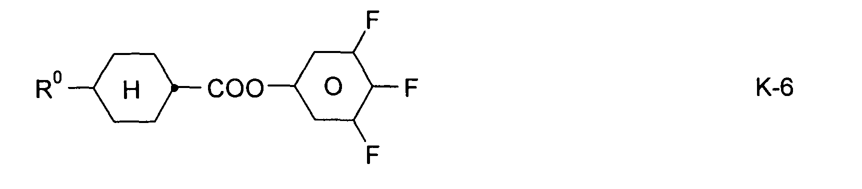 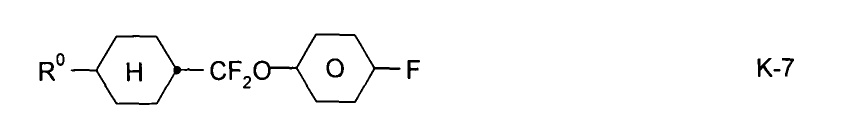 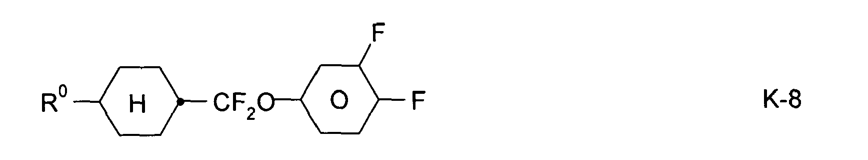 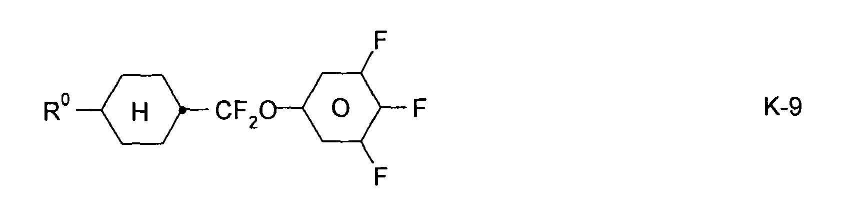 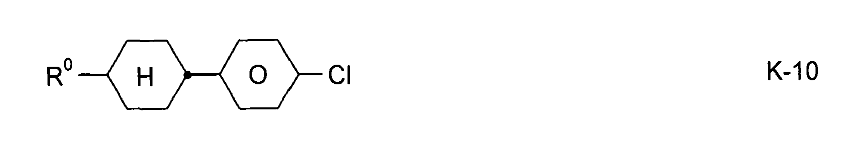 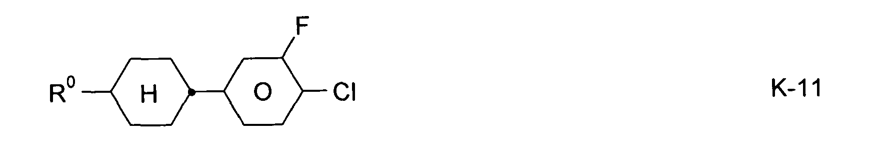 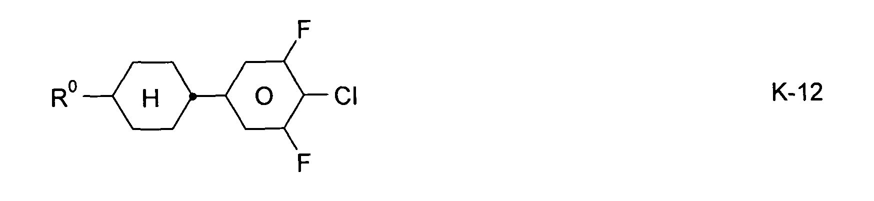 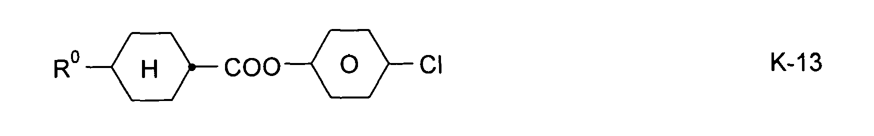 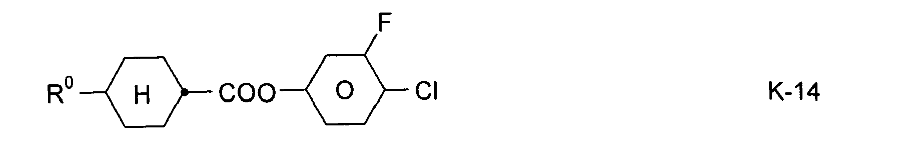 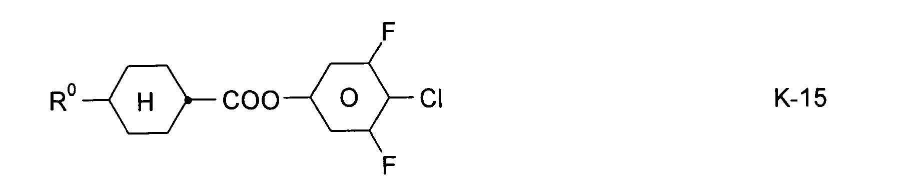 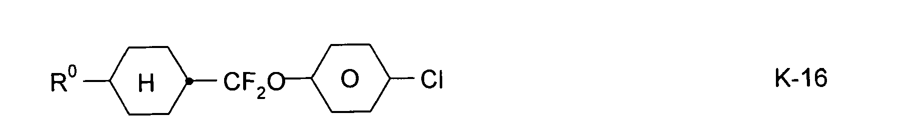 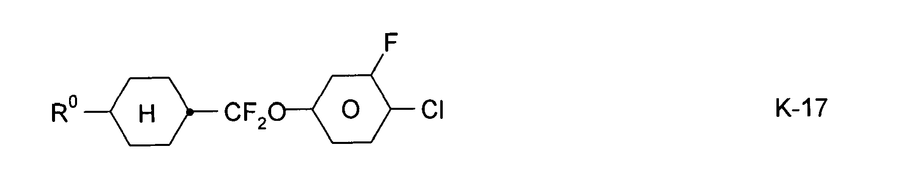 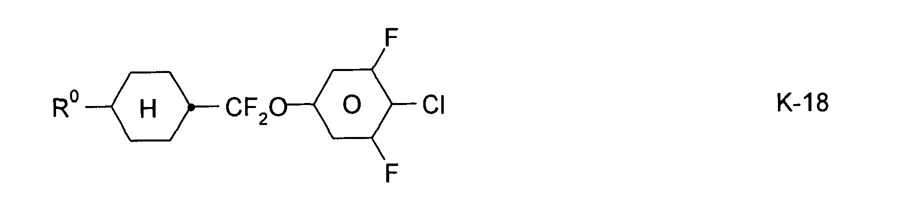 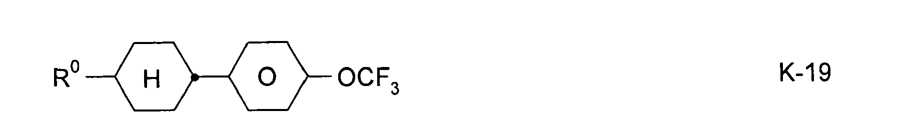 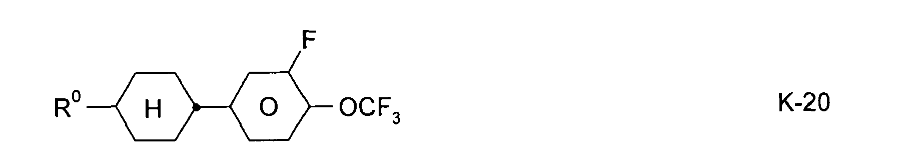 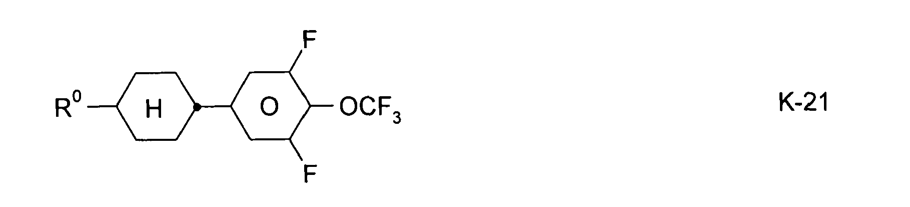 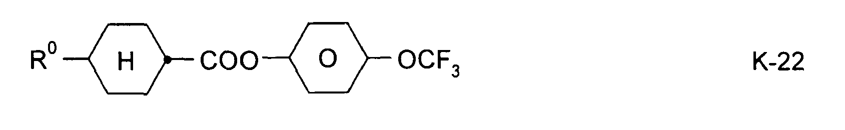 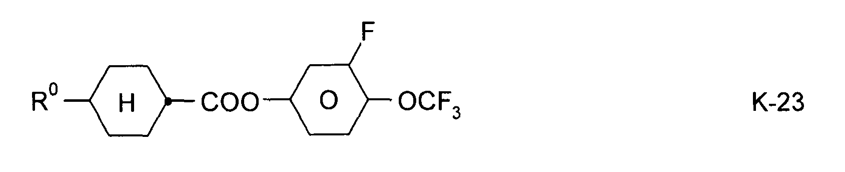 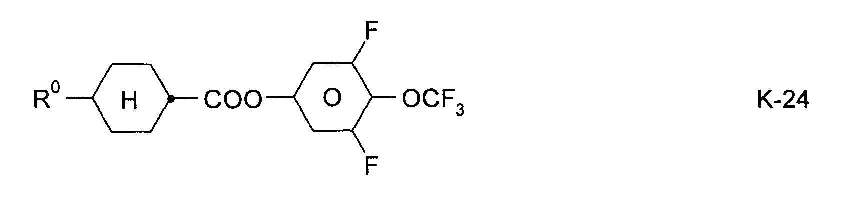 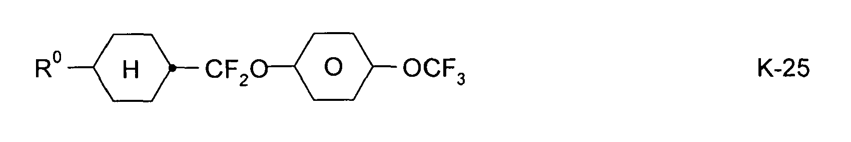 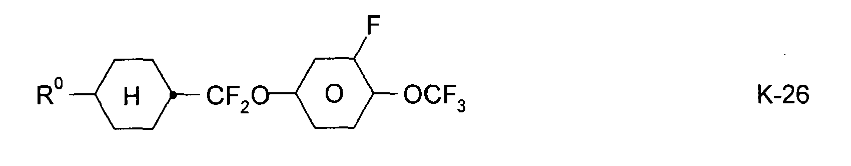 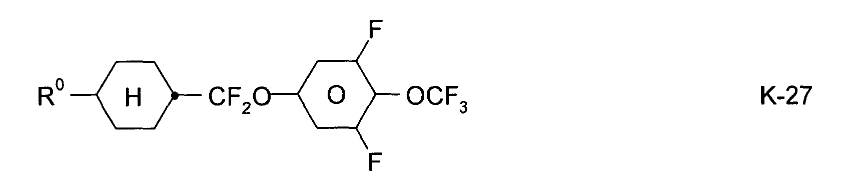 in which R⁰ has the meanings indicated in Claim 6.

9. Liquid-crystalline medium according to one or more of Claims 1 to 8, **characterised in that** it comprises one or more compounds of the formulae IIa to IIg, 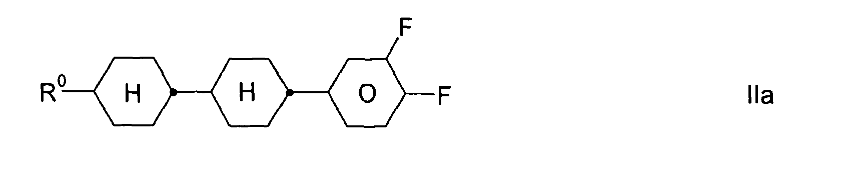 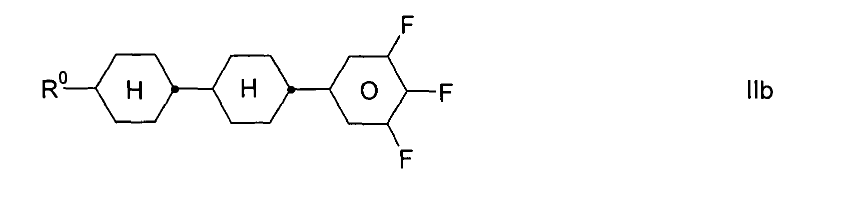 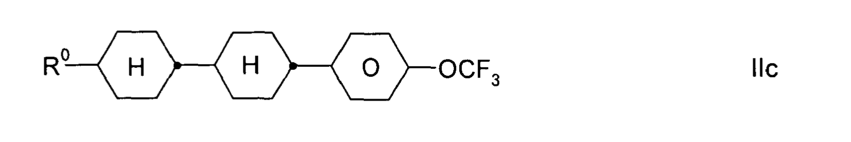 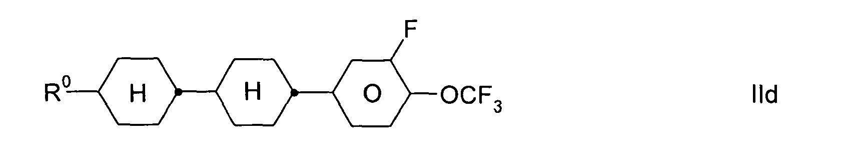 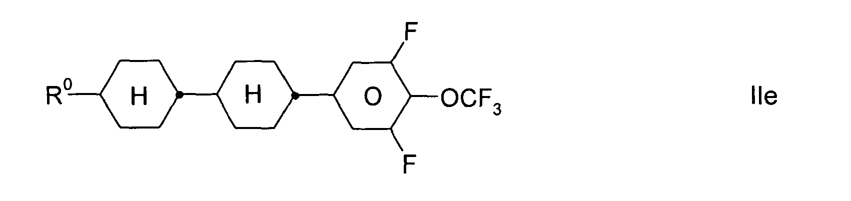 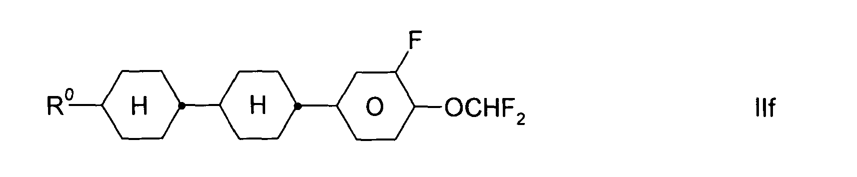 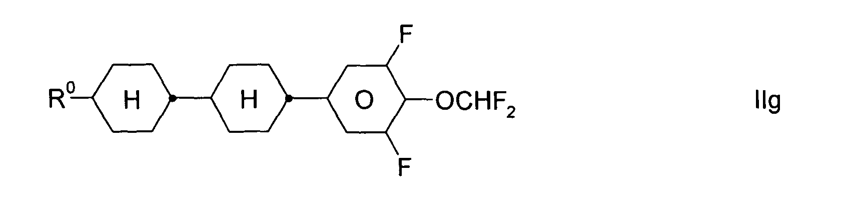 in which R⁰ has the meanings indicated in Claim 6.

10. Liquid-crystalline medium according to one or more of Claims 1 to 9, **characterised in that** it comprises one or more compounds of the formulae 01 and 02, 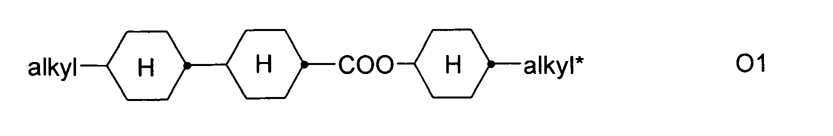 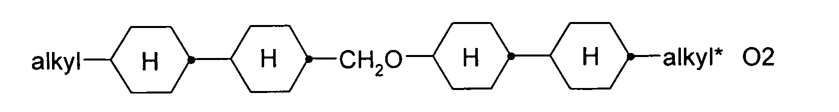 in which
alkyl and alkyl* each, independently of one another, denote a straight-chain alkyl group having 1-7 carbon atoms.

11. Liquid-crystalline medium according to one or more of Claims 1 to 10, **characterised in that** the proportion of compounds of the formula I in the mixture as a whole is 0.5 to 30% by weight.

12. Process for the preparation of a liquid-crystalline medium according to one or more of Claims 1 to 11, **characterised in that** one or more compounds of the formula I are mixed with one or more of the compounds of the formulae IA and/or IB and optionally with further mesogenic compounds.

13. Use of the liquid-crystalline medium according to one or more of Claims 1 to 11 for electro-optical purposes.

14. Electro-optical liquid-crystal display containing a liquid-crystalline medium according to one or more of Claims 1 to 11.

## Revendications

1. Milieu cristallin liquide basé sur un mélange de composés polaires, **caractérisé en ce qu'**il comprend un ou plusieurs composés de la formule I 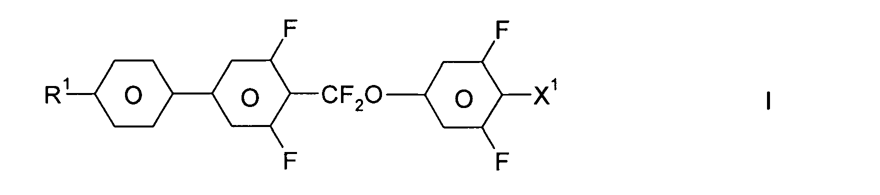 et au moins un composé choisi parmi le groupe des composés des formules IA et IB 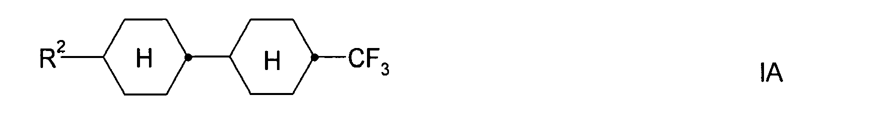 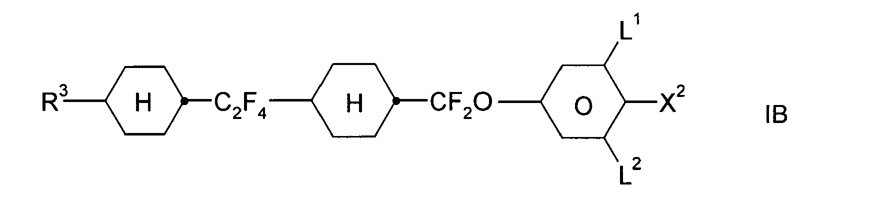 dans lesquelles
R¹, R² et R³ chacun, indépendamment de l'autre, représentent un radical alkyle ou alcoxy halogéné ou non substitué ayant 1 à 15 atomes de C, où, en addition, un ou plusieurs groupes CH₂ dans ces radicaux peuvent chacun être remplacés, indépendamment de l'autre, par -C≡C-, -CH=CH-, -O-, -CO-O- ou -O-CO- de telle sorte que des atomes de O ne soient pas liés direc- tement l'un à l'autre,
X¹ and X² chacun, indépendamment de l'autre, représentent F, CI, CN, SF₅, un radical alkyle halogéné, un radical alkényle halogéné, un radical alcoxy halogéné ou un radical alkényloxy halogéné ayant 6 atomes de C,
L¹ et L² chacun, indépendamment de l'autre, représentent H ou F.

2. Milieu cristallin liquide selon la revendication 1, **caractérisé en ce que** R¹ dans le composé de la formule I représente alkyle en chaîne droite.

3. Milieu cristallin liquide selon la revendication 1 ou 2, **caractérisé en ce qu'**il comprend un, deux composés ou plus des formules I-1 à I-12, 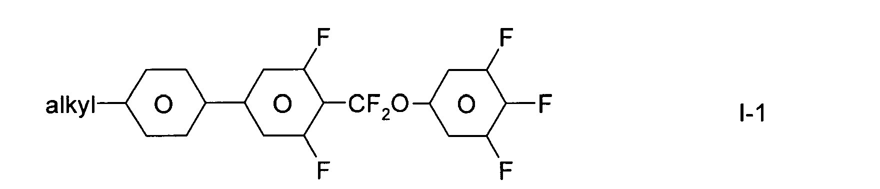 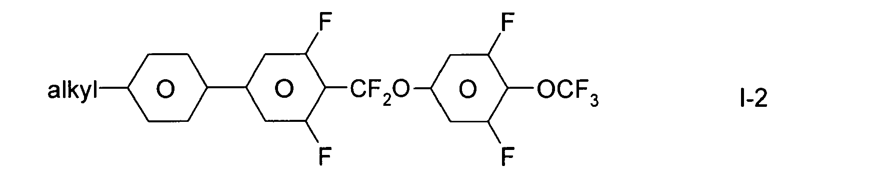 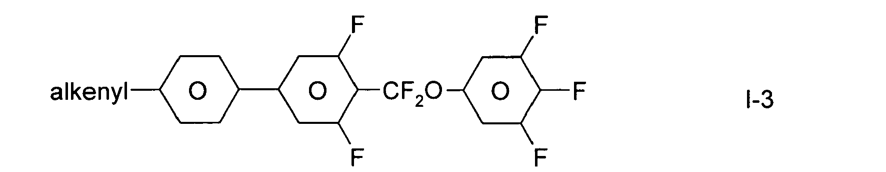 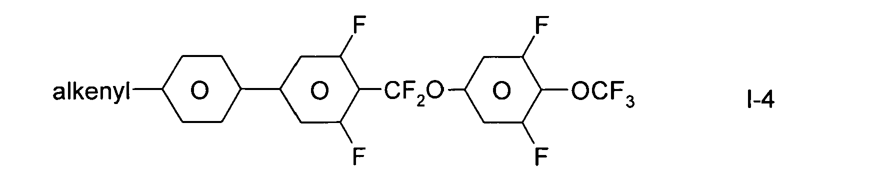 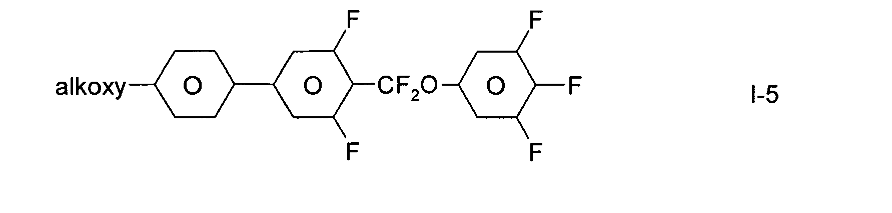 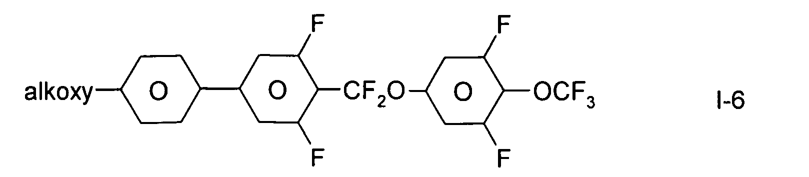 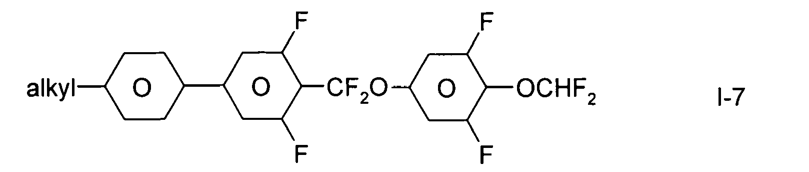 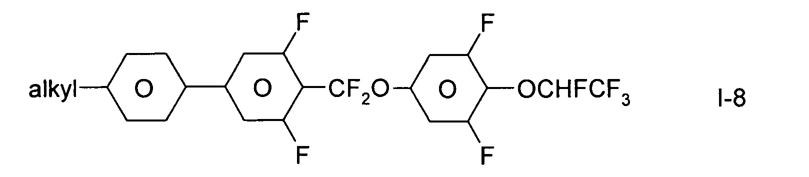 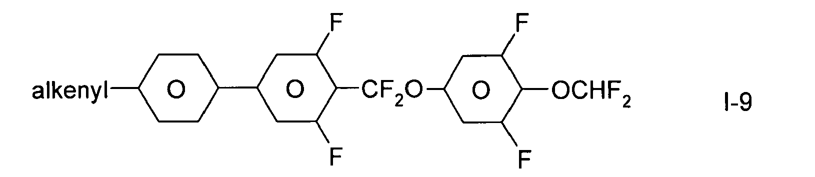 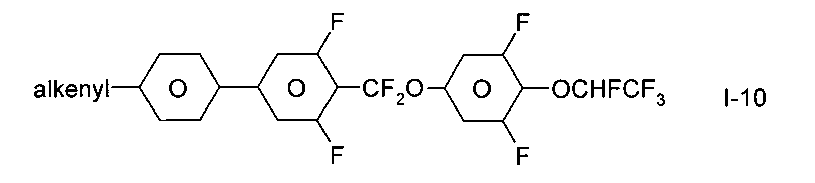 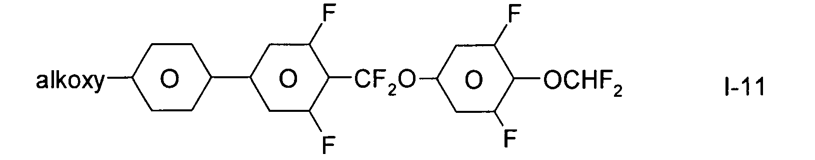 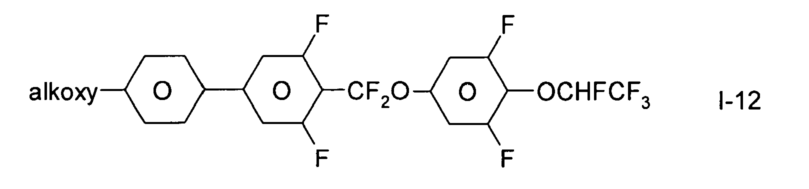 dans lesquelles
alkyl est un radical alkyle en chaîne droite ayant 1-7 atomes de C,
alkoxy est un radical alcoxy en chaîne droite ayant 1-7 atomes de C,
alkenyl est un radical alkényle en chaîne droite ayant 2-7 atomes de C.

4. Milieu cristallin liquide selon une ou plusieurs des revendications 1 à 3, **caractérisé en ce qu'**il comprend un, deux composés bicycliques ou plus des formules Z-1 à Z-10, 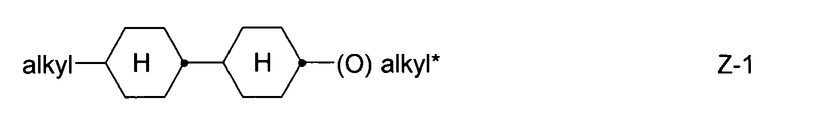 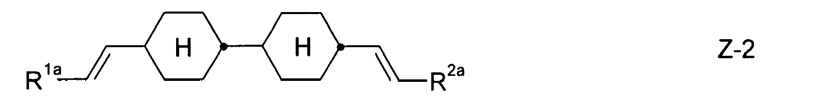 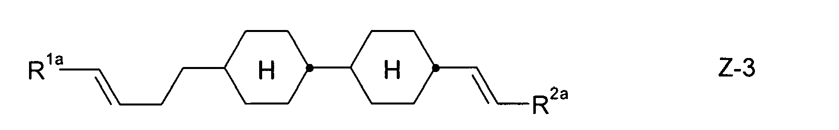 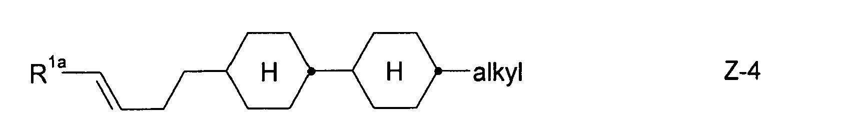 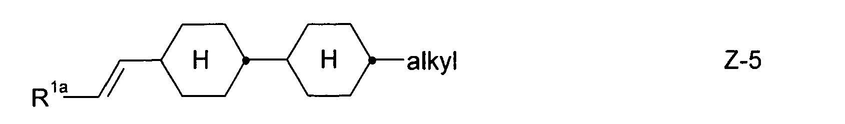 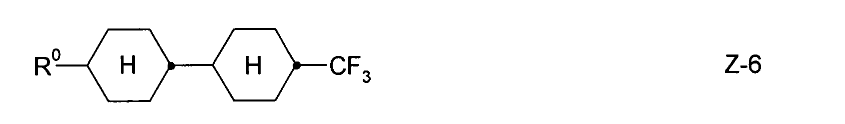 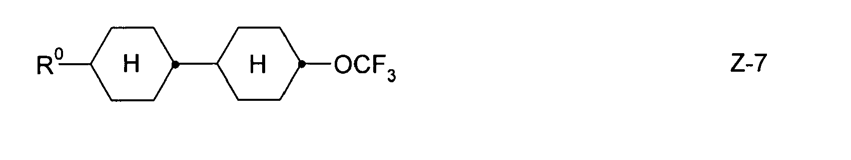 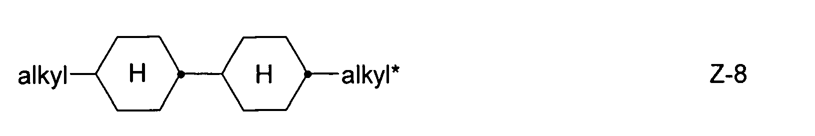 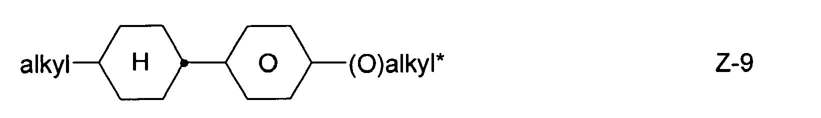 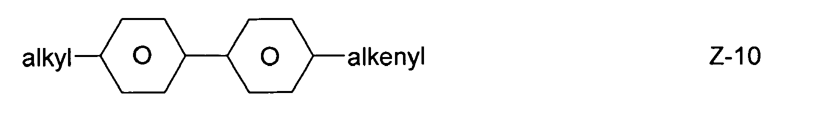 dans lesquelles
R^{1a} et R^{2a} chacun, indépendamment de l'autre, représentent H, CH₃, C₂H₅ ou n-C₃H₇,
alkyl et alkyl* chacun, indépendamment de l'autre, représentent un radical alkyle en chaîne droite ayant 1-7 atomes de C, et
alkenyl représente un radical alkényle en chaîne droite ayant 2-7 atomes de C.

5. Milieu cristallin liquide selon une ou plusieurs des revendications 1 à 4, **caractérisé en ce qu'**il comprend un ou plusieurs composés des formules Q-1 à Q-9, 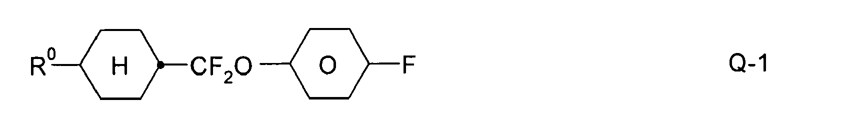 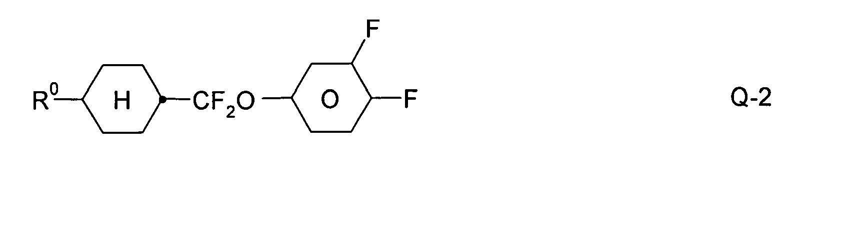 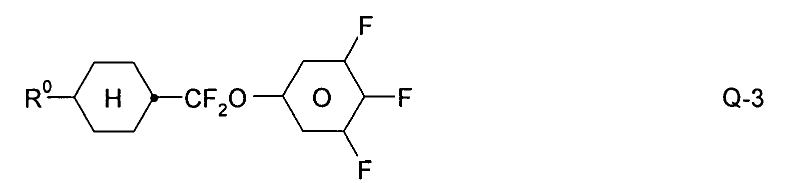 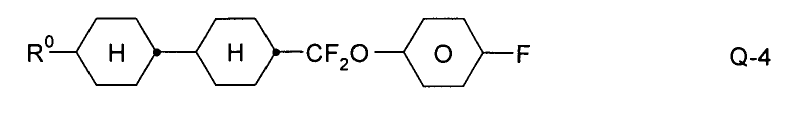 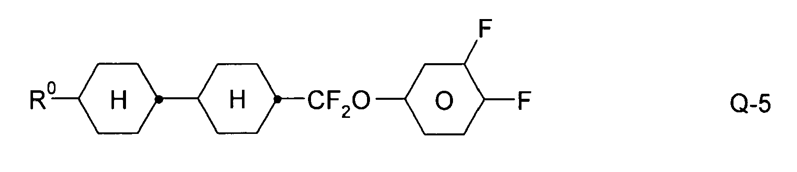 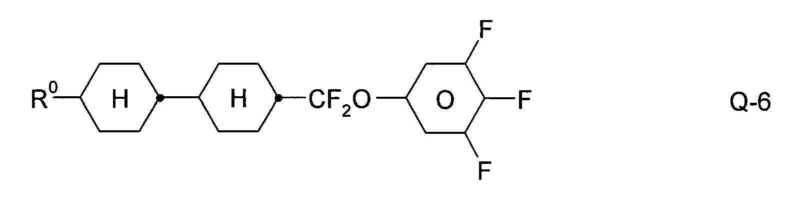 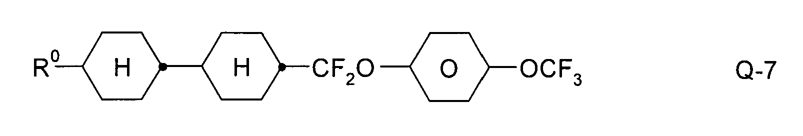 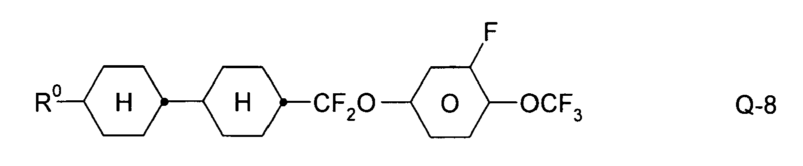 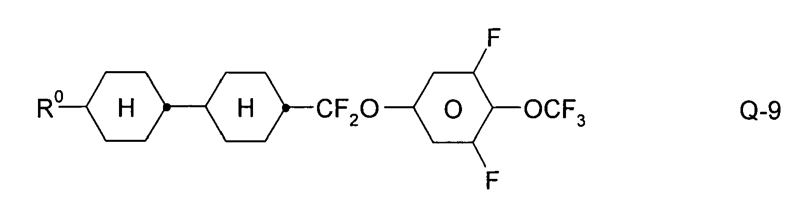 dans lesquelles
R⁰ représente n-alkyle, oxaalkyle, alcoxy, alkényloxy, fluoroalkyle ou alkényle, chacun ayant jusqu'à 9 atomes de C.

6. Milieu cristallin liquide selon une ou plusieurs des revendications 1 à 5, **caractérisé en ce qu'**il comprend additionnellement un ou plusieurs composés choisis parmi le groupe constitué des formules générales II, III, IV, V et VI, 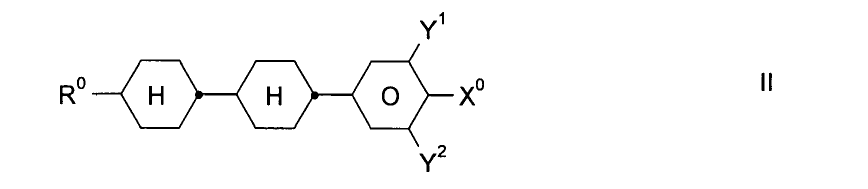 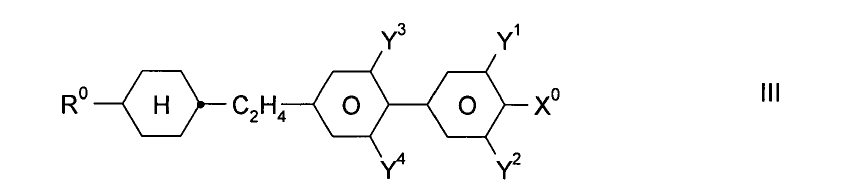 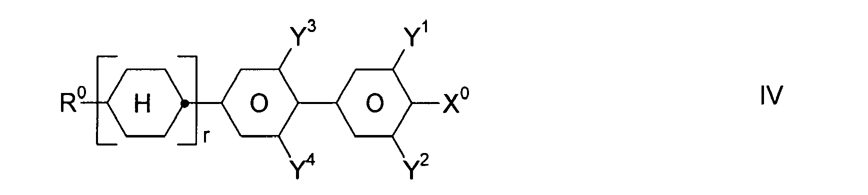 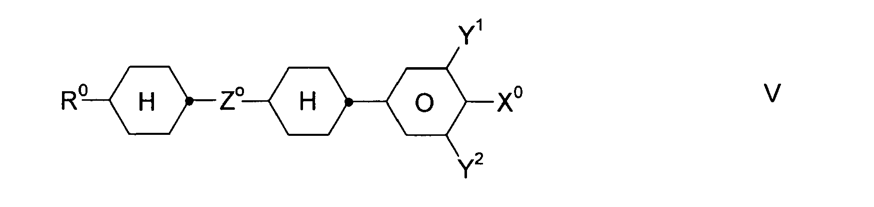 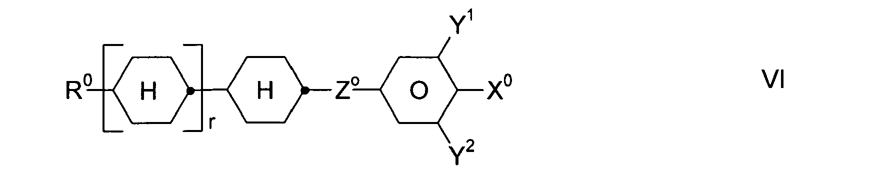 dans lesquelles les radicaux individuels ont les significations suivantes:
R⁰ n-alkyle, oxaalkyle, alcoxy, alkényloxy, fluoroalkyle ou alkényle, chacun ayant jusqu'à 9 atomes de C,
X⁰ représente F, CI, alkyle halogéné, alkényle halogéné, alkényloxy halogéné ou alcoxy halogéné ayant jusqu'à 6 atomes de C,
Z⁰ représente -C₂F₄-, -CF=CF-, -C₂H₄-, -(CH₂)₄-, -OCH₂-, -CH₂O-, -CF₂O- ou -OCF₂-,
Y¹ to Y⁴ chacun, indépendamment de l'autre, représentent H ou F,
r représente 0 ou 1.

7. Milieu cristallin liquide selon la revendication 6, **caractérisé en ce que** la proportion de composés des formules I à VI ensemble dans le mélange dans sa totalité est d'au moins 50% en poids.

8. Milieu cristallin liquide selon une ou plusieurs des revendications 1 à 7, **caractérisé en ce qu'**il comprend additionnellement un ou plusieurs composés des formules K-1 à K-27, 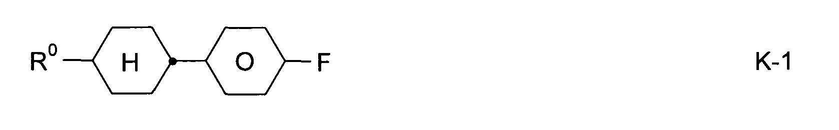 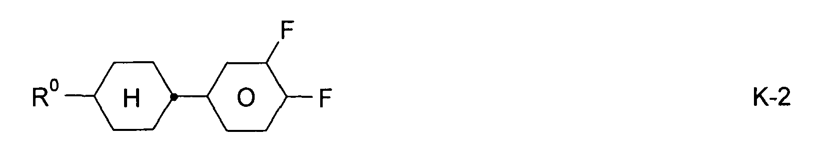 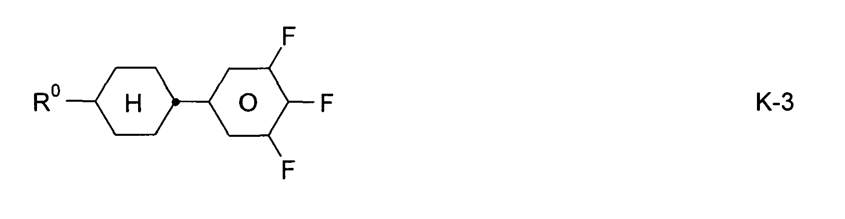 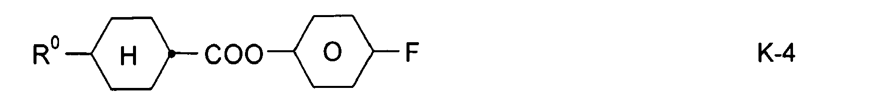 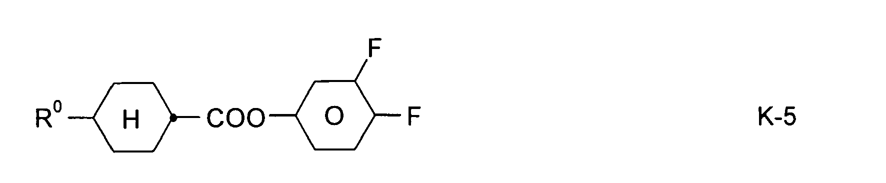 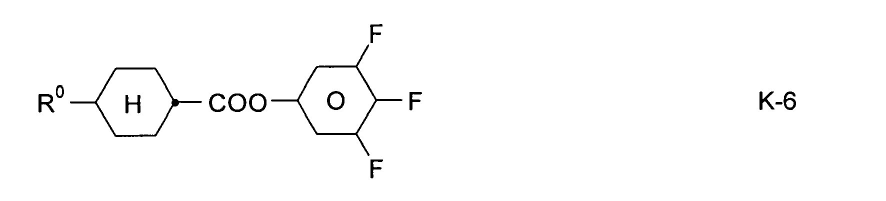 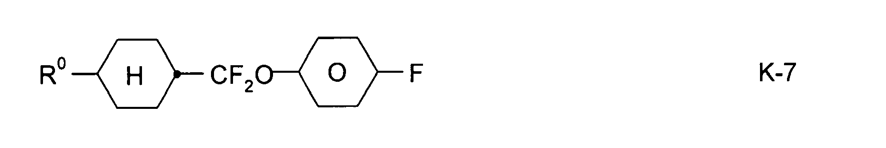 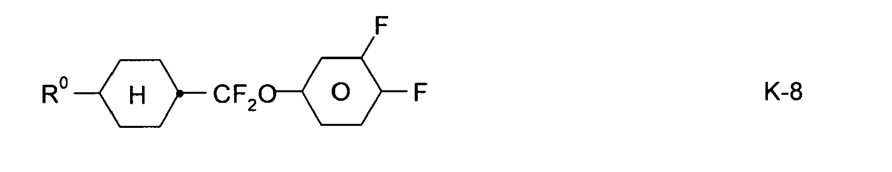 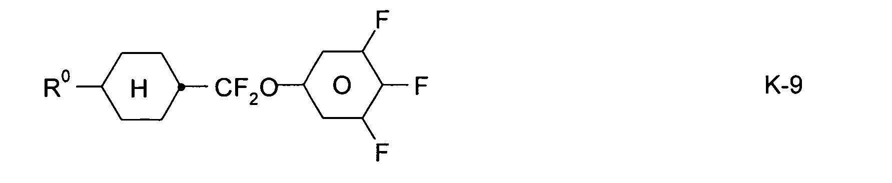 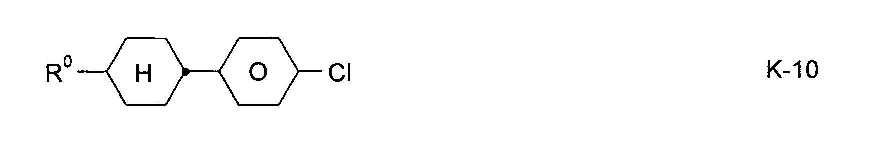 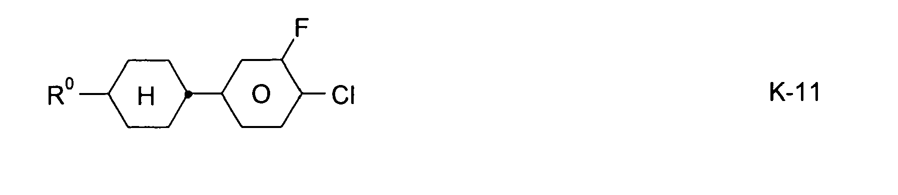 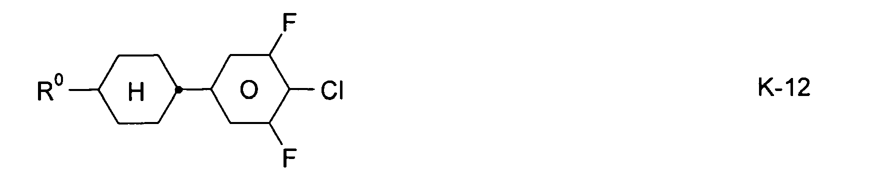 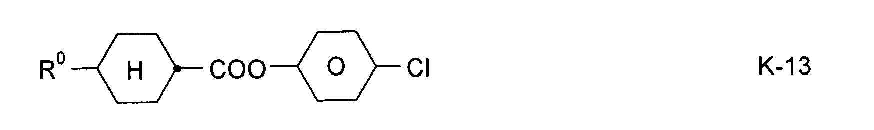 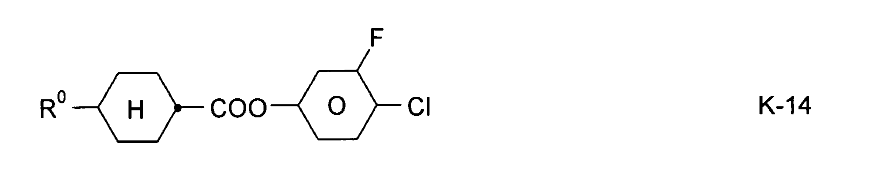 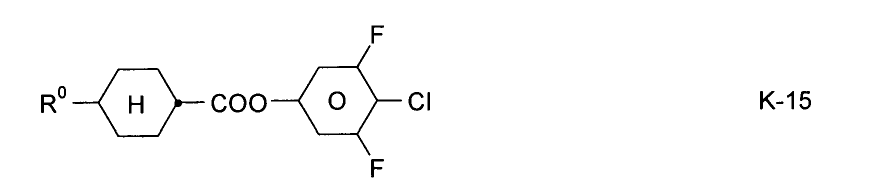 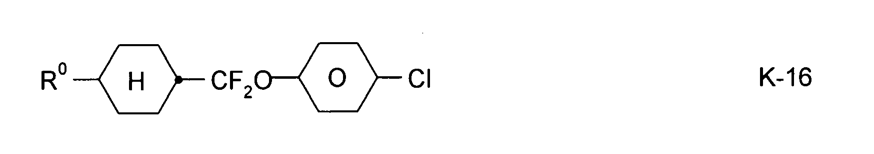 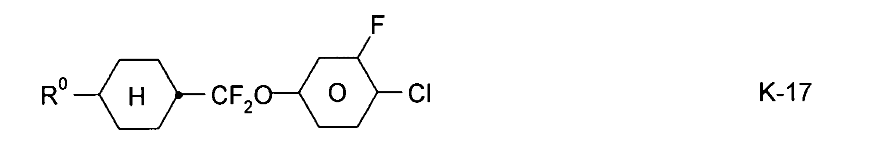 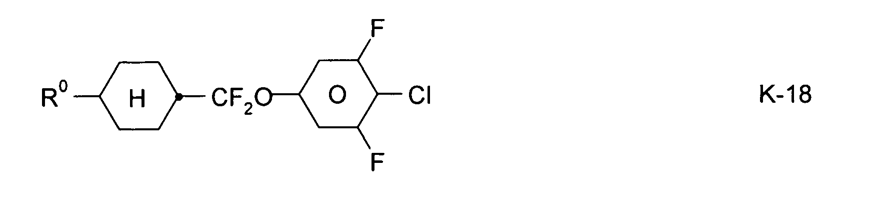 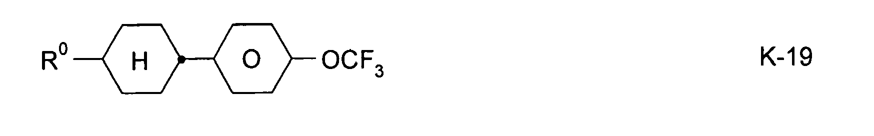 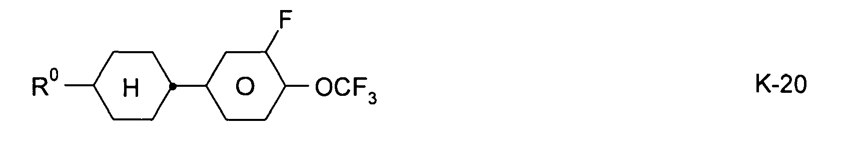 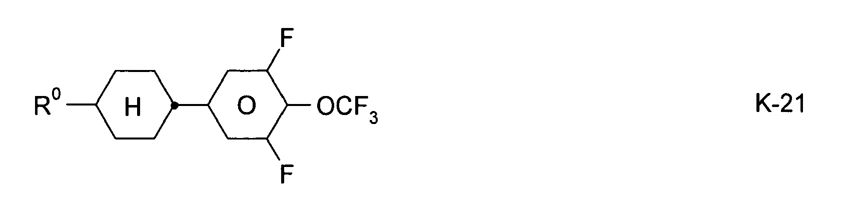 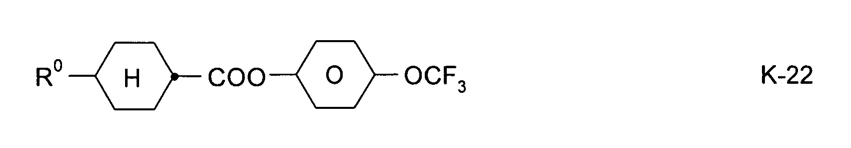 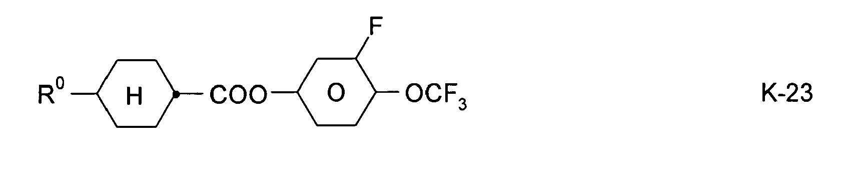 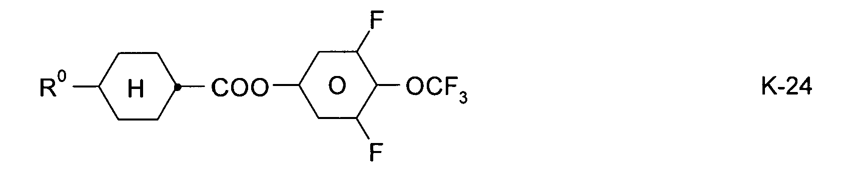 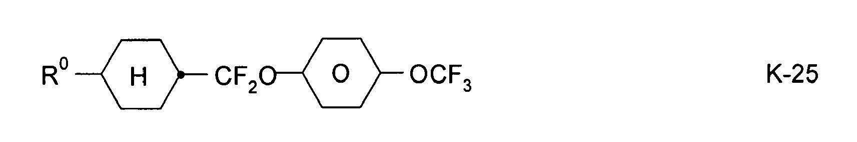 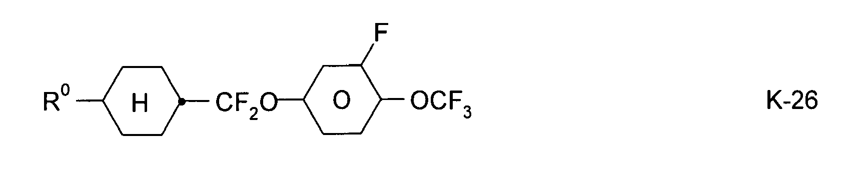 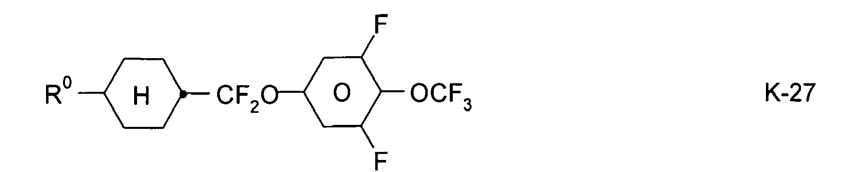 dans lesquelles R⁰ a les significations indiquées dans la revendication 6.

9. Milieu cristallin liquide selon une ou plusieurs des revendications 1 à 8, **caractérisé en ce qu'**il comprend un ou plusieurs composés des formules IIa à IIg, 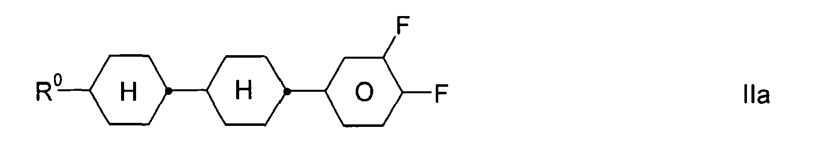 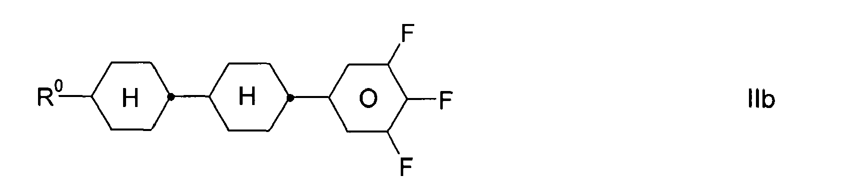 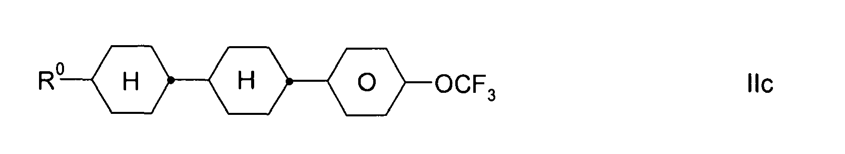 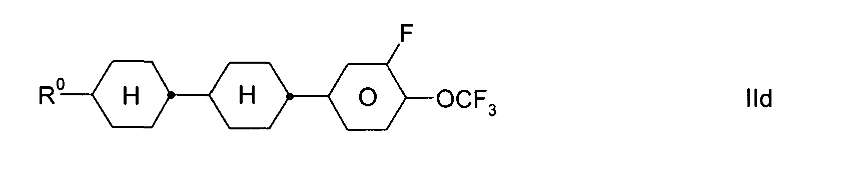 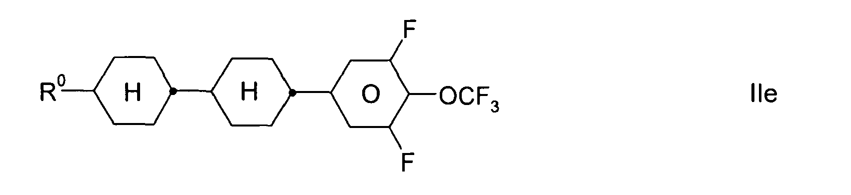 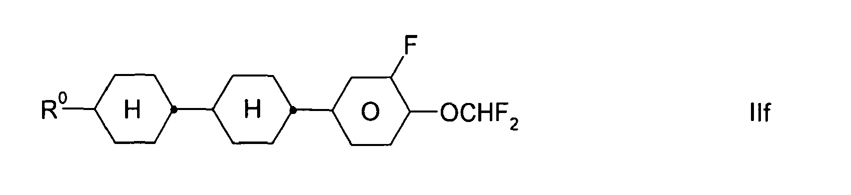 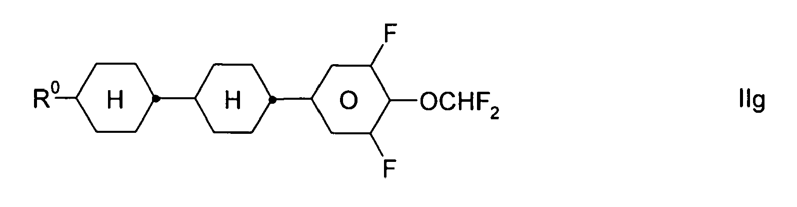 dans lesquelles R⁰ a les significations indiquées dans la revendication 6.

10. Milieu cristallin liquide selon une ou plusieurs des revendications 1 à 9, **caractérisé en ce qu'**il comprend un ou plusieurs composés des formules O1 et 02, 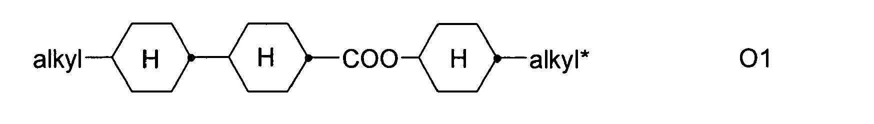 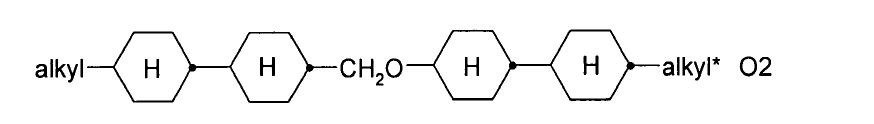 dans lesquelles
alkyl et alkyl* chacun, indépendamment de l'autre, représentent un groupe alkyle en chaîne droite ayant 1-7 atomes de carbone.

11. Milieu cristallin liquide selon une ou plusieurs des revendications 1 à 10, **caractérisé en ce que** la proportion de composés de la formule I dans le mélange dans sa totalité est 0,5 à 30% en poids.

12. Procédé pour la préparation d'un milieu cristallin liquide selon une ou plusieurs des revendications 1 à 11, **caractérisé en ce qu'**un ou plusieurs composés de la formule I son mélangés avec un ou plusieurs des composés des formules IA et/ou IB et en option avec d'autres composés mésogènes.

13. Utilisation du milieu cristallin liquide selon une ou plusieurs des revendications 1 à 11 pour des buts électro-optiques.

14. Affichage à cristaux liquides électro-optique contenant un milieu cristallin liquide selon une ou plusieurs des revendications 1 à 11.
